(19) Europäisches Patentamt
European Patent Office
Office européen des brevets

(11) Veröffentlichungsnummer: **0 374 911**
**A1**

# (12) EUROPÄISCHE PATENTANMELDUNG

(21) Anmeldenummer: **89123639.0**

(22) Anmeldetag: **21.12.89**

(51) Int. Cl.5: **C09B 62/503, C09B 62/04, D06P 1/38**

Patentansprüche für folgenden Vertragsstaat: ES.

(30) Priorität: **23.12.88 DE 3843605**

(43) Veröffentlichungstag der Anmeldung:
**27.06.90 Patentblatt 90/26**

(84) Benannte Vertragsstaaten:
**BE CH DE ES FR GB IT LI**

(71) Anmelder: **HOECHST AKTIENGESELLSCHAFT**
**Postfach 80 03 20**
**D-6230 Frankfurt am Main 80(DE)**

(72) Erfinder: **Springer, Hartmut, Dr.**
**Am Erdbeerstein 27**
**D-6240 Königstein/Taunus(DE)**
Erfinder: **Scheidhauer, Patrick, Dr.**
**Pfaffenweg 12d**
**D-6370 Oberursel(DE)**
Erfinder: **Reichert, Karl-Michael, Dr.**
**Zeil 16**
**D-6238 Hofheim am Taunus(DE)**
Erfinder: **Schwaiger, Günther, Dr.**
**Johannesallee 41**
**D-6230 Frankfurt am Main 80(DE)**
Erfinder: **Hussong, Kurt, Dr.**
**Am Flachsland 56**
**D-6233 Kelkheim (Taunus)(DE)**

(54) **Wasserlösliche faserreaktive Farbstoffe, Verfahren zu ihrer Herstellung und ihre Verwendung.**

(57) Wasserlösliche faserreaktive Farbstoffe, die ein- oder mehrmals die Gruppe der allgemeinen Formel (1)

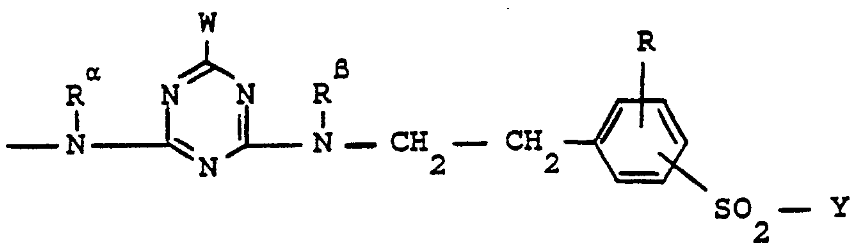

(1)

enthalten, worin bedeuten:
$R^{\alpha}$ und $R^{\beta}$ sind beide Wasserstoff oder niederes Alkyl;
R ist Wasserstoff oder Sulfo;
Y ist Vinyl oder eine Ethylgruppe, die in ß-Stellung durch einen alkalisch eliminierbaren Substituenten substituiert ist;
W ist die Hydroxygruppe oder die N-Morpholino-, die N-Piperidinyl- oder die N-Pyrrolidinyl-Gruppe oder eine Gruppe der allgemeinen Formel (2)

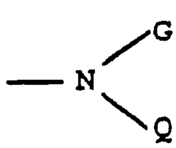

(2)

EP 0 374 911 A1

in welcher
G ein Wasserstoffatom oder eine Alkylgruppe von 1 bis 6 C-Atomen ist und
Q eine Gruppe der allgemeinen Formel (2a), (2b), (2c), oder (2d)

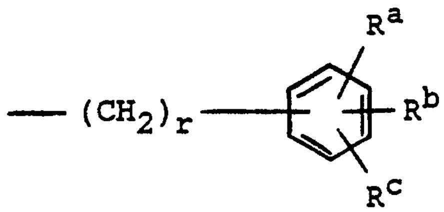

(2a)

$-(CH_2)_t-R^a$ (2b)
$-(CH_2)_t-O-(CH_2)_w-R^a$ (2c)
$-(CH_2)_t-R^2$ (2d)
ist, in welchen
$R^a$ eine Gruppe der allgemeinen Formel $-SO_2-Y$ mit Y einer der oben genannten Bedeutungen ist oder eine Sulfogruppe bedeutet,
$R^b$ ein Wasserstoffatom, eine Alkoxygruppe von 1 bis 4 C-Atomen, eine Sulfo-, Hydroxy- oder Carboxygruppe oder ein Chloratom ist,
$R^c$ ein Wasserstoffatom, eine Alkylgruppe von 1 bis 4 C-Atomen oder eine Alkoxygruppe von 1 bis 4 C-Atomen ist,
t eine Zahl von 1 bis 6 ist und
w eine Zahl von 1 bis 6 ist, oder
W ist ein Rest der allgemeinen Formel (2e)
$-A-(CH_2)_r-R^a$ (2e)
in welcher
$R^a$ die obengenannte Bedeutung hat,
r die Zahl Null, 1 oder 2 ist, und
A ein Rest der allgemeinen Formel

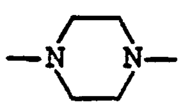 oder 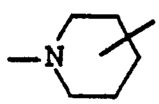 oder 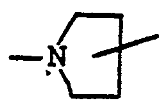 ist.

## Wasserlösliche faserreaktive Farbstoffe, Verfahren zu ihrer Herstellung und ihre Verwendung

Die Erfindung liegt auf dem technischen Gebiet der faserreaktiven Farbstoffe.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen Reaktivfarbstoffen, die verbesserte Eigenschaften, nicht nur in Bezug auf die Echtheiten, sondern auch einen hohen Fixiergrad auf dem zu färbenden Material aufweisen. So sind aus der europäischen Patentschrift Nr. 0 076 782 B1 faserreaktive Farbstoffe bekannt, die einen Triazinrest enthalten, an den zwei faserreaktive Reste aus der Vinylsulfon-Reihe jeweils über eine Ethylenamino-Gruppe gebunden sind. Gleichwohl lag der vorliegenden Erfindung die Aufgabe zugrunde, neue, diesbezüglich verbesserte Reaktivfarbstoffe zu finden, die insbesondere Baumwolle in allen Farbtönen zu färben vermögen und eine gute Eignung in Ausziehverfahren, in Klotz-Kaltverweil-Verfahren und im Druck und des weiteren eine sehr gute Ätzbarkeit aufweisen.

Mit der vorliegenden Erfindung wurde diese Aufgabe durch Auffindung von wasserlöslichen Farbstoffen gelöst, die eine nachstehend als Rest Z bezeichnete Gruppe entsprechend der allgemeinen Formel (1)

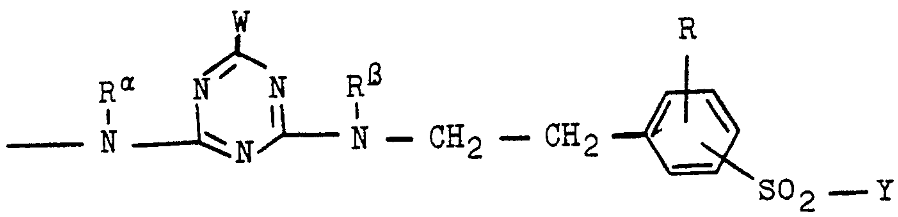

(1)

ein- oder mehrmals, wie zwei- oder dreimal, enthalten.

In dieser Formel bedeuten:

$R^{\alpha}$ ist ein Wasserstoffatom oder eine Alkylgruppe von 1 bis 4 C-Atomen, wie die Ethyl-, n-Propyl- oder n-Butylgruppe oder insbesondere die Methylgruppe, bevorzugt ein Wasserstoffatom;

$R^{\beta}$ ist ein Wasserstoffatom oder eine Alkylgruppe con 1 bis 4 C-Atomen, wie die Ethyl-, n-Propyl- oder n-Butylgruppe oder insbesondere die Methylgruppe, bevorzugt ein Wasserstoffatom;

R ist ein Wasserstoffatom oder eine Sulfogruppe, bevorzugt ein Wasserstoffatom;

Y ist die Vinylgruppe oder eine Gruppe der allgemeinen Formel $-CH_2-CH_2-X$ , in welcher X für einen Substituenten steht, der als Anion, insbesondere mittels eines Alkalis, unter Bildung der Vinylgruppe eliminierbar ist;

die Gruppe $-SO_2-Y$ steht bevorzugt in meta- oder para-Stellung zur Ethylengruppe;

W ist die Hydroxygruppe oder die N-Morpholino-, die N-Piperidinyl- oder die N-Pyrrolidinyl-Gruppe oder eine Gruppe der allgemeinen Formel (2)

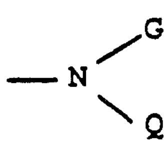

(2)

in welcher

G ein Wasserstoffatom oder eine Alkylgruppe von 1 bis 6 C-Atomen, bevorzugt von 1 bis 4 C-Atomen, ist, wie die Ethyl-, n-Propyl- oder n-Butylgruppe oder insbesondere die Methylgruppe, bevorzugt ein Wasserstoffatom, und

Q eine Gruppe der allgemeinen Formel (2a), (2b), (2c) oder (2d)

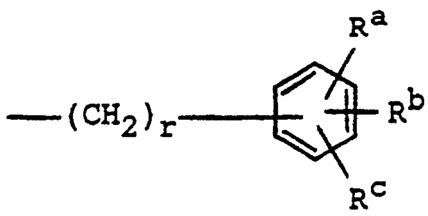

(2a)

$-(CH_2)_t-R^a$ (2b)

$-(CH_2)_t-O-(CH_2)_w-R^a$ (2c)

$-(CH_2)_t-R^2$ (2d)

ist, in welchen

$R^a$ eine Gruppe der allgemeinen Formel $-SO_2-Y$ mit Y einer der oben genannten Bedeutungen ist oder eine Sulfogruppe bedeutet,

$R^b$ ein Wasserstoffatom, eine Alkoxygruppe von 1 bis 4 C-Atomen, wie die Ethoxy- und insbesondere Methoxygruppe, eine Sulfo-, Hydroxy- oder Carboxygruppe oder ein Chloratom ist,

$R^c$ ein Wasserstoffatom oder eine Alkylgruppe von 1 bis 4 C-Atomen, wie die Ethyl- und insbesondere Methylgruppe, oder eine Alkoxygruppe von 1 bis 4 C-Atomen, wie die Ethoxy- oder insbesondere Methoxygruppe, ist,

t eine Zahl von 2 bis 6, bevorzugt 2 oder 3, ist und

w eine Zahl von 1 bis 6, bevorzugt 2 oder 3, ist, oder

W ist ein Rest der Formel (2e)

$-A-(CH_2)_r-R^a$ (2e)

in welcher

$R^a$ die obige Bedeutung hat,

r die Zahl Null, 1 oder 2, bevorzugt 2, ist und

A ein Rest der allgemeinen Formel

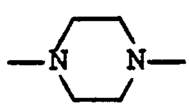 oder 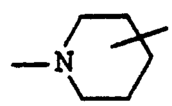 oder 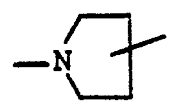 ist.

Bevorzugt ist W ein Rest der allgemeinen Formel (2f)

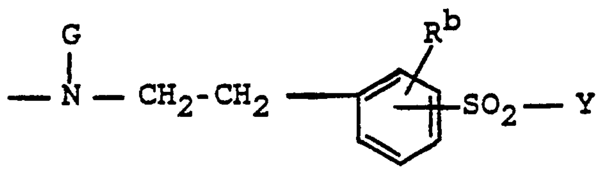

(2f)

mit G, $R^b$ und Y der obengenannten oder nachstehend genannten, insbesondere bevorzugten, Bedeutungen.

Erfindungsgemäße Farbstoffe mit einer oder mehreren der Gruppierung der Formel (1) sind bevorzugt solche der allgemeinen Formel (3)

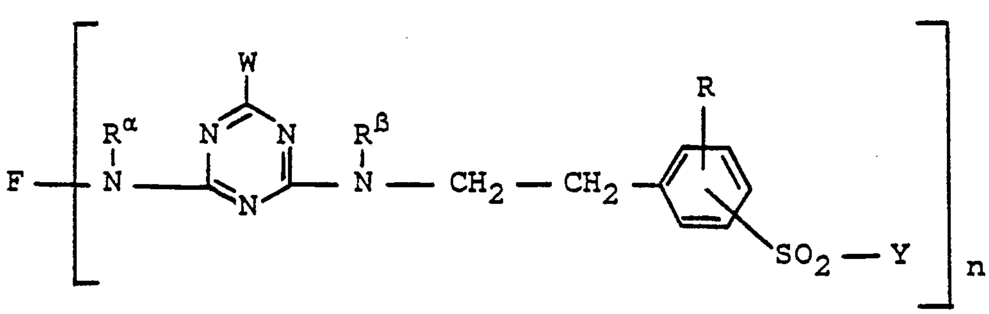

(3)

worin bedeuten:

F ist der Rest eines sulfo- und/oder carboxygruppenhaltigen Farbstoffes, der ein Schwermetallion, wie beispielsweise ein Kupfer-, Nickel-, Kobalt- oder Chromion, komplex gebunden enthalten kann, wie beispielsweise der Rest eines Farbstoffes aus der Phthalocyanin-, Anthrachinon-, Formazan- oder Azoreihe, bevorzugt jedoch eines sulfogruppenhaltigen Farbstoffes aus der Azoreihe, insbesondere der Rest eines sulfogruppenhaltigen Monoazo- oder Disazofarbstoffes;

n ist die Zahl 1 oder 2, bevorzugt 1;

R, $R^{\alpha}$, $R^{\beta}$, W und Y haben eine der für Formel (1) angegebenen Bedeutungen.

Bevorzugt sind Farbstoffe der allgemeinen Formel (3), die insgesamt 1 bis 6 Sulfogruppen besitzen. Die Farbstoffreste F können ferner weitere übliche faserreaktive Gruppen enthalten.

Wasserlösliche Farbstoffe, wie solche mit dem Rest F, die den erfindungsgemäßen Farbstoffen zugrunde liegen und Aminogruppe $-NHR^{\alpha}$ enthalten, sind in der Literatur zahlreich beschrieben, so beispielsweise in der anfangs genannten europäischen Patentschrift Nr. 0 076 782 und in den europäischen Patentanmeldungs-Veröffentlichungen Nrs. 0 070 806A, 070 808A, 0 212 264A, 0 076 782A und 0 144 766 und desweiteren in Venkataraman, The Chemistry of Synthetic Dyes, New York, London, 1972, Band VI, Seiten 213-297. Besonders wertvolle Farbstoffe dieser Reihe sind wasserlösliche schwermetallfreie Azofarbstoffe, insbesondere solche, die Sulfo- und/oder Carboxygruppen, bevorzugt Sulfogruppen enthalten, insbesondere sulfogruppenhaltige Mono- und Disazofarbstoffe, und Metallkomplexfarbstoffe, wie sulfogruppenhaltige 1:1-Kupferkomplex-Monoazo- und -Disazofarbstoffe.

Als Anion eliminierbare Substituenten X können beispielsweise folgende genannt werden: Chlor, Sulfato, Thiosulfato, Phosphato, Alkylsulfonyloxy von 1 bis 4 C-Atomen, wie Methylsulfonyloxy, Alkanoyloxy von 2 bis 5 C-Atomen, wie Acetyloxy, und Sulfobenzoyloxy; hiervon sind bevorzugt die Sulfato- und die Phosphatogruppe, insbesondere die Sulfatogruppe.

Wichtige Azofarbstoffe entsprechend der allgemeinen Formel (3) sind solche, in denen F einen Rest eines Farbstoffes der Benzol-azo-naphthol-, der Benzol-azo-1-phenyl-5-pyrazolon-, der Benzol-azo-benzol-, der Naphthalin-azo-benzol-, der Benzol-azo-aminonaphthalin-, der Naphthalin-azo-naphthalin-, der Naphthalin-azo-1-phenyl-5-pyrazolon-, der Benzol-azo-pyridon- und der Naphthalin-azo-pyridon-Reihe bedeutet, wobei auch hier die sulfogruppenhaltigen Farbstoffe bevorzugt sind. Solche Azofarbstoffe der allgemeinen Formel (3) sind beispielsweise Farbstoffe der allgemeinen Formeln (4a), (4b) und (4c)

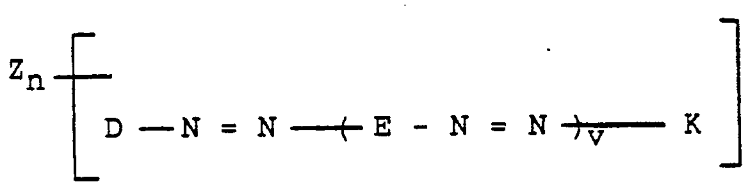

(4a)

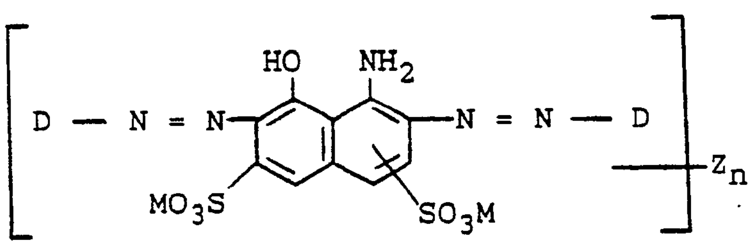

(4b)

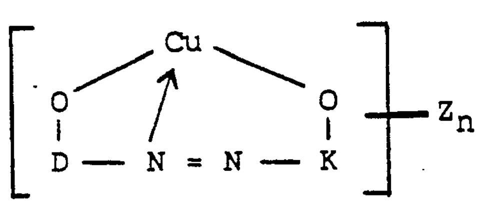

(4c)

in welchen

D jeweils für den Rest einer Diazokomponente steht, die zueinander gleiche oder voneinander verschiedene Bedeutungen besitzen können,

E der bivalente Rest einer kupplungsfähigen und diazotierbaren Verbindung ist,

K den Rest einer Kupplungskomponente bedeutet,

v für die Zahl Null oder 1 steht,
Z einen Rest der allgemeinen Formel (1) bedeutet,
n die Zahl 1 oder 2, bevorzugt 1, ist,
der Rest Z an den Rest D oder den Rest K oder im Falle von n = 2 jeweils an D und K bzw. an beide D gebunden ist und
M ein Wasserstoffatom oder ein Alkalimetall, wie Natrium, Kalium oder Lithium,ist.

Aromatische Reste der Diazokomponenten $D-NH_2$ der Anilin-und Aminonaphthalinreihe, die keine faserreaktive Gruppe Z tragen, sind beispielsweise Amine der allgemeinen Formeln (5a) und (5b)

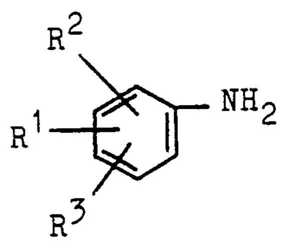 (5a) 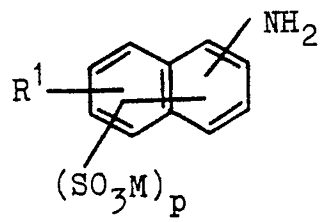 (5b)

in welchen
$R^1$ ein Wasserstoffatom, eine Sulfogruppe oder eine Gruppe der allgemeinen Formel $-SO_2-Y$ mit Y der obengenannten Bedeutung ist,
$R^2$ Wasserstoff, Methyl, Ethyl, Methoxy, Ethoxy, Alkanoyl von 2 bis 5 C-Atomen, wie Acetyl und Propionyl, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyan, Carboxy, Sulfo, Alkanoylamino von 2 bis 5 C-Atomen, wie Acetylamino, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
p die Zahl Null, 1 oder 2 bedeutet (wobei diese Gruppe im Falle von p gleich Null ein Wasserstoffatom bedeutet) und
M die obengenannte Bedeutung hat,
wobei der Benzol- bzw. Naphthalinkern in ortho-Stellung zur Gruppe $-NH_2$ durch eine Hydroxygruppe substituiert sein kann.

Bevorzugt ist hiervon $R^2$ gleich Wasserstoff, Methyl, Methoxy, Brom, Chlor, Carboxy und Sulfo sowie $R^3$ gleich Wasserstoff, Methyl, Methoxy, Chlor, Carboxy, Sulfo und Acetylamino.

Die Substituenten "Sulfo", "Carboxy", "Phosphato, "Thiosulfato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM , Phosphatogruppen Gruppen entsprechend der allgemeinen Formel $-OPO_3M_2$ , Thiosulfatogruppen Gruppen entsprechend der allgemeinen Formel $-S-SO_3M$ und Sulfatogruppen entsprechend Gruppen der allgemeinen Formel $-OSO_3M$ , jeweils mit M der obengenannten Bedeutung.

Aromatische Amine der allgemeinen Formel $D-NH_2$ entsprechend den Formeln (5a) und (5b) sind beispielsweise:
Anilin, 2-Methoxy-anilin, 2-Ethoxy-anilin, 2-Methyl-anilin, 4-Nitro-2-amino-anisol, 4-Chlor-2-amino-anisol, 4-Methyl-anilin, 4-Methoxy-anilin, 2-Nitro-4-amino-anisol, 2-Methoxy-5-methyl-anilin, 4-Nitro-anilin, 2-Nitro-4-methyl-anilin, 2,5-Dimethoxyanilin, 2,5-Dimethyl-anilin, 2,4-Dimethyl-anilin, 4-Butyl-anilin, 2,5-Diethoxy-anilin, 4-Cyano-anilin, 2-Chloranilin, 3-Chloranilin, 4-Choranilin, 4-Chlor-2-methyl-anilin, 3-Chlor-2-methyl-anilin, 4-Chlor-2-amino-toluol, 4-(p-Tolyl-sulfonyl)-anilin, 1-Naphthylamin, 2-Naphthylamin, 4-Benzoylamino-2-ethoxy-anilin, 3-Amino-4-methyl-benzonitril, 4-Methylsulfonyl-anilin, 2-Trifluormethyl-anilin, 3-Trifluormethyl-4-chloranilin, 2-Amino- oder 4-Aminobenzoesäure, 3-Amino-benzoesäure, 3-Chloranilin-6-carbonsäure, Anilin-2- oder -3- oder -4-sulfonsäure, 2,5-Disulfo-anilin, 2,4-Disulfo-anilin, 3,5-Disulfoanilin, 2-Aminotoluol-4-sulfonsäure, 2-Amino-anisol-4-sulfonsäure, 2-Amino-anisol-5-sulfonsäure, 4-Amino-anisol-2-sulfonsäure, 2-Ethoxy-anilin-5-sulfonsäure, 2-Ethoxy-anilin-4-sulfonsäure, 4-Sulfo-2-aminobenzoesäure, 2,5-Dimethoxy-anilin-4-sulfonsäure, 2,4-Dimethoxyanilin-5-sulfonsäure, 2-Methoxy-5-methyl-anilin-4-sulfonsäure, 4-Amino-anisol-3-sulfonsäure, 4-Amino-toluol-3-sulfonsäure, 2-Amino-toluol-5-sulfonsäure, 2-Chlor-anilin-4-sulfonsäure, 2-Chlor-anilin-5-sulfonsäure, 2-Brom-anilin-4-sulfonsäure, 2,6-Dichloranilin-4-sulfonsäure, 2,6-Dimethylanilin-3-sulfonsäure oder -4-sulfonsäure, 3-Acetylamino-6-sulfoanilin, 4-Acetyl-amino-2-sulfo-anilin, 1-Aminonaphthalin-4-sulfonsäure, 1-Aminonaphthalin-3-sulfonsäure, 1-Aminonaphthalin-5-sulfonsäure, 1-Aminonaphthalin-6-sulfonsäure, 1-Aminonaphthalin-7-sulfonsäure, 1-Aminonaphthalin-3,7-disulfonsäure, 1-Aminonaphthalin-3,6,8-trisulfonsäure, 1-Aminonaphthalin-4,6,8-trisulfonsäure, 2-Naphthylamin-5-sulfonsäure oder -6- oder -8-sulfonsäure, 2-Aminonaphthalin-3,6,8-trisulfonsäure, 2-Aminonaphthalin-6,8-disulfonsäure, 2-Aminonaphthalin-1,6-disulfonsäure, 2-Aminonaphthalin-1-sulfonsäure, 2-Aminonaphthalin-1,5-disulfonsäure, 2-Aminonaphthalin-3,6-disulfonsäure, 2-Aminonaphthalin-4,8-disulfonsäure, 4-(ß-Sulfatoethylsulfonyl)-anilin, 3-(ß-Sulfatoethylsulfonyl)-anilin, 2-Sulfo-5-(ß-sulfatoethylsulfonyl)-anilin, 2-Sulfo-4-(ß-sulfatoethylsulfonyl)-anilin, 2-Methoxy-4-(ß-sulfatoethylsulfonyl)-anilin, 2-Methoxy-5-methyl-4-(ß-sulfatoethylsulfonyl)-anilin, 2,5-Dimethoxy-4-(ß-sulfatoethylsulfonyl)-anilin, 2-Amino-5-(ß-sulfatoethylsulfonyl)-phenol, 2-Amino-4-(ß-sulfatoethylsulfonyl)-phenol, 2-Amino-6-(ß-sulfatoethylsulfonyl)-naphthalin-8-sulfonsäure, 2-Amino-8-(ß-sulfatoethylsulfonyl)-naphthalin-6-sulfonsäure, 2-Amino-5-(ß-sulfatoethylsulfonyl)-naphthalin-7-sulfonsäure, 2-Amino-7-(ß-sulfatoethylsulfonyl)-naphthalin-5-sulfonsäure, 2-Amino-6-(ß-sulfatoethylsulfonyl)-naphthalin-1-sulfonsäure, 1-Amino-6-(ß-sulfatoethylsulfonyl)-naphthalin und 1-Amino-7-(ß-sulfatoethylsulfonyl)-naphthalin.

Aromatische Amine der Diazokomponente Z-D-$NH_2$ der Anilin-und Naphthylamin-Reihe mit dem faserreaktiven Rest Z gehen von aromatischen Aminen der allgemeinen Formeln (6a) und (6b)

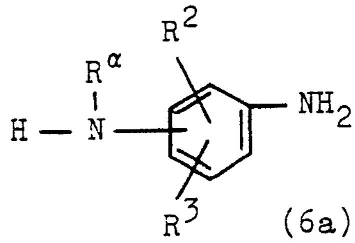
(6a)

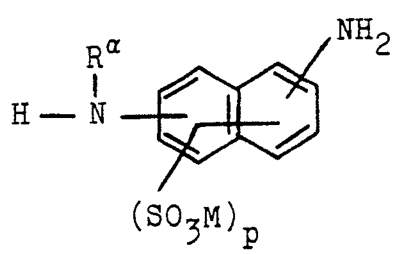
(6b)

aus, in welcher $R^{\alpha}$, p, $R^2$ und $R^3$ die oben angegebenen, insbesondere bevorzugten Bedeutungen haben, wobei auch hier der Benzol- bzw. Naphthalinkern in ortho-Stellung zur Gruppe -$NH_2$ durch eine Hydroxygruppe substituiert sein kann.

Amine der allgemeinen Formeln (6) sind beispielsweise:
1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, 1,4-Diamino-2-methoxybenzol, 1,3-Diamino-4-methyl-benzol, 1,5-Diamino-4-methylbenzol-2-sulfonsäure, 1,5-Diamino-4-methoxybenzol-2-sulfonsäure, 1,3-Diaminobenzol-5-sulfonsäure und 1,3-Diamino-5-methylbenzol, 1,5-Diamino-naphthalin, 8-Sulfo-1,3-diamino-naphthalin, 4,8-Disulfo-1,6-diamino-naphthalin.

Die als Diazokomponenten dienenden aromatischen Amine können auch andere faserreaktive Gruppen enthalten, die zahlreich in der Literatur beschrieben sind, wie beispielsweise neben der oben bereits erwähnten faserreaktiven Gruppe der Vinylsulfon-Reihe andere Reaktivgruppen der aliphatischen Reihe, wie beispielsweise die ß-Brom-acryloylamino-, α,ß-Dibrom-propionylamino-, ß-(Phenylsulfonyl)-propionylamino-, ß-(Methylsulfonyl)-propionylamino-, ß-Chlor-propionylamino-, 2,2,3,3-Tetrafluor-cyclobutan-1-carbonylamino-, N-(ß-Sulfatoethylsulfonyl)-N-methyl- oder -N-ethylamino- und die N-(Vinylsulfonyl)-N-methyl- oder -N-ethylamino-Gruppe, und desweiteren faserreaktive Gruppen aus der heterocyclischen Reihe, wie aus der Diazin-, Triazin-, Pyridin-, Pyrimidin-, Pyridazin-, Thiazin-, Oxazin-, Chinolin-, Phthalazin- und Phenanthridin-Reihe. Solche heterocyclischen Gruppen sind beispielsweise in der deutschen Offenlegungsschrift Nr. 3 503 746 auf den Seiten 9 bis 16 beschrieben, wobei diese Gruppen über eine Aminogruppe der oben definierten Formel -N($R^{\alpha}$)- an D gebunden sind. Heterocyclische faserreaktive Gruppen sind bevorzugt solche, die durch Halogen substituiert sind, wie beispielsweise 2,6-Difluor-5-chlor-pyrimidin-4-yl-amino-, 2-Fluor-5-chlor-pyrimidin-4-yl-amino-, 2-Fluor-5-chlor-6-methyl-pyrimidin-4-yl-amino-, 2-Fluor-5,6-dichlor-pyrimidin-4-yl-amino-, 6-Fluor-2,5-dichlor-pyrimidin-4-yl-amino- und insbesondere 2-Chlor- oder 2-Fluor-1,3,5-triazin-6-yl-amino-Gruppen mit dem Aminorest der oben definierten Formel -N($R^{\alpha}$)- , wobei dieser Triazinylrest in 4-Stellung durch eine niedere Alkoxygruppe oder eine Phenoxygruppe oder durch eine primäre, sekundäre oder tertiäre Aminogruppe substituiert sein kann, deren Substituenten aus den folgenden Gruppen ausgewählt sein können:
Alkyl von 1 bis 4 C-Atomen, wie Methyl und Ethyl, wobei die Alkylgruppe substituiert sein kann, wie beispielsweise durch Sulfo, Carboxy, Phosphato, Sulfato, Hydroxy, Cyano, eine Gruppe der oben definierten Formel -$SO_2$-Y , Phenyl, Naphthyl, durch Sulfo und/oder eine Gruppe der oben definierten Formel -$SO_2$-Y substituiertes Naphthyl, durch Substituenten aus der Gruppe Sulfo, Carboxy, Methyl, Ethyl, Methoxy, Ethoxy, Chlor, Brom und eine Gruppe der oben definierten Formel -$SO_2$-Y substituiertes Phenyl; ein

cycloaliphatischer Rest wie beispielsweise der Cyclohexylrest; ein bevorzugt durch 1 oder 2 Sulfogruppen und/oder eine Gruppe der oben definierten Formel $-SO_2-Y$ substituierter Naphthylrest; ein Phenylrest, der durch Substituenten aus der Gruppe Sulfo, Carboxy, Chlor, Brom, Methyl, Ethyl, Methoxy, Ethoxy und einer Gruppe der oben definierten Formel $-SO_2-Y$ substituiert sein kann.

Die in 4-Stellung des Chlor- oder Fluortriazinyl-Restes stehende Aminogruppe kann auch der Rest eines heterocyclischen Amins sein, wie eines 5- oder 6-gliedrigen, gegebenenfalls eine weitere Heterogruppe enthaltenden cyclischen Amins, wie beispielsweise der Piperidino-, Piperazino- oder Morpholino-Rest. Beispiele für Halogentriazinylamino-Reste sind die 2-Chlor- oder 2-Fluor-4-(2′,4′-disulfo-phenyl)-s-triazin-6-yl-, die 2-Chlor- oder 2-Fluor-4-(3′- oder 4′-sulfophenyl)-amino-s-triazin-6-yl-amino- und die 2-Chlor- oder 2-Fluor-4-(3′-oder 4′-sulfatoethylsulfonyl-phenyl)-amino-s-triazin-6-yl-amino-Gruppe.

Aromatische Reste E einer kupplungsfähigen und diazotierbaren Verbindung der Anilin- und Aminonaphthalinreihe leiten sich beispielsweise von Aminen der allgemeinen Formeln (7a) und (7b)

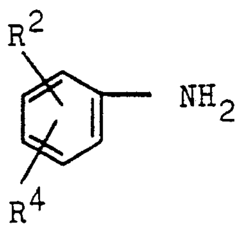
(7a)

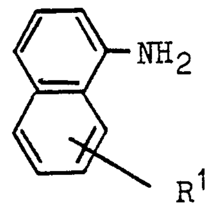
(7b)

ab, in welchen
$R^1$ und $R^2$ die oben angegebenen Bedeutungen haben und
$R^4$ ein Wasserstoffatom, eine Alkylgruppe von 1 bis 4 C-Atomen, wie die Methyl- oder Ethylgruppe, eine Alkoxygruppe von 1 bis 4 C-Atomen, wie die Methoxy- und Ethoxygruppe, ein Chloratom, eine Alkanoylaminogruppe von 2 bis 5 C-Atomen, wie die Acetylamino- und Propionylaminogruppe, die Benzoylaminogruppe, die Ureidogruppe, eine Phenylureidogruppe, eine Alkylureidogruppe mit 1 bis 4 C-Atomen im Alkylrest, eine Phenylsulfonylgruppe oder eine Alkylsulfonylgruppe von 1 bis 4 C-Atomen ist.

Solche Verbindungen sind beispielsweise:
Anilin, 3-Methylanilin, 3-Chloranilin, 2,5-Dimethylanilin, 2,5-Dimethoxyanilin, 3-Methoxyanilin, 3-Methyl-6-methoxy-anilin, 3-Aminophenylharnstoff, 3-Acetylamino-6-methyl-anilin, 2-Amino-4-acetylamino-benzol-1-sulfonsäure, 1-Aminonaphthalin, 1-Aminonaphthalin-6- oder -7- oder -8-sulfonsäure, 3-Acetylamino-anilin, 2-Methylanilin, 2-Methoxyanilin, 3-Benzoylamino-anilin, 2,3-Dimethylanilin, 3,5-Dimethylanilin, 1-Amino-2-methoxy-5-acetylamino-benzol, 2-Chlor-6-methyl-anilin, 5-Chlor-2-methyl-anilin, 2,6-Dichlor-3-methyl-anilin, 2-Methoxy-5-methyl-anilin, 1-Amino-6-(ß-sulfatoethylsulfonyl)-naphthalin und 1-Amino-7-(ß-sulfatoethylsulfonyl)-naphthalin.

Die Reste K der Kupplungskomponente entstammen vorzugsweise der Anilin-, Naphthalin-, Pyrazol- und Acylacetarylid-Reihe; sie können faserreaktive Gruppen besitzen.

Kupplungskomponenten der Formel H-K der Anilin- und Naphthalinreihe sind beispielsweise die Aniline, N-mono-und N,N-disubstituierte Aniline, m-Phenylendiamine und deren Derivate, Naphtholsulfonsäuren, Aminonaphthaline, Naphthole, Hydroxynaphthoesäurederivate, Aminonaphthalinsulfonsäuren oder Aminonaphtholsulfonsäuren.

Kupplungskomponenten der Formel H-K , die keine faserreaktive Gruppe der allgemeinen Formel (1) tragen, sind beispielsweise Verbindungen der allgemeinen Formeln (8a), (8b), (8c), (8d) und (8e)

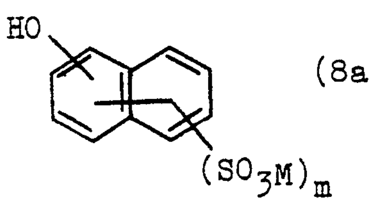
(8a)

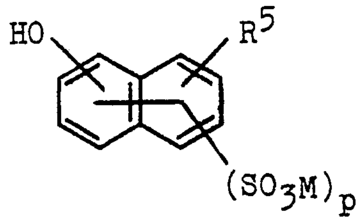
(8b)

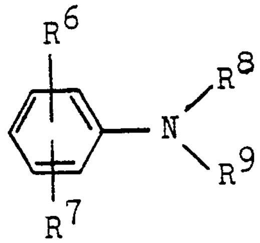

(8c)

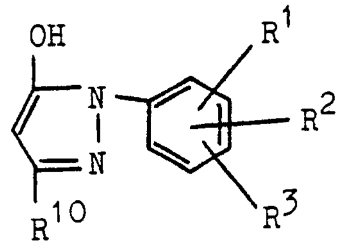

(8d)

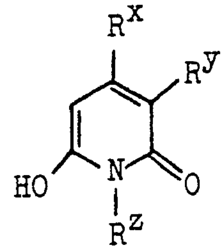

(8e)

in welchen

$R^1$, $R^2$, $R^3$, p und M die obengenannten Bedeutungen haben,

m für die Zahl Null, 1, 2 oder 3 steht (wobei diese Gruppe im Falle m gleich Null ein Wasserstoffatom bedeutet),

$R^5$ Alkylureido mit Alkylgruppen von 1 bis 6 C-Atomen, Phenylureido, im Phenylrest durch Chlor, Methyl, Methoxy, Nitro, Sulfo und/oder Carboxy substituiertes Phenylureido, Alkanoylamino von 2 bis 7 C-Atomen, wie beispielsweise Acetylamino und Propionylamino, Cyclohexanoylamino, Benzoylamino oder im Benzolrest durch Chlor, Methyl, Methoxy, Nitro, Sulfo und/oder Carboxy substituiertes Benzoylamino bedeutet,

$R^6$ Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Alkanoylamino von 2 bis 7 C-Atomen, wie Acetylamino und Propionylamino, ist,

$R^7$ Wasserstoff, Alkyl von 1 bis 4 C-Atomen, wie Methyl und Ethyl, Alkoxy von 1 bis 4 C-Atomen, wie Methoxy und Ethoxy, Chlor oder Alkanoylamino von 2 bis 7 C-Atomen, wie Acetylamino und Propionylamino, eine Ureido- oder Phenylureidogruppe ist,

$R^8$ Wasserstoff oder Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, ist,

$R^9$ für Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, steht oder Benzyl oder Phenyl oder durch Alkyl von 1 bis 4 C-Atomen, Alkoxy von 1 bis 4 C-Atomen, Chlor und/oder Sulfo substituiertes Phenyl ist,

$R^{10}$ für Wasserstoff, Alkyl von 1 bis 4 C-Atomen, wie Methyl, Cyano, Carboxy, Carbalkoxy von 2 bis 5 C-Atomen, Carbonamido oder Phenyl steht,

$R^x$ ein Wasserstoffatom oder eine Alkylgruppe von 1 bis 4 C-Atomen, wie die Methylgruppe, oder eine durch Alkoxy von 1 bis 4 C-Atomen, wie Methoxy, oder Cyano substituierte Alkylgruppe von 1 bis 4 C-Atomen ist,

$R^y$ ein Wasserstoffatom, eine Sulfogruppe oder eine Sulfoalkylgruppe mit einem Alkylenrest von 1 bis 4 C-Atomen, wie die Sulfomethylgruppe, oder eine Cyano-oder Carbamoylgruppe ist und

$R^z$ ein Wasserstoffatom oder eine Alkylgruppe von 1 bis 6 C-Atomen, bevorzugt von 1 bis 4 C-Atomen, die durch Phenyl, Sulfo oder Sulfophenyl substituiert sein kann, ist.

Verbindungen der allgemeinen Formeln (8) sind beispielsweise:

1-Naphthol-3-sulfonsäure, 1-Naphthol-4-sulfonsäure, 1-Naphthol-5-sulfonsäure, 1-Naphthol-8-sulfonsäure, 1-Naphthol-3,6-disulfonsäure, 1-Naphthol-3,8-disulfonsäure, 2-Naphthol-5-sulfonsäure, 2-Naphthol-6-sulfonsäure, 2-Naphthol-7-sulfonsäure, 2-Naphthol-8-sulfonsäure, 2-Naphthol-3,6-disulfonsäure, 2-Naphthol-6,8-disulfonsäure, 2-Naphthol-3,6,8-trisulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure, 1-Benzoylamino-8-hydroxynaphthalin-4,6-disulfonsäure, 2-Acetylamino-5-hydroxy-naphthalin-7-sulfonsäure, 3-Acetylamino-5-hydroxy-naphthalin-7-sulfonsäure, 2-Methyl-amino-8-hydroxy-naphthalin-6-sulfonsäure, 2-(3′- und 4′-Sulfophenyl)-amino-8-hydroxynaphthalin-6-sulfonsäure, 3-(3′- und 4′-Sulfophenyl)-amino-8-hydroxy-naphthalin-6-sulfonsäure, N,N-Di-(ß-sulfoethyl)-anilin und dessen im Benzolkern durch Methyl, Methoxy und/oder Ethoxy mono- oder disubstituierten Derivate, N-Ethyl-N-(ß-sulfoethyl)-anilin, N-(ß-Sulfoethyl)-anilin, N-(ß-Carboxyethyl)-anilin und deren im Benzolkern durch Methyl, Methoxy und/oder Ethoxy mono- oder disubstituierten Derivate, sowie 1-[4′-(ß-Sulfatoethylsulfonyl)-2′-sulfo]-phenyl-3-methyl-pyrazol-5-on, 1-[4′-(ß-Sulfatoethylsulfonyl)]-phenyl-3-carboxy-pyrazol-5-on und 1-(4′-Sulfophenyl)-3-carboxy-pyrazol-5-on.

Von besonderer Bedeutung sind sulfogruppenhaltige, gegebenenfalls Azogruppen, wie 1 oder 2 Azogruppen, tragende Kupplungskomponenten, die in o- oder p-Stellung zu einer Hydroxy- und/oder Aminogruppe kuppeln, wie beispielsweise 2-Acetylamino-5-hydroxy-naphthalin-7-sulfonsäure, 2-Acetyl-amino-8-hydroxynaphthalin-6-sulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure oder 1-Benzoylamino-8-hydroxynaphthalin-4,6-disulfonsäure.

Als Kupplungskomponenten H-K sind weiterhin besonders zu nennen: 1-Amino-8-hydroxynaphthalin-3,6- und 4,6-disulfonsäure sowie deren durch saure Kupplung erhaltene Arylazokupplungsprodukte der Formel (9a)

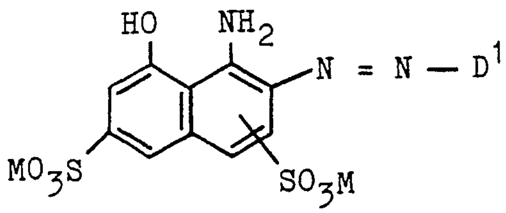

(9a)

in welcher
$D^1$ der Rest einer Diazokomponente, beispielsweise ein Rest der Formel (10a) oder (10b)

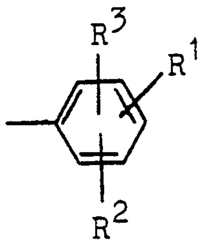

(10a)

oder

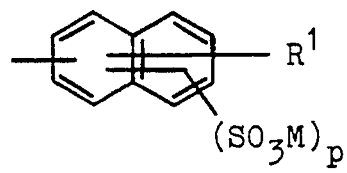

(10b)

sein kann, worin $R^1$, $R^2$, $R^3$, M und p die oben angegebenen Bedeutungen haben.
Einzelne Reste $D^1$ sind beispielsweise: Phenyl, 2-Sulfo-phenyl, 3-Sulfo-phenyl, 4-Sulfo-phenyl, 2,4-Disulfo-phenyl, 2,5-Disulfo-phenyl, 3,5-Disulfo-phenyl, 1,5-Disulfo-naphth-2-yl, 4,8-Disulfo-naphth-2-yl, 3,6,8-Trisulfo-naphth-2-yl, 4,6,8-Trisulfo-naphth-2-yl, 3,6,8-Trisulfo-naphth-1-yl, 4,6,8-Trisulfo-naphth-1-yl, 4-Sulfo-naphth-1-yl, 1-Sulfo-naphth-2-yl, 3-Acetylamino-phenyl, 4-Acetylamino-phenyl, 4-Acetylamino-2-sulfo-phenyl, 5-Acetylamino-2-sulfo-phenyl, 4-Nitro-phenyl, 4-Nitro-2-sulfo-phenyl, 6-Acetylamino-4,8-disulfo-naphth-2-yl, 4-(ß-Sulfatoethylsulfonyl)-phenyl und 3-(ß-Sulfatoethylsulfonyl)-phenyl.

Weitere Kupplungskomponenten H-K ohne die faserreaktive Gruppe der Formel (1) sind bspw. solche der allgemeinen Formeln (11a), (11b), (11c) und (11d)

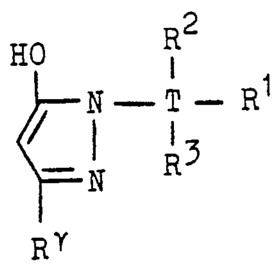

(11a)

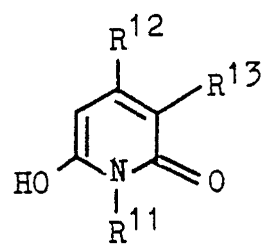

(11b)

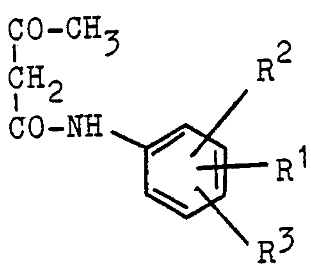

(11c)

oder

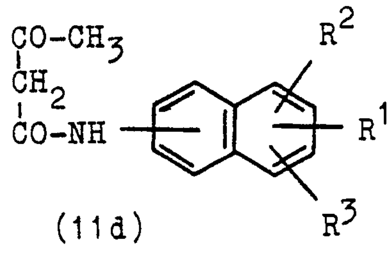

(11d)

in welchen
$R^1$, $R^2$ und $R^3$ die obengenannten Bedeutungen haben,
T für einen Benzol- oder Naphthalinring steht,
$R^γ$ Methyl, Carboxy, Methoxycarbonyl oder Ethoxycarbonyl oder Phenyl ist,
$R^{11}$ Wasserstoff, Alkyl von 1 bis 4 C-Atomen, das durch Phenyl oder Sulfophenyl oder durch Hydroxy, Amino, Methoxy, Ethoxy, Carboxy, Sulfo, Acetylamino, Benzoylamino oder Cyano substituiert sein kann, Cyclohexyl, Phenyl oder durch Carboxy, Sulfo, Benzoylamino, Acetylamino, Methyl, Methoxy, Cyano oder Chlor substituiertes Phenyl ist,
$R^{12}$ Alkyl von 1 bis 4 C-Atomen oder Phenyl ist und
$R^{13}$ Wasserstoff, Chlor, Brom, Sulfo, Carbamoyl, Methylsulfonyl, Phenylsulfonyl, Cyano oder Sulfomethylen bedeutet.

Pyrazolon-Kupplungskomponenten sind beispielsweise 3-Methyl-, 3-Carboxy- und 3-($C_2$-$C_5$-Alkoxycarbonyl)-5-pyrazolone, die in 1-Stellung Wasserstoff, gegebenenfalls durch Methyl, Ethyl, Fluor, Chlor, Brom, Trifluormethyl, Methoxy, Ethoxy, Cyano, Phenoxy, Phenylsulfonyl, Methylsulfonyl, Sulfo, Benzoyl, Acetyl, Acetylamino, Nitro, Hydroxy, Carboxy, Carbamoyl und/oder Sulfamoyl substituiertes Phenyl oder sulfosubstituiertes 1- oder 2-Naphthyl tragen, beispielsweise: 1-Phenyl-, 1-(2′-Chlorphenyl), 1-(2′-Methoxyphenyl)-, 1-(2′-Methylphenyl), 1-(2′,5′-Dichlorphenyl)-, 1-(2′,6′-Dichlorphenyl)-, 1-(2′-Methyl-6′-chlorphenyl)-, 1-(2′-Methoxy-5′-methylphenyl)-, 1-(2′-Chlor-5′-sulfophenyl)-, 1-(2′-Methoxy-5′-sulfophenyl)-, 1-(2′-Methyl-4′-sulfophenyl)-, 1-(2′,5′-Dichlor-4′-sulfophenyl)-, 1-(2′,5′-Disulfophenyl)-, 1-(2′-Carboxyphenyl)-, 1-(3′-Sulfophenyl)-, 1-(4′-Sulfophenyl)-, 1-(3′-Sulfamoylphenyl)-3-carboxy-5-pyrazolon, 1-(3′- oder 4′-Sulfophenyl)-, 1-(2′-Chlor-4′- oder -5′-sulfophenyl)-, 1-(2′-Methyl-4′-sulfophenyl)-, 1-(4′,8′-Disulfo-8-naphthyl)-, 1-(6′-Sulfo-1-naphthyl)-3-methyl-5-pyrazolon, 1-Phenyl-5-pyrazolon-3-carbonsäureethylester, 5-Pyrazolon-3-carbonsäureethylester oder 5-Pyrazolon-3-carbonsäure.

Andere aus der Pyrazolreihe stammende Kupplungskomponenten sind beispielsweise 1-Methyl-, 1-Ethyl-, 1-Propyl-, 1-Butyl-, 1-Cyclohexyl-, 1-Benzyl- oder 1-Phenyl-5-aminopyrazol, 1-(4′-Chlorphenyl)-, 1-(4′-Methylphenyl)-5-aminopyrazol oder 1-Phenyl-3-methyl-5-aminopyrazol.

Pyridonkupplungskomponenten sind beispielsweise: 1-Ethyl-2-hydroxy-4-methyl-5-carbonamido-pyridon-6, 1-(2′-Hydroxyethyl)-2-hydroxy-4-methyl-5-carbonamido-pyridon-6, 1-Phenyl-2-hydroxy-4-methyl-5-carbonamido-pyridon-6, 1-Ethyl-2-hydroxy-4-methyl-5-cyano-pyridon-6, 1-Ethyl-2-hydroxy-4-sulfomethyl-5-carbonamido-pyridon-6, 1-Ethyl-2-hydroxy-4-methyl-5-sulfomethyl-pyridon-6, 1-Methyl-2-hydroxy-4-methyl-5-cyano-pyridon-6, 1-Methyl-2-hydroxy-5-acetyl-pyridon-6, 1,4-Dimethyl-2-hydroxy-5-cyano-pyridon-6, N-(ß-Sulfoethyl)-4-methyl-5-cyano- oder -5-sulfomethyl-oder -5-sulfo- oder -5-carbamoyl-6-hydroxy-2-pyridon, N-(ß-Sulfatoethyl)-4-methyl-5-cyano-oder -5-sulfomethyl-oder -5-sulfo- oder -5-carbamoyl-6-hydroxy-2-pyridon, N-(ß-Phosphatoethyl)-, N-(ß-Sulfoethyl)- und N-(ß-Sulfatoethyl)-4-methyl-6-hydroxy-2-pyridon, 1,4-Dimethyl-2-hydroxy-5-carbonamido-pyridon-6, 2,6-Dihydroxy-4-ethyl-5-cyano-pyridin, 2,6-Dihydroxy-4-ethyl-5-carbonamido-pyridin, 1-Ethyl-2-hydroxy-4-methyl-5-sulfomethyl-pyridon-6, 1-Methyl-2-hydroxy-4-methyl-5-methylsulfonyl-pyridon-6 oder 1-Carboxymethyl-2-hydroxy-4-ethyl-5-phenylsulfonyl-pyridon-6.

Faserreaktivgruppenhaltige Kupplungskomponenten der Anilin-und Naphthalinreihe mit dem Rest der Formel (1) leiten sich beispielsweise von Verbindungen der allgemeinen Formeln (11e) bis (11g)

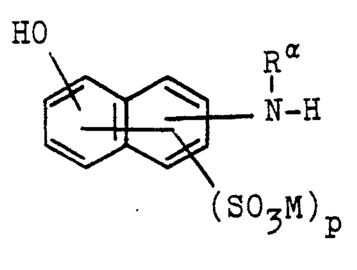

(11e)

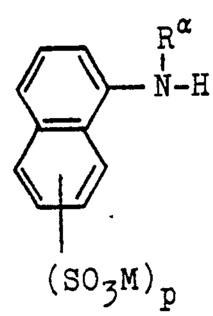

(11f)

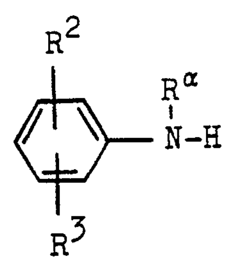

(11g)

ab, in welchen $R^α$, $R^2$, $R^3$, M und p die obengenannten Bedeutungen haben.

Durch Umsetzung mit einem faserreaktiven Acylierungsmittel vor der Kupplung mit em Diazoniumsalz, die Verbindungen der allgemeinen Formel (11e) betreffend, oder nach der Kupplung mit dem Diazoniumsalz, die Verbindungen der allgemeinen Formeln (11e) bis (11g) betreffend, kann auch ein anderer

faserreaktiver Rest eingeführt werden. Prinzipiell kommen hierfür alle bekannten faserreaktiven Acylierungsmittel in Betracht, wie 2,4,6-Trifluor-1,3,5-triazin (Cyanurfluorid) und 2,4,6-Trichlor-1,3,5-triazin (Cyanurchlorid) und insbesondere eine Halogentriazinylamino-Verbindung der später angegebenen und definierten allgemeinen Formel (26). Andere bekannte faserreaktive Reste sind die oben bereits als mögliche faserreaktive Reste für die Diazokomponenten beschriebenen Gruppen, wobei hier zusätzlich noch die 2-Chlor-4-bis-[ß-(ß′-chlorethylsulfonyl)-ethyl]-amino-s-triazin-6-yl-amino-Gruppe und die 3-(ß-Chlorethylsulfonyl)-benzoylamino-Gruppe erwähnt werden können.

Weitere Kupplungskomponenten H-K sind die durch saure Kupplung erhältlichen Arylazo-Kupplungsprodukte der 1-Amino-8-hydroxy-naphthalin-3,6- und -4,6-disulfonsäure der allgemeinen Formel (9b)

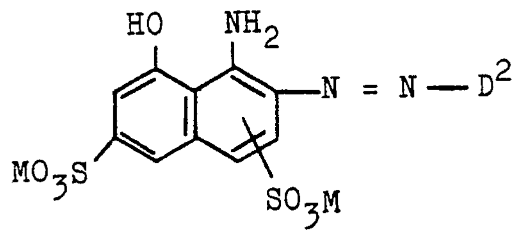

(9b)

in welcher $D^2$ der Rest einer Diazokomponente mit einer faserreaktiven Gruppe, insbesondere der Formel (1), ist. Der Formelrest $D^2$ ist beispielsweise ein Rest der obengenannten Formel (10a) mit $R^1$ gleich einer Gruppe der Formel $-SO_2-Y$ oder ein Rest der Formel (12)

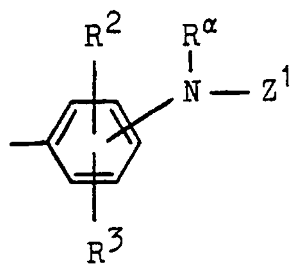

(12)

in welcher $R^\alpha$, $R^2$, $R^3$ und M die oben angegebenen Bedeutungen haben und $Z^1$ ein Rest der allgemeinen Formel (1a)

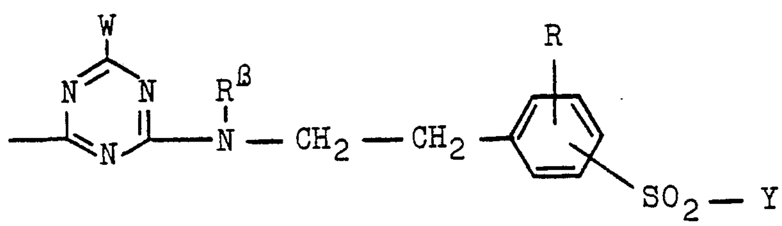

(1a)

mit W, R, $R^\beta$ und Y der oben angegebenen Bedeutung ist.

Aromatische Diamine aus dem Rest der Formel (12) sind beispielsweise: 1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, 1,4-Diamino-2-methoxy-benzol, 1,3-Diamino-4-methyl-benzol, 1,4-Diaminobenzol-2,6-disulfonsäure, 1,5-Diamino-4-methylbenzol-2-sulfonsäure, 1,5-Diamino-4-methoxybenzol-2-sulfonsäure, wobei in allen diesen Diaminoverbindungen die eine primäre oder sekundäre Aminogruppe durch den faserreaktiven Rest $Z^1$ substituiert ist.

Bevorzugte Reste $D^2$ der Formel (12) sind beispielsweise die Reste der Formeln (12a), (12b), (12c), (12d), (12e) und (12f) mit M der oben angegebenen Bedeutung:

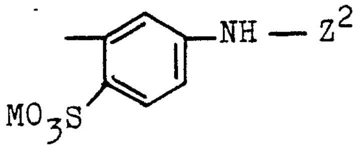
(12a)

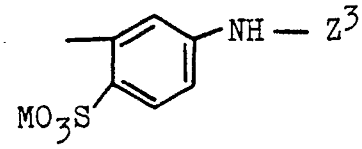
(12b)

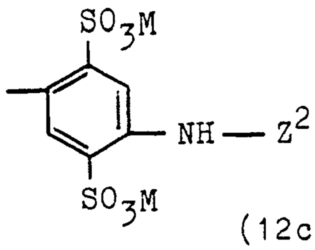
(12c)

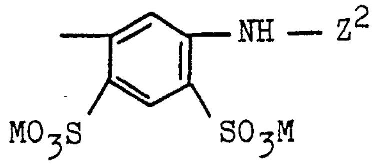
(12d)

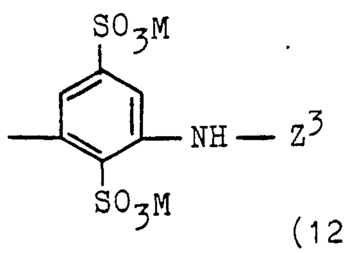
(12e)

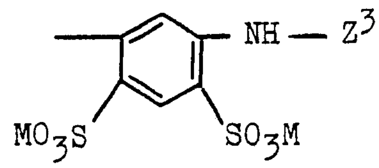
(12f)

in welchen $Z^2$ ein Rest der Formel (1b)

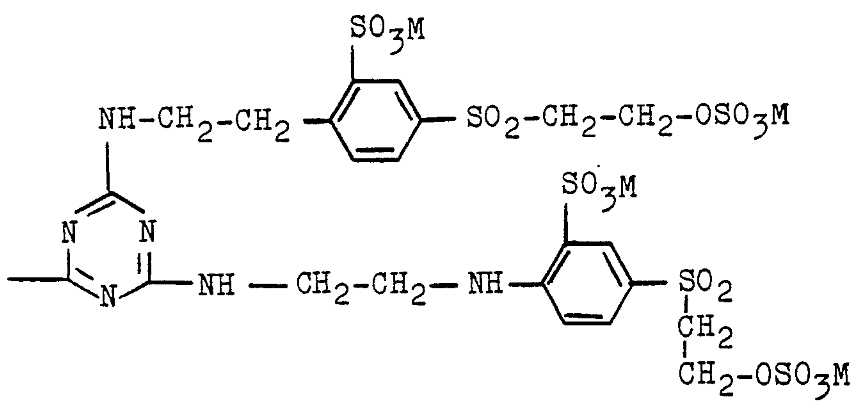
(1b)

und $Z^3$ ein Rest der Formel (1c)

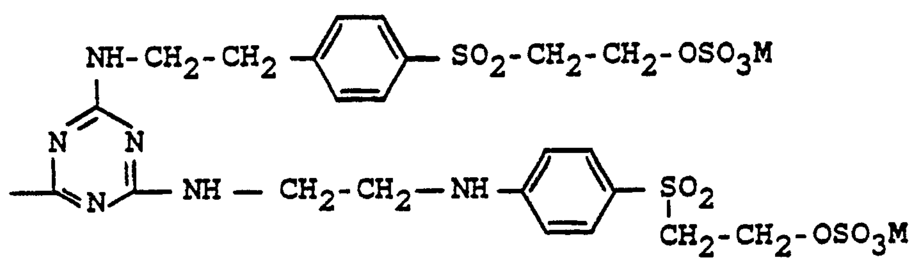
(1c)

mit M der obigen Bedeutung ist.

Weitere bevorzugte Reste $Z^1$ sind solche entsprechend der allgemeinen Formel (1A)

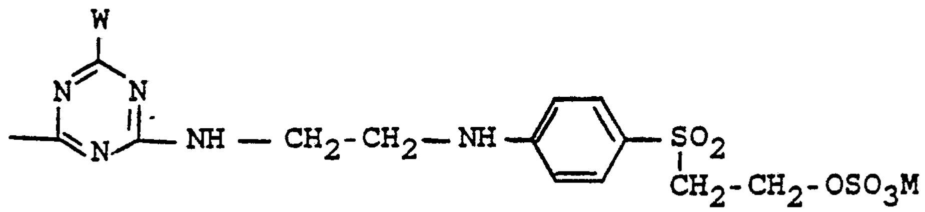

(1A)

in welchen M die obengenannte Bedeutung hat und W die 3-Sulfophenyl-amino-, die 4-(ß-Sulfatoethylsulfonyl)-phenylamino-, die ß-Sulfo-ethylamino, die N-Morpholino-, die N-Piperidinyl-, die N-Pyrrolidinyl-, die 4-Sulfophenylamino- oder die 3-(ß-Sulfatoethylsulfonyl)-phenylamino-Gruppe bedeutet.

Kupplungskomponenten, die erfindungsgemäß die faserreaktive Gruppe der Formel (1a) enthalten, sind beispielsweise Verbindungen der allgemeinen Formel (13a), (13b) und (13c) bzw. deren $Z^1$-freien Vorprodukte:

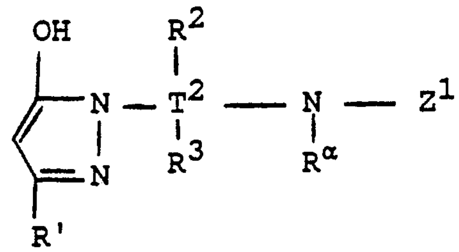

(13a)

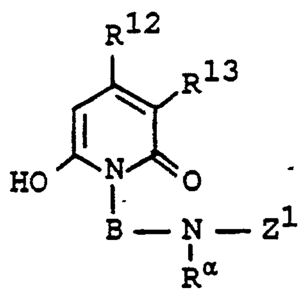

(13b)

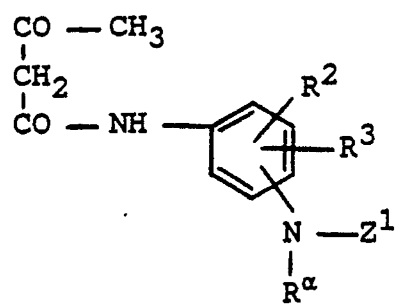

(13c)

in welchen
$R^{\alpha}$, $R^2$, $R^3$, $R^{12}$, $R^{13}$ und $Z^1$ die oben angegebenen Bedeutungen haben und
$T^2$ einen Benzol- oder Naphthalinring bedeutet,
$R'$ eine Methyl- oder Carboxygruppe ist und
B Alkyl von 1 bis 4 C-Atomen, Benzyl oder Phenethyl oder Phenyl oder im Benzolrest durch Fluor, Chlor, Brom, Methyl, Methoxy, Cyano, Sulfo, Carboxy, Acetyl, Nitro, Carbamoyl und/oder Sulfamoyl substituiertes Benzyl, Phenethyl oder Phenyl ist.

Kupplungskomponenten, die den Verbindungen der allgemeinen Formeln (13a) bis (13c) entsprechen und die anstelle des Restes $Z^1$ ein Wasserstoffatom besitzen, in deren freie Aminogruppe jedoch nach beendeter Kupplung der Rest $Z^1$ eingeführt werden kann, sind beispielsweise:
1-(3′- oder 4′-Aminophenyl)-, 1-(2′-Sulfo-5′-aminophenyl)-und 1-(2′-Methoxy-5′-aminophenyl)-3-carboxy-5-pyrazolon, 1-(3′- oder 4′-Aminophenyl)- und 1-(3′- oder 4′-Nitrophenyl)-3-methyl-5-pyrazolon, 1-(3′- oder 4′-Nitrophenyl)-, 1-(6′-Nitro-4′,8′-disulfonaphthyl-2′)- und 1-(6′-Amino-4′,8′-disulfonaphthyl-2′)-3-carboxy-5-pyrazolon.

Bevorzugte faserreaktive Kupplungskomponenten entsprechend den Formeln (13a) und (13b) sind beispielsweise Verbindungen der Formeln (14a) bis (14g):

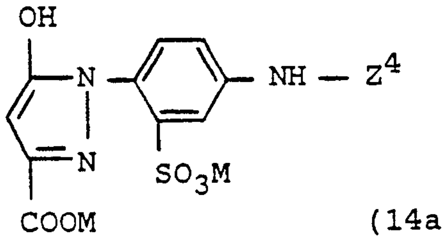
(14a)

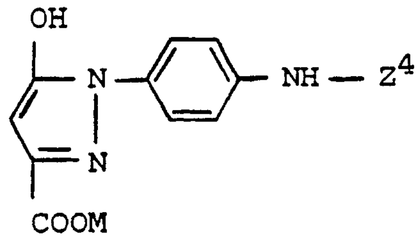
(14b)

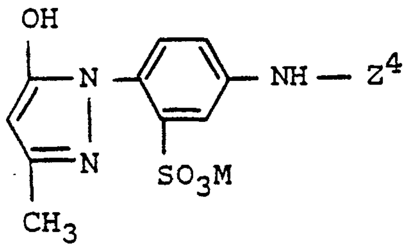
(14c)

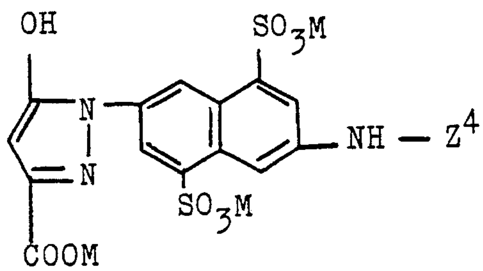
(14d)

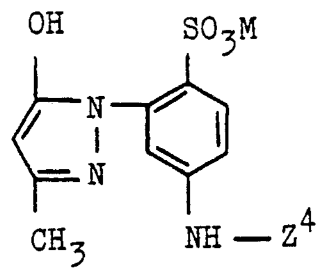
(14e)

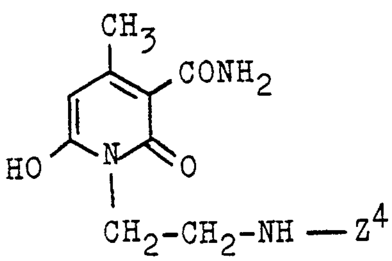
(14f)

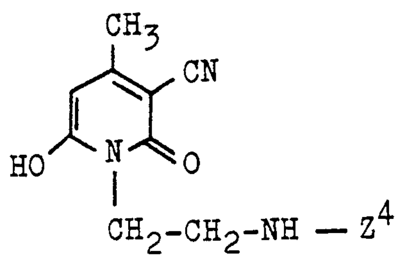
(14g)

in welchen M die obengenannten Bedeutungen hat und die $Z^4$ die Bedeutung von $Z^2$ oder von $Z^3$ besitzt.

Von den erfindungsgemäßen Azofarbstoffen der allgemeinen Formel (1) können insbesondere die Mono- und Disazoverbindungen der allgemeinen Formeln (15), (16a), (16b), (16c), (16d), (16e), (16f) und (17):

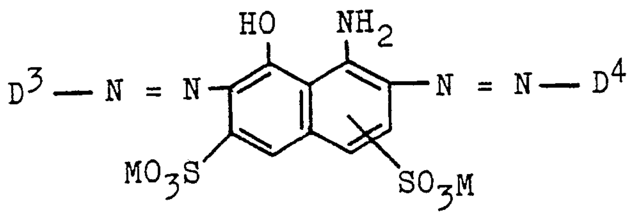

(15)

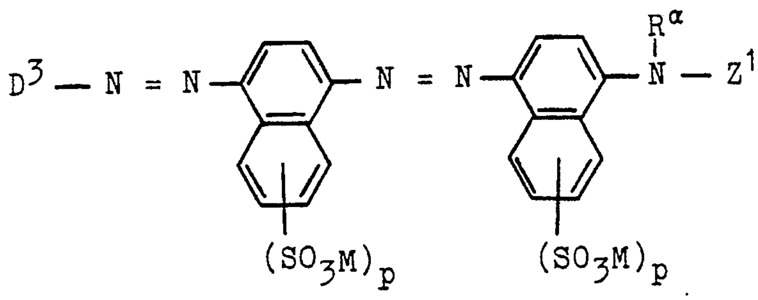

(16a)

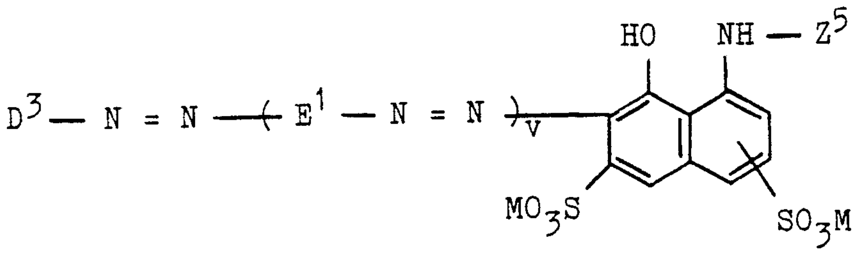

(16b)

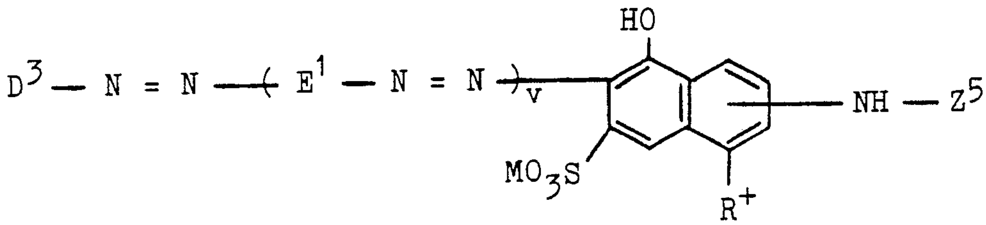

(16c)

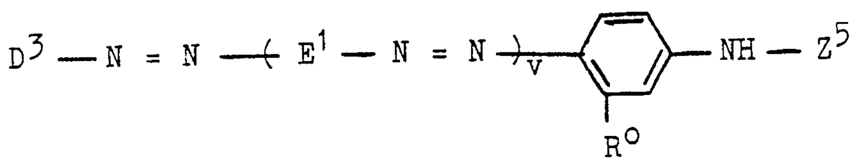

(16d)

$D^2 - N = N - K^2$ (16e)

$D^1 - N = N - K^3$ (16f)

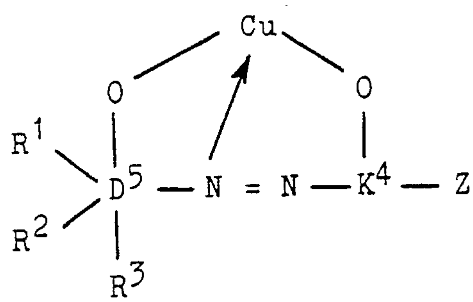

(17)

In diesen Formeln bedeuten:

In Formel (15) haben $D^3$ und $D^4$ zueinander gleiche oder voneinander verschiedene Bedeutungen und jedes ist ein Rest einer Diazokomponente, von denen mindestens eine eine faserreaktive Gruppe der allgemeinen Formel (1), in welcher $R''$ beide für ein Wasserstoffatom stehen und R ebenfalls ein Wasserstoffatom ist, gebunden enthält, wobei diese bevorzugt eine Gruppe $Z^5$ der allgemeinen Formel (1d)

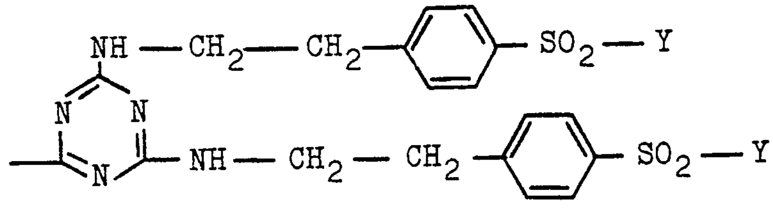

(1d)

mit Y der obengenannten, insbesondere bevorzugten Bedeutung, ist $Z^{*}$ besitzt die obengenannte Bedeutung oder ist bevorzugt eine Gruppe $Z^5$, und M hat die obengenannte Bedeutung; bevorzugt sind $D^3$ und $D^4$, zueinander gleich oder voneinander verschieden, jedes ein Rest $D^1$ oder $D^2$ entsprechend den obengenannten und definierten allgemeinen Formeln (10a) und (10b) bzw. (12), insbesondere bevorzugt ein Mono- oder Disulfophenyl- oder Mono-, Di- oder Trisulfonaphthyl-Rest bzw. ein Rest der Formel (12A)

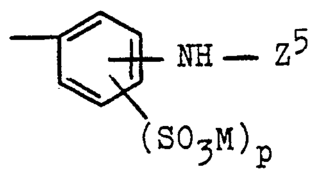

(12A)

mit $Z^5$, p und M der obengenannten Bedeutung;

in Formel (16a) haben $D^3$, p, R und $Z^1$ die obengenannten Bedeutungen, wobei $R''$ bevorzugt ein Wasserstoffatom ist und $D^3$ bevorzugt ein Rest $D^1$ der Formel (10a) oder (10b) ist, insbesondere bevorzugt ein Monosulfo- oder Disulfophenyl- oder ein Monosulfo-, Disulfo- oder Trisulfonaphthylrest ist;

in den Formeln (16b), (16c) und (16d) haben $D^3$, M und v die obengenannten Bedeutungen, wobei $D^3$ bevorzugt ein Rest $D^1$ der Formel (10a) oder (10b) ist, insbesondere bevorzugt ein Monosulfo- oder Disulfophenyl- oder ein Monosulfo-, Disulfo- oder Trisulfonaphthylrest ist,

$E^1$ ist ein Rest der Formel (7A)

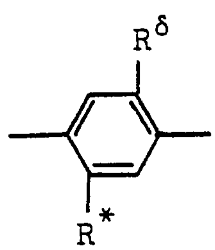

(7A)

in welcher $R^{\delta}$ und $R^{*}$, zueinander gleich oder voneinander verschieden, jedes ein Wasserstoffatom, die Methyl-, Methoxy- oder Ethoxygruppe bedeutet,

$Z^5$ hat die obengenannte Bedeutung,

$R^{o}$ ist die Acetylamino- oder Ureidogruppe und

$R^{+}$ ist ein Wasserstoffatom oder eine Sulfogruppe;

in Formel (16e) ist $D^2$ ein Rest der obenangegebenen und definierten allgemeinen Formel (12), wobei im Rest $Z^1$ der Rest $R''$ bevorzugt ein Wasserstoffatom ist und $Z^1$ insbesondere bevorzugt ein Rest der allgemeinen Formel (1c) ist, und $K^2$ einen Rest der obengenannten und definierten allgemeinen Formel (8a), (8b), (8d) oder (8e) ist;

in Formel (16f) bedeutet $D^1$ einen Rest der allgemeinen Formel (10a) oder (10b) und $K^3$ einen Rest der allgemeinen Formel (14a) bis (14f);

In Formel (17) bedeutet $D^5$ einen Benzol- oder Naphthalinkern, $R^1$, $R^2$ und $R^3$ haben die obengenannten, insbesondere bevorzugten Bedeutungen, wobei im Falle, daß $D^5$ für einen Naphthalinkern steht, $R^2$ ein Wasserstoffatom und $R^3$ ein Wasserstoffatom oder eine Sulfogruppe bedeutet, die Oxygruppen an $D^5$ und $K^4$ stehen in ortho-Stellung zur Azogruppe, $K^4$ ist ein Naphthalinkern, der durch 1 oder 2 Sulfogruppen substituiert sein kann, bevorzugt substituiert ist, und Z die obengenannte faserreaktive Gruppe der allgemeinen Formel (1a) ist oder bevorzugt eine Gruppe der Formel -NH-$Z^5$ mit $Z^5$ der Bedeutung der allgemeinen Formel (1d) ist.

Von den Farbstoffen der allgemeinen Formel (15) können die in den Beispielen 1, 9, 14 und 16 beschriebenen Farbstoffe hervorgehoben werden, von den Farbstoffen der allgemeinen Formel (16d) diejenigen der Beispiele 52, 71 und 85 und von den Farbstoffen der allgemeinen Formel (16e) diejenigen der Beispiele 122, 123, 129 und 134.

Weitere interessante erfindungsgemäße Farbstoffe entsprechend der allgemeinen Formel (3) sind Anthrachinonfarbstoffe entsprechend der allgemeinen Formel (18)

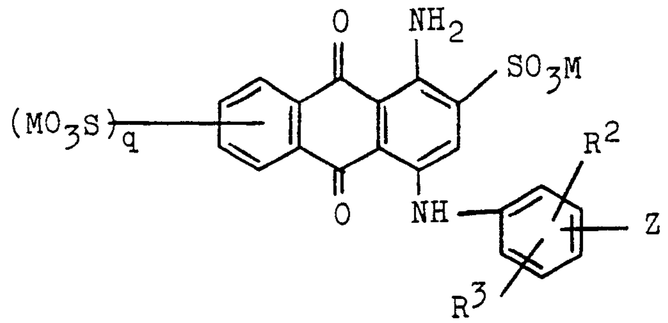

(18)

in welcher M und Z' die obengenannten Bedeutungen haben, q für die Zahl Null oder 1 steht (wobei im Falle von q gleich Null diese Gruppe ein Wasserstoffatom bedeutet) und $R^2$ und $R^3$ einen der oben genannten bevorzugten Bedeutungen besitzen.

Von den erfindungsgemäßen Phthalocyaninfarbstoffen sind die der allgemeinen Formel (19)

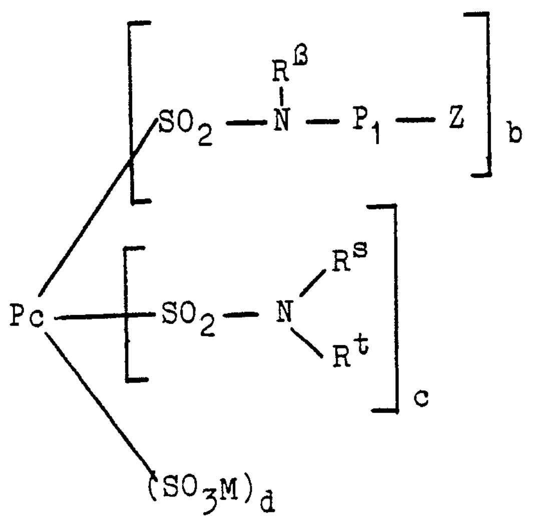

(19)

hervorzuheben,

in welcher $R^{\beta}$, Z und M die obengenannten Bedeutungen haben,

Pc für den Rest des metallfreien oder eines metallhaltigen Phthalocyanins, wie beispielsweise des Kobalt- und vorzugsweise Kupfer- oder Nickelphthalocyanin steht, wobei der Phthalocyaninrest noch in den 3- und/oder 4-Stellungen der carbocyclischen aromatischen Ringe des Phthalocyanins substituiert sein kann, wie beispielsweise durch Halogenatome, wie Chloratome, oder Phenylreste, und in welchem die Sulfonamid- und/oder Sulfogruppen in den 3- und/oder 4-Stellungen der carbocyclischen aromatischen Ringe des Phthalocyanins gebunden sind,

$P_1$ einen Phenylenrest bedeutet, der durch Substituenten aus der Gruppe Halogen, wie Chlor und Brom, Methyl, Ethyl, Sulfo und Carboxy substituiert sein kann, oder einen Alkylenrest von 2 bis 6 C-Atomen, bevorzugt von 2 oder 3 C-Atomen, bedeutet, wobei $P_1$ insbesondere bevorzugt einen Phenylenrest, der durch eine Sulfogruppe substituiert ist, oder den 1,2-Ethylen-Rest bedeutet,

$R^s$ ist ein Wasserstoffatom oder eine Alkylgruppe von 1 bis 4 C-Atomen, wie die Methyl- und n-Propylgruppe und bevorzugt die Ethylgruppe, die durch Sulfo, Carboxy, Phosphato, Hydroxy, Sulfato, Phenyl, Sulfophenyl, ß-Sulfatoethylsulfonyl oder 3- oder 4-(ß-Sulfatoethylsulfonyl)-phenyl substituiert sein kann,

$R^t$ ist ein Wasserstoffatom oder eine Alkylgruppe von 1 bis 4 C-Atomen, wie die Methyl- und n-Propylgruppe und bevorzugt die Ethylgruppe, die durch Sulfo, Carboxy, Phosphato, Hydroxy, Sulfato, Phenyl, Sulfophenyl, ß-Sulfatoethylsulfonyl oder 3- oder 4-(ß-Sulfatoethylsulfonyl)-phenyl substituiert sein kann, oder ist ein Phenylrest, der durch 1 oder 2 Substituenten aus der Gruppe Methyl, Ethyl, Methoxy, Ethoxy, Chlor, Sulfo, Carboxy und ß-Sulfatoethylsulfonyl substituiert sein kann,
b ist eine ganze oder gebrochene Zahl von 2 bis 4,
c ist eine ganze oder gebrochene Zahl von Null bis 2, vorzugsweise die Zahl Null,
d ist eine ganze oder gebrochene Zahl von Null bis 3, vorzugsweise von 0,5 bis 2,5,
und die Summe von (b + c + d) ist eine ganze oder gebrochene Zahl von 3 bis 4.

Erfindungsgemäß interessante Formazanfarbstoffe sind die entsprechend der allgemeinen Formel (20)

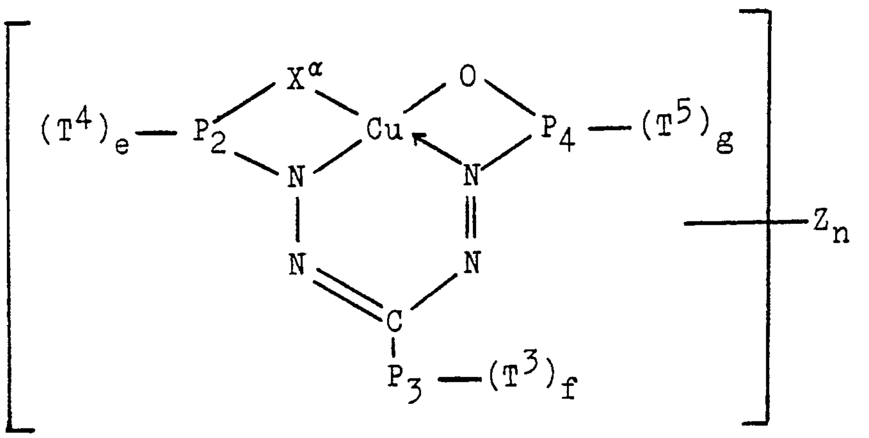

(20)

hervorzuheben, in welcher
$X^{\alpha}$ für die Oxygruppe oder die Carbonyloxygruppe oder für eine nur an $P_2$ gebundene Sulfogruppe steht,
$P_2$ und $P_4$, unabhängig voneinander, einen Benzol- oder Naphthalinring bedeuten, wobei $P_2$ das Stickstoffatom und die Gruppe $X^{\alpha}$ ortho-ständig zueinander und $P_4$ das Sauerstoffatom und das Stickstofftom ortho-ständig zueinander gebunden enthalten und die Benzolkerne bzw. Naphthalinkerne noch durch einen oder zwei Substituenten aus der Gruppe Halogen, wie Chlor, Nitro, Alkyl von 1 bis 4 C-Atomen, wie Methyl und Ethyl, Alkoxy von 1 bis 4 C-Atomen, wie Methoxy und Ethoxy, Sulfamoyl, durch Alkyl von 1 bis 4 C-Atomen mono- oder disubstituiertes Sulfamoyl, Alkylsulfonyl von 1 bis 4 C-Atomen, wie Methylsulfonyl und Ethylsulfonyl, und Phenylsulfonyl substituiert sein können,
$P_3$ ist eine geradkettige oder verzweigte Alkylengruppe von 2 bis 6 C-Atomen, vorzugsweise von 2 bis 4 C-Atomen, die durch eine Sulfophenylgruppe substituiert sein kann, oder ist eine Phenylengruppe oder eine Naphthylengruppe, die substituiert sein können, wie beispielsweise durch 1 oder 2 Substituenten aus der Gruppe Methyl, Ethyl, Methoxy, Ethoxy und Chlor, oder ist ein gegebenenfalls substituierter bivalenter heterocyclischer Rest,
$R^3$, $T^4$ und $T^5$ bedeuten, unabhängig voneinander, eine Sulfo-oder Carboxygruppe, bevorzugt Sulfogruppe,
e, f und g stellen, unabhängig voneinander, die Zahl Null, 1 oder 2 dar, wobei die Summe von (e+f+g) eine ganze Zahl von 1 bis 4 bedeutet und vorzugsweise 2 oder 3, insbesondere 2, ist, wobei im Falle von e oder f oder g gleich Null die Gruppe $T^4$ bzw. $T^5$ bzw. $T^3$ ein Wasserstoffatom bedeutet,
und Z und n die obengenannten Bedeutungen haben, wobei Z an einen aromatischen Rest von $P_2$, $P_3$ oder $P_4$ gebunden sein kann und n bevorzugt die Zahl 1 bedeutet.

Bevorzugt sind in den Kupferformazanverbindungen der allgemeinen Formel (20) diejenigen, in welchen $P_2$ und $P_4$ beide für einen Benzolring stehen und $T^4$ und $T^5$ jedes eine Sulfogruppe bedeutet, wobei e und g jedes für die Zahl 1 steht, falls Z an $P_4$ gebunden ist. Sofern Z an $P_2$ gebunden ist, ist e die Zahl Null, g die Zahl 2, $T^5$ bedeutet Sulfo und $X^{\alpha}$ bevorzugt die Carbonyloxygruppe. Bevorzugt sind in Formel (20) die Benzol- und Naphthalinkerne von $P_2$ und $P_4$, außer durch $T^4$ und $T^5$, nicht substituiert.

Erfindungsgemäße Triphendioxaninfarbstoffe sind insbesondere solche, die der allgemeinen Formel (21)

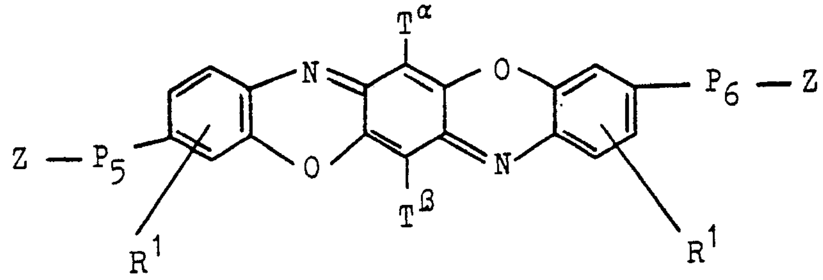

(21)

in welcher

Z und R' eine der oben genannten Bedeutungen haben und

$P_5$ eine direkte kovalente Bindung darstellt oder einen Rest der allgemeinen Formel $-P^{\alpha}-N(R^{\alpha})-$ bedeutet, in welcher

$R^{\alpha}$ eine der oben genannten Bedeutungen besitzt und

$P^{\alpha}$ einen Benzolring bedeutet der durch 1 oder 2 Substituenten aus der Gruppe Methyl, Ethyl, Methoxy, Ethoxy, Chlor, Sulfo und Carboxy, bevorzugt Sulfo, substituiert sein kann, oder für einen Cycloalkylenrest, wie Cyclohexylenrest, oder eine geradkettige oder verzweigte Alkylengruppe von 1 bis 6, vorzugsweise 2 bis 4, C-Atomen, die durch Sulfo-, Sulfato-, Phosphato- oder Carboxygruppen oder durch einen Sulfophenylrest substituiert sein kann, oder für einen Alkylenrest von 2 bis 8 C-Atomen steht, der durch Heterogruppen, wie 1 oder 2 Heterogruppen der Formeln -O-, $-SO_2-$, -CO-, -NH- und $-N(R^{\alpha})-$ mit $R^{\alpha}$ einer der obengenannten Bedeutungen unterbrochen sein kann, und

$P_6$ eine kovalente Bindung bedeutet oder eine Gruppe der allgemeinen Formel $-N(R^{\alpha})-P^{\alpha}-$ mit $R^{\alpha}$ und $P^{\alpha}$ der oben genannten Bedeutungen und

$T^{\alpha}$ und $T^{\beta}$, unabhängig voneinander, jedoch vorzugsweise mit gleicher Bedeutung, jedes Wasserstoff, Fluor, Chlor, Brom, Alkyl von 1 bis 4 C-Atomen, Alkoxy von 1 bis 4 C-Atomen, Aryloxy, wie Phenoxy, Alkanoylamino von 2 bis 5 C-Atomen, wie Acetylamino, Benzoylamino, Phenylcarbonylamino, Carbamoyl oder durch Alkyl von 1 bis 4 C-Atomen, Benzyl und/oder Phenyl mono- oder disubstituiertes Carbamoyl bedeutet und bevorzugt Chlor ist.

Die erfindungsgemäßen Farbstoffe lassen sich in üblicher Weise der Synthese von Farbstoffen herstellen, beispielsweise durch Umsetzung von für die entsprechende Farbstoffklasse dem Fachmann geläufigen Farbstoffvorprodukten mit den für diese Farbstoffklasse üblichen Synthesemethoden, wobei mindestens eine dieser Farbstoffvorprodukte eine faserreaktive Gruppe der allgemeinen Formel (1) enthält. So können beispielsweise Mono- und Disazofarbstoffe entsprechend der allgemeinen Formel (3) duch Umsetzung von deren Diazo- und Kupplungskomponenten in der hierfür üblichen Verfahrensweise der Diazotierung und Kupplung synthetisiert werden, wobei die Diazo- oder Kupplungskomponente oder beide (jeweils) eine faserreaktive Gruppe der allgemeinen Formel (1) enthalten. Im Falle der Synthese von Disazofarbstoffen kann bereits die Diazo- oder Kupplungskomponente die zweite Azogruppierung gebunden enthalten. Erfindungsgemäß einsetzbare Diazokomponenten sind die für faserreaktive Azofarbstoffe üblichen aromatischen carbocyclischen und heterocyclischen Aminoverbindungen, die gegebenenfalls die faserreaktive Gruppe der allgemeinen Formel (1) enthalten, und die zur Synthese von faserreaktiven Azofarbstoffen üblichen Kupplungskomponenten, beispielsweise der Naphthol-, Anilin-, Naphthylamin-, Aminonaphthol-, Pyrazolon- und Pyridonreihe, wobei gegebenenfalls die Kupplungskomponente die faserreaktive Gruppe der allgemeinen Formel (1) enthält. Solche Diazo- und Kupplungskomponenten sind beispielsweise die anfangs beschriebenen Verbindungen entsprechend den allgemeinen Formeln (5), (6), (7), (8), (9), (10), (11) und (13) sowie (14).

Die Diazotierungs- und Kupplungsreaktionen erfolgen in üblicher Weise, so die Diazotierung in der Regel bei einer Temperatur zwischen -5°C und +15°C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle der aminogruppenhaltigen Kupplungskomponente und bei einem pH-Wert zwischen 3 und 7,5 im Falle der hydroxygruppenhaltigen Kupplungskomponente und bei einer Temperatur zwischen 0 und 25°C, ebenso bevorzugt in wäßrigem Medium.

Die erfindungsgemäßen Farbstoffe, wie die der allgemeinen Formel (3), können ebenfalls erfindungsgemäß in der Weise hergestellt werden, daß man ein Cyanurhalogenid, wie Cyanurfluorid oder insbesondere Cyanurchlorid, oder eine Dihalogen-triazin-Verbindung der allgemeinen Formel (22)

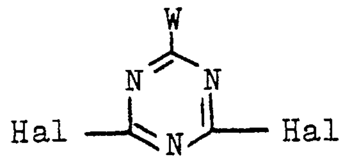

(22)

in welcher Hal für ein Halogenatom, wie Fluor- oder Chloratom, steht und W eine der obengenannten Bedeutungen hat, mit einem eine Aminogruppe der Formel $-NHR^{\alpha}$ mit $R^{\alpha}$ der obengenannten Bedeutung ein oder mehrmals enthaltenden wasserlöslichen Farbstoff, wie einer Verbindung der allgemeinen Formel (23)

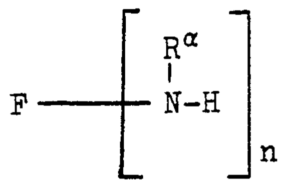

(23)

in welcher F, $R^{\alpha}$ und n die obengenannten Bedeutungen haben, und einer Aminoverbindung der allgemeinen Formel (24)

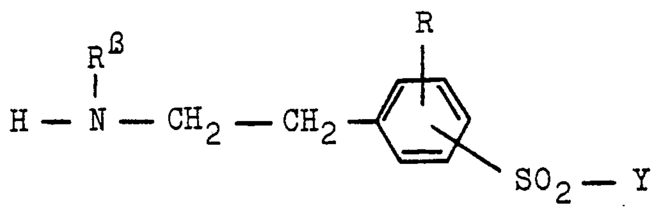

(24)

in welcher R, $R^{\beta}$ und Y die obengenannten Bedeutungen haben, und gegebenenfalls einem Amin der allgemeinen Formel $H-W^1$ , worin $W^1$ einen Rest der allgemeinen Formeln (2a) bis (2e) obengenannter Bedeutung darstellt, in beliebiger Folge umsetzt. So kann man zunächst eine Aminoverbindung der allgemeinen Formel (23) mit einem Cyanurhalogenid, wie Cyanurchlorid oder Cyanurfluorid, vorzugsweise Cyanurchlorid, zur Dihalogentriazinylamino-Verbindung der allgemeinen Formel (25)

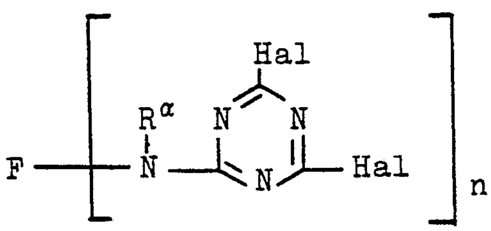

(25)

in welcher Hal, F, $R^{\alpha}$ und n die obengenannten Bedeutungen haben, umsetzen, und diese wird durch Reaktion mit einer Aminoverbindung der allgemeinen Formel (24) und gegebenenfalls einem Amin der Formel $H-W^1$ obiger Bedeutung in äquivalenter Menge in den Endfarbstoff (3) übergeführt, oder man setzt zunächst eine Aminoverbindung der allgemeinen Formel (24) mit einem Cyanurhalogenid zur Dihalogentriazinylamino-Verbindung der allgemeinen Formel (26)

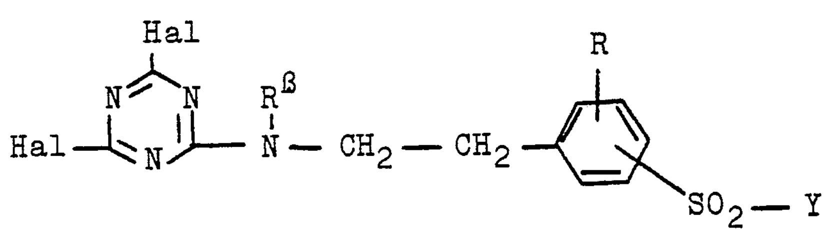

(26)

mit Hal, $R^{\beta}$ und Y der obengenannten Bedeutung und diese in äquivalenter Menge mit der Verbindung der allgemeinen Formel (23) zum Endfarbstoff (3) um, oder man setzt eine Aminoverbindung der allgemeinen Formel (23) mit einer Halogentriazin-Verbindung der allgemeinen Formel (27)

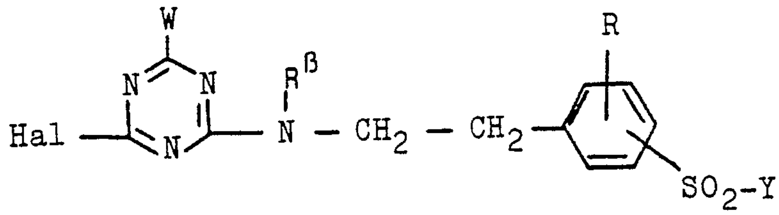

(27)

mit Hal, W, $R^{\beta}$, R und Y der obengenannten Bedeutung um, oder man setzt eine Verbindung der allgemeinen Formel (28)

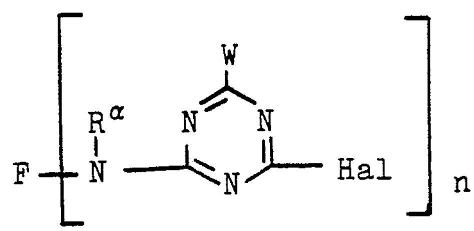

(28)

mit F, $R^{\alpha}$, W und Hal der obengenannten Bedeutung, mit einem Amin der Formel (24) um.

Die Kondensationsreaktionen zwischen dem Cyanurhalogenid bzw. den Halogentriazinylamino-Verbindungen mit den entsprechenden Aminoverbindungen können in der üblichen Weise der Umsetzung eines Cyanurhalogenids bzw. Halogenotriazinylaminoverbindungen mit Aminoverbindungen erfolgen, so in organischem oder bevorzugt wäßrig-organischem Medium, insbesondere bevorzugt in wäßrigem Medium unter Zusatz säurebindender Mittel, wie Alkali- oder Erdalkalicarbonaten, Alkali- oder Erdalkalihydrogencarbonaten oder -hydroxiden oder Alkaliacetaten, wobei die Alkali- und Erdalkalimetalle vorzugsweise Natrium, Kalium oder Calcium sind. Säurebindende Mittel sind ebenso tertiäre Amine, wie beispielsweise Pyridin, Triethylamin oder Chinolin. Sofern diese Kondensationsreaktionen in organischem oder wäßrig-organischem Medium erfolgen, ist das (anteilige) organische Lösemittel Aceton, Dioxan und Dimethylformamid.

Die Kondensationsreaktionen zwischen dem Cyanurhalogenid, vorzugsweise Cyanurchlorid, und den Aminoverbindungen erfolgen in der Regel bei einer Temperatur zwischen -10° C und +40° C, vorzugsweise zwischen -5° C und +30° C, sowie bei einem pH-Wert zwischen 4,5 und 8,0, bevorzugt zwischen 5 und 7. Die Umsetzung der Halogentriazinylamino-Verbindungen mit einer Aminoverbindung der allgemeinen Formel (23) bzw. (24) bzw. $H\text{-}W^1$ erfolgt beispielsweise bei einer Temperatur zwischen -10° C und 60° C, bevorzugt zwischen 0 und 5° C, und bei einem pH-Wert zwischen 3 und 8, bevorzugt zwischen 4 und 7,5, wobei darauf zu achten ist, daß die faserreaktive Gruppierung im schwach alkalischen Bereich nicht geschädigt wird.

Die erfindungsgemäßen Farbstoffe, die als Gruppen $-SO_2-Y$ ß-Sulfatoethylsulfonyl- oder ß-Phosphatoethylsulfonyl-Gruppen besitzen, können erfindungsgemäß auch so hergestellt werden, daß man einen Farbstoff gleicher Konstitution, jedoch mit der Abänderung, daß $-SO_2-Y$ die ß-Hydroxyethylsulfonyl-Gruppe bedeutet, analog bekannten Verfahrensweisen mit einem Sulfatisierungsmittel bzw. Phosphatisierungsmittel, wie konzentrierter Schwefelsäure, Schwefeltrioxid enthaltender Schwefelsäure, Amidosulfonsäure, Gemische aus Phosphorpentoxid und Phosphorsäure und wäßriger konzentrierter Phosphorsäure, umsetzt, wobei die Sulfatisierung in der Regel bei einer Temperatur zwischen 10° C und 25° C und die Phosphatisierung bei einer Temperatur zwischen 5 und 30° C erfolgt.

Die Ausgangsfarbstoffe mit der oder den ß-Hydroxyethylsulfonyl-Gruppe(n) sind analog den obigen Angaben zur Herstellung der erfindungsgemäßen Farbstoffe synthetisierbar, indem man entweder entsprechende Farbstoffvorprodukte einsetzt, die diese ß-Hydroxyethylsulfonyl-Gruppe(n) enthalten, oder einen Amino-Farbstoff der allgemeinen Formel (23) und eine Aminoverbindung der allgemeinen Formel (24) und gegebenenfalls eine Aminoverbindung der allgemeinen Formel $H\text{-}W^1$ obiger Bedeutung, in welchen jedoch Y für die ß-Hydroxyethyl-Gruppe steht, mit einem Cyanurhalogenid gemäß den obigen Reaktionsbedingungen umsetzt. Im letzteren Falle, in welchem die Ausgangsverbindung (24) bzw. deren Halogenotriazinyl-Derivate (26) und (27) die ß-Hydroxyethylsulfonyl-Gruppe(n) als den Rest $-SO_2-Y$ enthalten, kann die

Kondensationsreaktion auch im stärker alkalischen Bereich, wie bei einem pH-Wert zwischen 8 und 10, durchgeführt werden.

Bei der erfindungsgemäßen Synthese von Schwermetallkomplex-Azofarbstoffen, beispielsweise solchen entsprechend der allgemeinen Formeln (4c) und (17), geht man in der Regel von solchen schwermetallfreien Azoverbindungen aus, die in der Kupplungskomponente eine phenolische oder naphtholische Hydroxygruppe in ortho-Stellung bzw. vicinaler Stellung zur Azogruppe gebunden enthalten und deren Diazokomponentenrest in ortho-Stellung zur Azogruppe ein Wasserstoffatom oder eine Hydroxygruppe oder eine niedere Alkoxygruppe, wie Methoxygruppe, gebunden enthält und die zudem einen Acylaminorest gebunden enthalten, wie einen Acetylaminorest entsprechend der allgemeinen Formel -N($R^{\alpha}$)-Acyl , in welcher Acyl für den Acylrest einer organischen Säure, wie einer niederen Alkancarbonsäure, steht und $R^{\alpha}$ eine der obengenannten Bedeutungen besitzt, so beispielsweise von einer Ausgangsverbindung entsprechend der allgemeinen Formel (29)

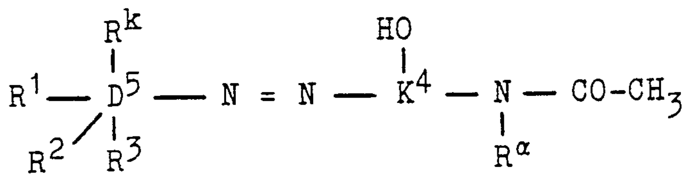

(29)

aus, in welcher $R^1$, $R^2$, $R^3$, $D^5$, $K^4$ und $R^{\alpha}$ eine der obengenannten Bedeutungen haben und $R^k$ ein Wasserstoffatom oder eine in ortho-Stellung zur Azogruppe an $D^5$ gebundene Hydroxy- oder Methoxygruppe ist, und setzt diese acylaminogruppenhaltige Ausgangs-Azoverbindung analog bekannten und üblichen Verfahrensweisen mit einem Schwermetall-abgebenden Mittel, wie einem Schwermetallsalz, um oder unterwirft sie im Falle der Bildung eines Kupferkomplex-Azofarbstoffes auch einer auf üblichem Wege durchzuführenden oxidativen oder entalkylierenden Kupferungsreaktion. Die nun erhaltenen Schwermetallkomplex-Azoverbindungen mit der Acylaminogruppe können sodann analog bekannten Verfahrensweisen unter Verseifung (Hydrolyse) der Acylaminogruppe zur Aminogruppe mit einem Cyanurhalogenid und der faserreaktiven Aminoverbindung entsprechend der allgemeinen Formel (24) zu den erfindungsgemäßen Farbstoffen der allgemeinen Formel (3) umgesetzt werden.

Die erfindungsgemäßen Anthrachinonfarbstoffe entsprechend der allgemeinen Formel (18) werden in der Regel erfindungsgemäß beispielsweise so hergestellt, daß man eine Verbindung der allgemeinen Formel (30)

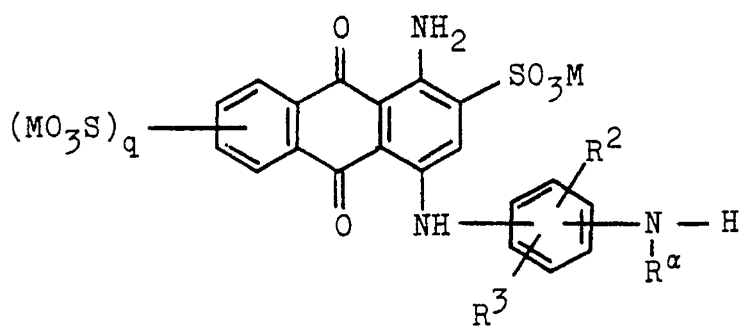

(30)

in welcher M, q, $R^2$, $R^3$ und $R^{\alpha}$ die obengenannten Bedeutungen haben, mit Cyanurchlorid und mit einem Amin der allgemeinen Formel (24) gemäß den anfangs erwähnten Verfahrensbedingungen umsetzt. Die Ausgangsverbindungen der allgemeinen Formel (30) sind in der Literatur vielfach beschrieben, und nicht beschriebene Verbindungen können in analoger Weise hergestellt werden, so beispielsweise durch Umsetzung von 1-Amino-2-sulfo-4-brom-anthrachinon oder dessen zusätzlich sulfiertem Produkt mit einer Diaminoverbindung oder deren Monoacylamino-Derivat entsprechend der allgemeinen Formel (31)

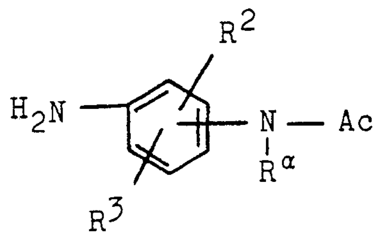

(31)

in welcher $R^2$, $R^3$ und $R^\alpha$ die obengenannten Bedeutungen haben und der Rest Ac ein Wasserstoffatom oder einen Acylrest Acyl der oben angegebenen Bedeutung steht, wobei nach erfolgter Kondensationsreaktion eine gegebenenfalls vorhandene Acylgruppe in üblicher Weise hydrolytisch abgespalten werden kann. Solche Verfahrensweisen sind bspw. in der US-PS 4 088 441 beschrieben.

Diamine entsprechend der allgemeinen Formel (31) mit Ac gleich einem Wasserstoffatom sind beispielsweise 1,4-Diamino-benzol-sulfonsäure, 2,4-Diamino-toluol-6-sulfonsäure, 2,6-Diamino-toluol-4-sulfonsäure, 3,5-Diamino-2,4,6-trimethyl-benzol-sulfonsäure, 1,4-Phenylen-diamin, 2,5-Diamino-benzol-carbonsäure, 2,5-Diamino-benzol-sulfonsäure und 2,4-Diamino-benzol-carbonsäure.

Die erfindungsgemäßen Phthalocyaninfarbstoffe entsprechend der allgemeinen Formel (19) werden erfindungsgemäß in der Regel so hergestellt, indem man ein Phthalocyaninsulfochlorid der allgemeinen Formel (32)

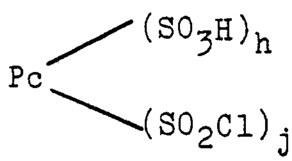

(32)

in welcher Pc die obengenannte Bedeutung besitzt, h für eine ganze oder gebrochene Zahl von Null bis 2 und j eine ganze oder gebrochene Zahl von 2 bis 4 ist, wobei die Summe von (h + j) gleich eine ganze oder gebrochene Zahl von 2 bis 4 bedeutet, mit einer Aminoverbindung der allgemeinen Formel $HNR^\beta$-$P_1$-Z mit $R^\beta$, $P_1$ und Z der obengenannten Bedeutung und gegebenenfalls mit einer Aminoverbindung der allgemeinen Formel $H_2NR^sR^t$ mit $R^s$ und $R^t$ der in Formel (19) angegebenen Bedeutung unter gegebenenfalls gleichzeitiger oder nachträglicher Hydrolyse von Sulfochloridgruppen zu Sulfogruppen kondensiert. Solche Verfahrensweisen der Umsetzung von Phthalocyanin-sulfochlorid-Verbindungen und Aminoverbindungen bei gegebenenfalls zusätzlicher Hydrolyse von Sulfochloridgruppen zu Sulfogruppen sind zahlreich in der Literatur beschrieben, so beispielsweise in der US-Patentschrift 4 745 187 und der darin diesbezüglich zusätzlich aufgeführten Literatur; die erfindungsgemäße Herstellung der Phthalocyaninfarbstoffe der Formel (19) kann in analoger Weise ausgeführt werden.

Die Farbstoffe der Formel (19) können auch erfindungsgemäß unter Anwendung der entsprechenden Verfahrensbedingungen, die für die Umsetzung von Phthalocyaninsulfochloriden bzw. von Dihalogentriazinylamino-Verbindungen mit Aminoverbindungen üblich sind, so hergestellt werden, daß man eine Verbindung der allgemeinen Formel (33)

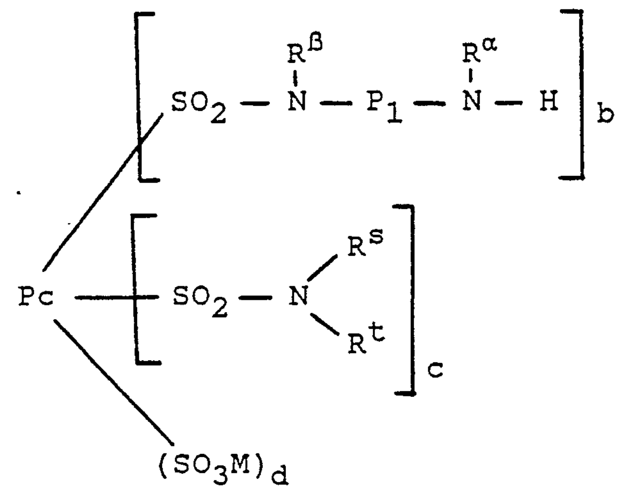

(33)

in welcher Pc, M, $R^{\beta}$, $P_1$, $R^{\alpha}$, $R^s$, $R^t$, b, c und d die in Formel (19) angegebenen Bedeutungen haben, gemäß der anfangs angegebenen Verfahrensweise mit Cyanurhalogenid und mit einer Aminoverbindung der allgemeinen Formel (24) umsetzt. Die Ausgangsverbindungen der allgemeinen Formel (33) können selbst in bekanner Weise durch Umsetzung eines Phthalocyaninsulfochlorids entsprechend der allgemeinen Formel (32) mit einer Aminoverbindung der allgemeinen Formel $HN(R^{\beta})-P_1-NH(R^{\alpha})$ mit $R^{\alpha}$, $R^{\beta}$ und $P_1$ der oben angegebenen Bedeutung synthetisiert werden.

Ausgangsverbindungen entsprechend der allgemeinen Formel $HN(R^{\beta})-P_1-NH(R^{\alpha})$ sind beispielsweise 1,3-Phenylen-diamin, 1,4-Phenylen-diamin, 2,4-Diamino-benzol-sulfonsäure, 2,5-Diamino-benzol-sulfonsäure, 2,5-Diamino-benzol-carbonsäure, 2,5-Diamino-benzol-1,4-disulfonsäure, 2,4-Diamino-toluol-6-sulfonsäure, Ethylendiamin und Hexamethylendiamin. Beispiele für Ausgangsfarbstoffe entsprechend der allgemeinen Formel (33) sind beispielsweise 3-[N-(3-Amino-4-sulfophenyl)-sulfamoyl]-kupferphthalocyanin-3′,3″,3‴-trisulfonsäure, Bis-4,4″-[N-(3-amino-4-sulfophenyl)-sulfamoyl]-kupferphthalocyanin-4″,4‴-disulfonsäure, 3-[N-(4-Amino-3-sulfophenyl)-sulfamoyl]-nickelphthalocyanin-3′,3″,3‴-trisulfonsäure, 3-[N-(3-Aminophenyl)-sulfamoyl]-3′-sulfamoyl-kupferphthalocyanin-3″,3‴-disulfonsäure und 3-(N-ß-Aminoethyl-sulfamoyl)-kupferphthalocyanin-3′,3″,3‴-trisulfonsäure.

Die erfindungsgemäßen Formazanfarbstoffe entsprechend der allgemeinen Formel (20) lassen sich in der anfangs beschriebenen erfindungsgemäßen Verfahrensweise durch Umsetzung der entsprechenden Amino-Formazan-Ausgangsverbindung entsprechend der allgemeinen Formel (34)

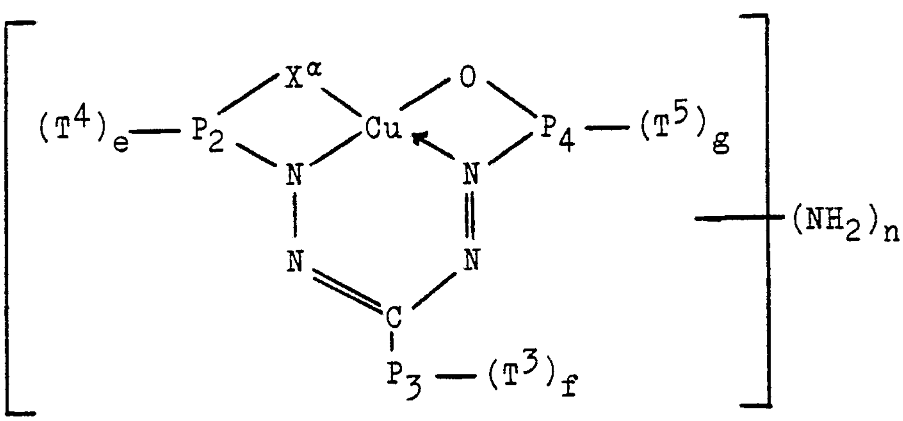

(34)

in welcher die einzelnen Formelglieder die für Formel (20) angegebenen Bedeutungen haben und die Aminogruppe bzw. beide Aminogruppen analog dem Rest Z an $P_2$, $P_4$ und/oder $P_3$ gebunden sind, mit einem Cyanurhalogenid und einer Aminoverbindung der allgemeinen Formel (24) herstellen.

Die Ausgangsverbindungen der allgemeinen Formel (34) sind in der Literatur beschrieben.

In gleicher Weise erfolgt erfindungsgemäß die Synthese der erfindungsgemäßen Triphendioxazin-Farbstoffe der allgemeinen Formel (21) durch Umsetzung einer aminogruppenhaltigen Triphendioxazinverbindung entsprechend der allgemeinen Formel (35)

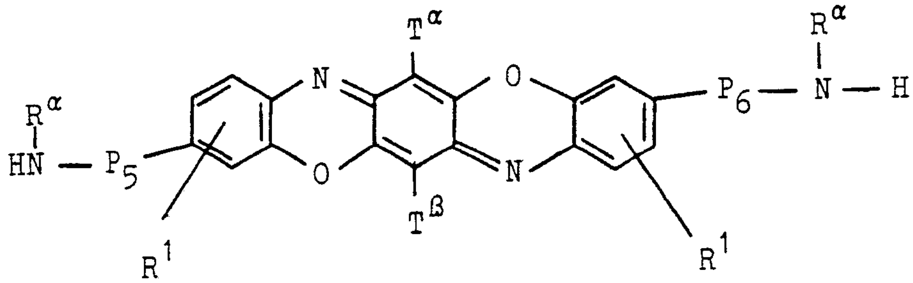

(35)

in welcher die einzelnen Formelglieder die für Formel (21) angegebenen Bedeutungen haben, mit einem Cyanurhalogenid und einem Amin der allgemeinen Formel (24). Die Ausgangsverbindungen der Formel (35) sind analog bekannten Verfahrensweisen, die beispielsweise in den deutschen Offenlegungsschriften Nrs. 2 122 262, 2 124 080, 2 302 382, 2 344 781, 2 503 611, 2 823 828 und 3 426 727 sowie in der britischen Patentschrift Nr. 2 019 872 beschrieben sind, durch Umsetzung eines Benzochinons, wie solchen in den obengenannten Schriften, insbesondere in der deutschen Offenlegungsschrift Nr. 3 426 727, beschrieben, vorzugsweise von 2,3,5,6-Tetrachlor-1,4-benzochinon, mit einer Aminoverbindung entsprechend der allgemeinen Formel (36)

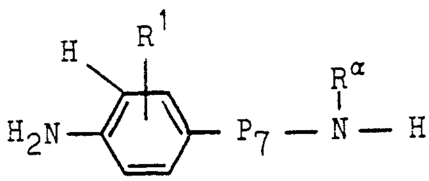

(36)

in welcher $R^1$ und $R^\alpha$ die obengenannten Bedeutungen haben und $P_7$ eine der Bedeutungen von $P_5$ und $P_6$ besitzt, erhältlich, wobei man vorzugsweise den Ringschluß zum Triphendioxazin-Körper in konzentrierter Schwefelsäure oder insbesondere Schwefeltrioxid enthaltender Schwefelsäure als Reaktionsmedium bei einer Temperatur zwischen 10 und 80° C, vorzugsweise zwischen 10 und 25° C, und gegebenenfalls unter Zusatz eines Oxidationsmittels, wie Kalium- oder Ammoniumperoxidisulfat, organischen Peroxiden, Wasserstoffperoxid oder Jod, durchführt.

Die Ausgangs-Aminoverbindungen der allgemeinen Formel (24) sind bekannt, beispielsweise aus der oben bereits erwähnten deutschen Offenlegungsschrift Nr. 3 426 727 und desweiteren aus der deutschen Offenlegungsschrift Nr. 3 404 855.

Die erfindungsgemäßen Farbstoffe, wie insbesondere die entsprechend der allgemeinen Formel (3), eignen sich als faserreaktive Farbstoffe zum Färben und Bedrucken von hydroxygruppenhaltigen Fasern, insbesondere von Baumwolle, ebenso auch für synthetische oder natürliche Polyamidfasern wie Wolle. Als Färbeverfahren eignen sich die bekannten Färbe- und Druckverfahren für faserreaktive Farbstoffe, insbesondere solche für faserreaktive Farbstoffe, die eine Kombination aus den faserreaktiven Gruppen der Fluortriazin- und Vinylsulfonreihe besitzen. Solche Verfahrensweisen sind zahlreich in der Allgemein- und Patentliteratur beschrieben, so beispielsweise in der europäischen Patentanmeldungs-Veröffentlichung Nr. 0 196 536A1. Insbesondere sind die erfindungsgemäßen Farbstoffe im Ausziehverfahren bei 40 bis 80° C und im Kaltverweilverfahren mit Vorteil anwendbar. Die Applikation ist in einem weiten Temperaturbereich möglich, und die Farbstoffe zeichnen sich durch eine hohe Farbtiefe und einen hohen Fixiergrad aus; deren Färbungen und Drucke besitzen hohe Echtheiten.

Die nachstehenden Beispiele dienen zur Erläuterung der Erfindung. Die darin genannten Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalisalze, in die Synthese eingesetzt werden.

Die für die erfindungsgemäßen Verbindungen angegebenen Absorptionsmaxima ($\lambda_{max}$) im sichtbaren Bereich wurden anhand derer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

**Beispiel 1**

Zu einer wäßrigen, salzsauren Lösung des Diazoniumsalzes aus 17,3 Teilen Anilin-4-sulfonsäure führt man bei 5°C eine wäßrige Suspension von 31,9 Teilen 1-Amino-3,6-disulfo-8-naphthol ein und führt die Kupplung bei einem pH-Wert zwischen 1 und 2 durch. Sodann gibt man die wäßrige, salzsaure Suspension des Diazoniumsalzes eines Kondensationsproduktes hinzu, das durch Umsetzung von 18,8 Teilen 1,3-Phenylendiamin-4-sulfonsäure mit 18,4 Teilen Cyanurchlorid bei einem pH-Wert von 2,5 und einer Temperatur von 10°C erhalten wird. Die zweite Kupplungsreaktion wird bei einem pH-Wert zwischen 5 und 6 ausgeführt. Danach gibt man eine Lösung von 45,8 Teilen 4-(ß-Hydroxyethylsulfonyl)-1-(ß-aminoethyl)-benzol hinzu und führt die Kondensationsreaktion bei einem pH-Wert zwischen 9 und 9,5 und einer Temperatur von 80°C zu Ende. Man läßt den Ansatz sodann abkühlen, stellt ihn neutral und salzt die entstandene erfindungsgemäße Azoverbindung mit Natriumchlorid aus.

Sie wird abgesaugt, getrocknet und sodann mittels Schwefelsäure bei 20 bis 25°C verestert. Der Ansatz wird auf Eis gegeben, die ausgefallene Verbindung abgesaugt, wiederum in Wasser aufgenommen und mit Natriumbicarbonat auf einen pH 5 eingestellt, wiederum mit Natriumchlorid ausgesalzen und in üblicher Weise isoliert.
Man erhält ein schwarzes, elektrolythaltiges Pulver des Alkalimetallsalzes der Verbindung der Formel

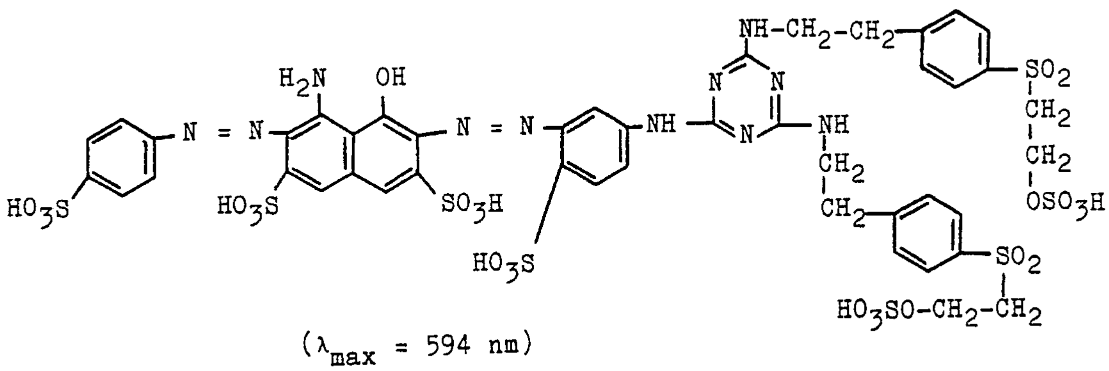

($\lambda_{max}$ = 594 nm)

die sehr gute faserreaktive Farbstoffeigenschaften besitzt und beispielsweise Baumwolle nach den für faserreaktive Farbstoffe üblichen Färbe- und Druckverfahren in echten marineblauen Tönen färbt.

**Beispiele 2 bis 15**

In den nachfolgenden Tabellenbeispielen sind weitere erfindungsgemäße Disazoverbindungen entsprechend einer allgemeinen Formel (A)

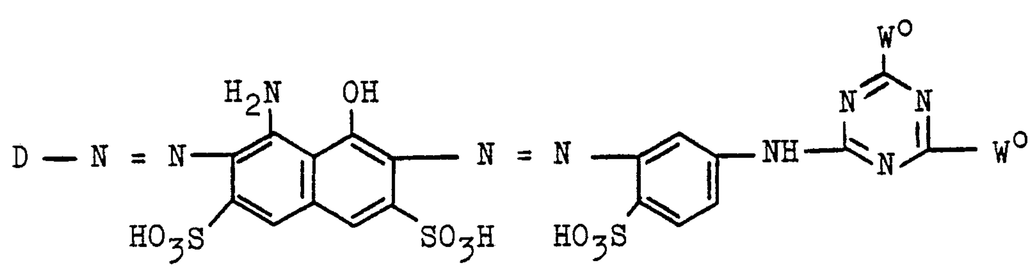

(A)

worin W° den Rest der Aminoverbindung der Formel (24) bedeutet,
mit Hilfe der dort angegebenen Komponenten beschrieben. Sie lassen sich in erfindungsgemäßer Weise, beispielsweise analog dem Ausführungsbeispiel 1 unter Anwendung der sauer angekuppelten Diazokomponente D-$NH_2$ , 1-Amino-8-naphthol-3,6-disulfonsäure als bivalenter Kupplungskomponente, der 1,3-Phenylendiamin-4-sulfonsäure, Cyanurchlorid und dem Amin der allgemeinen Formel (24) herstellen. Diese neuen Verbindungen entsprechend der allgemeinen Formel (3) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Diazokomponente $D-NH_2$ | Amin $H-W^o$ | Farbton |
|---|---|---|---|
| 2 | 2-Chlor-4-sulfo-anilin | 4-(ß-Sulfatoethylsulfonyl)-1-(ß-aminoethyl)-benzol | marineblau |
| 3 | 2-Chlor-4,6-disulfo-anilin | 4-(ß-Methylsulfonyloxy-ethyl-sulfonyl)-2-sulfo-1-(ß-aminoethyl)-benzol | rotstichig marineblau |
| 4 | 4-Chlor-2-sulfo-anilin | 4-(ß-Phosphatoethylsulfonyl)-1-(ß-aminoethyl)-benzol | rotstichig marineblau |
| 5 | 1,5-Disulfo-2-naphthylamin | 4-(ß-Sulfatoethylsulfonyl)-2-sulfo-1-(ß-aminoethyl)-benzol | grünstichig marineblau |
| 6 | 4-Ethylsulfonyl-anilin | 4-(ß-Sulfatoethylsulfonyl)-1-(ß-ethylamino)-benzol | rotstichig marineblau |
| 7 | 2-Methyl-4,6-disulfo-anilin | 4-(ß-Methylsulfonyloxy-ethyl-sulfonyl)-2-sulfo-1-(ß-amino-ethyl)-benzol | rotstichig marineblau |
| 8 | 3,6,8-Trisulfo-2-naphthylamin | 4-(ß-Sulfatoethylsulfonyl)-1-(ß-aminoethyl)-benzol | grünstichig marineblau |
| 9 | 4-(ß-Sulfatoethyl-sulfonyl)-anilin | dito | rotstichig marineblau |
| 10 | 2-Sulfo-anilin | dito | rotstichig marineblau |
| 11 | 3-[2'-Chlor-4'-(3"-sulfophenylamino)-s-triazin-6'-yl]-amino-6-sulfo-anilin | 4-(ß-Sulfatoethylsulfonyl)-2-sulfo-1-(ß-aminoethyl)-benzol | rotstichig marineblau |

| Bsp. | Diazokomponente $D-NH_2$ | Amin $H-W^0$ | Farbton |
|---|---|---|---|
| 12 | 3-[2'-Chlor-4'-(4"-ß-sulfatoethylsulfonyl-phenylamino)-s-triazin-6'-yl]-amino-6-sulfo-anilin | 4-(ß-Sulfatoethylsulfonyl)-1-(ß-aminoethyl)-benzol | rotstichig marineblau |
| 13 | Anilin | dito | rotstichig marineblau |
| 13a | 3-(ß-Sulfatoethylsulfonyl)-anilin | dito | dito |
| 14 | 2-Sulfo-4-(ß-sulfato-ethylsulfonyl)-anilin | dito | rotstichig marineblau |
| 15 | 5-Sulfo-3-(ß-sulfato-ethylsulfonyl)-anilin | dito | rotstichig marineblau |

**Beispiel 16**

81,4 Teile des tertiären Kondensationsproduktes aus 1,3-Phenylendiamin-4-sulfonsäure, Cyanurchlorid und 4-(ß-Sulfatoethylsulfonyl)-1-(ß-aminoethyl)-benzol werden in üblicher Weise in salzsaurer Lösung diazotiert, sodann zu einer Suspension von 30,8 Teilen 1-Amino-8-naphthol-3,6-disulfonsäure in 300 Teilen Wasser sauer gekuppelt. Die so hergestellte rote Monoazoverbindung wird anschließend mit 17,3 Teilen salzsauer diazotierter Anilin-4-sulfonsäure versetzt, der Ansatz neutral gestellt und die Kupplungsreaktion zum Disazofarbstoff im neutralen Bereich zu Ende geführt. Die erfindungsgemäße Verbindung wird durch Kaliumchlorid ausgefällt. Nach Trocknen erhält man ein schwarzes elektrolythaltiges Pulver mit dem Alkalimetallsalz der Verbindung der Formel

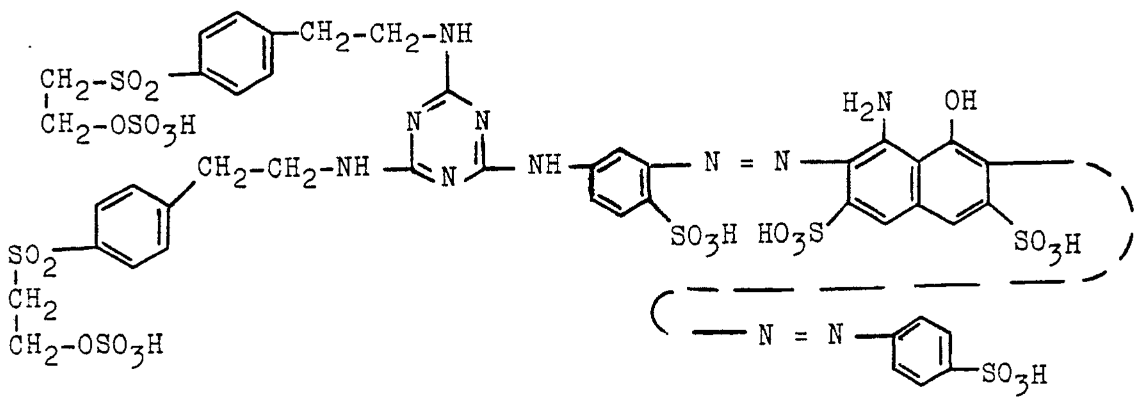

($\lambda_{max}$ = 580 nm)

die nach den in der Anwendungstechnik für faserreaktive Farbstoffe üblichen Färbe- und Druckverfahren auf Baumwolle rotstichig marineblaue Färbungen mit guter Echtheit liefert.

Das als Ausgangsverbindung dienende tertiäre Kondensationsprodukt wird wie folgt hergestellt: Man setzt 18,8 Teile 1,3-Phenylendiamin-4-sulfonsäure bei einem pH-Wert von 2,5 und einer Temperatur von 10 °C mit 18,4 Teilen Cyanurchlorid um. Danach gibt man 45,8 Teile 4-(ß-Hydroxyethylsulfonyl)-1-(ß-aminoethyl)-benzol hinzu und führt die beiden nachfolgenden Kondensationsreaktionen bei einem pH-Wert zwischen 9 und 9,5 und einer Temperatur von 80 °C durch. Nach Abkühlen des Ansatzes wird er neutralisiert und das tertiäre Kondensationsprodukt mit Natriumchlorid ausgesalzen, abfiltriert und getrocknet. Es wird sodann mittels Schwefelsäure bei 20 °C verestert. Anschließend wird dieser Ansatz auf Eis gegeben, das ausgefallene Produkt isoliert, wiederum in Wasser aufgenommen und mit Natriumbicarbonat auf einen pH von 5 gestellt. Die Ausgangsverbindung mit den ß-Sulfatoethylsulfonyl-Gruppen wird nun wiederum ausgesalzen und auf üblichem Wege isoliert.

**Beispiele 17 bis 27**

Weitere erfindungsgemäße Farbstoffe entsprechend einer allgemeinen Formel (B)

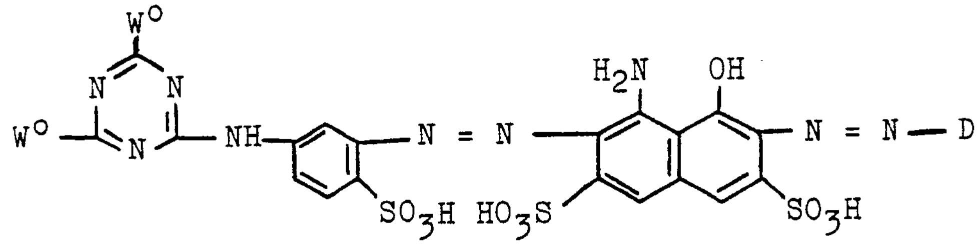

(B)

sind in den nachfolgenden Tabellenbeispielen 17 bis 27 mit Hilfe der dort angegebenen Komponenten beschrieben. Sie lassen sich in erfindungsgemäßer Weise, beispielsweise analog dem Ausführungsbeispiel 16 unter Anwendung der neutral angekuppelten Diazokomponente $D-NH_2$ , 1-Amino-8-naphthol-3,6-disulfonsäure als bivalenter Kupplungskomponente und dem Kondensationsprodukt aus 1,3-Phenylendiamin-4-sulfonsäure, Cyanurchlorid und dem Amin H-W° entsprechend der allgemeinen Formel (24)als sauer angekuppelter Diazokomponente, herstellen. Diese neuen Verbindungen entsprechend der allgemeinen

Formel (3) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Diazokomponente $D-NH_2$ | Amin $H-W^o$ | Farbton |
|---|---|---|---|
| 17 | 1,5-Disulfo-2-naphthylamin | 4-($\beta$-Phosphatoethylsulfonyl)-1-($\beta$-aminoethyl)-benzol | rotstichig marineblau |
| 18 | 2-Chlor-4,6-disulfoanilin | 4-($\beta$-Sulfatoethylsulfonyl)-1-($\beta$-aminoethyl)-benzol | rotstichig marineblau |
| 19 | 2-Chlor-4-sulfoanilin | 4-($\beta$-Methylsulfonyloxyethyl-sulfonyl)-2-sulfo-1-($\beta$-aminoethyl)-benzol | rotstichig marineblau |
| 20 | 2-Methyl-4,6-disulfoanilin | 4-($\beta$-Sulfatoethylsulfonyl)-1-($\beta$-aminoethyl)-benzol | rotstichig marineblau |
| 21 | 4-($\beta$-Sulfatoethysulfonyl)-anilin | dito | rotstichig marineblau |
| 22 | 2-Sulfo-anilin | dito | rotstichig marineblau |
| 23 | 3,6,8-Trisulfo-2-naphthylamin | 4-($\beta$-Sulfatoethylsulfonyl)-2-sulfo-1-($\beta$-aminoethyl)-benzol | rotstichig marineblau |
| 24 | Anilin | 4-($\beta$-Sulfatoethylsulfonyl)-1-($\beta$-aminoethyl)-benzol | rotstichig marineblau |
| 25 | 4-Sulfamoyl-anilin | dito | rotstichig marineblau |
| 26 | 4-($\beta$-Sulfatoethylsulfonyl)-anilin | dito | rotstichig marineblau |
| 27 | 3-($\beta$-Sulfatoethylsulfonyl)-anilin | dito | rotstichig marineblau |

**Beispiel 28**

18,8 Teile 1,3-Phenylendiamin-4-sulfonsäure werden mit 18,4 Teilen Cyanurchlorid bei einem pH-Wert von 2,5 und einer Temperatur von 10 °C kondensiert. Anschließend wird das Kondensationsprodukt mit 30 Teilen 1-(4'-Sulfophenyl)-3-carboxy-pyrazol-5-on versetzt; die Kupplungsreaktion erfolgt bei einem pH-Wert zwischen 5 und 7. Sodann gibt man eine wäßrige neutrale Lösung von 55,8 Teilen 4-(ß-Hydroxyethylsulfonyl)-1-ß-(aminoethyl)-benzol hinzu und führt die Kondensationsreaktion bei einer Temperatur von 80 °C und einem pH-Wert von 9 bis 9,5 durch. Nach beendeter Reaktion stellt man den Ansatz neutral und salzt die hergestellte Azoverbindung mit Natriumchlorid aus, saugt sie ab und trocknet sie und rührt sie sodann in Schwefelsäure von 20 °C ein, um die Hydroxyethylsulfonyl-Gruppen in die Sulfatoethylsulfonyl-Gruppen überzuführen. Der Ansatz wird danach auf Eis gegeben, die ausgefallene Sulfatoverbindung abgesaugt, wiederum in Wasser aufgenommen und mit Natriumbicarbonat auf einen pH-Wert von 5 gestellt, anschließend wiederum mit Natriumchlorid ausgesalzen, abgesaugt und getrocknet. Das erhaltene Alkalimetallsalz der Verbindung der Formel

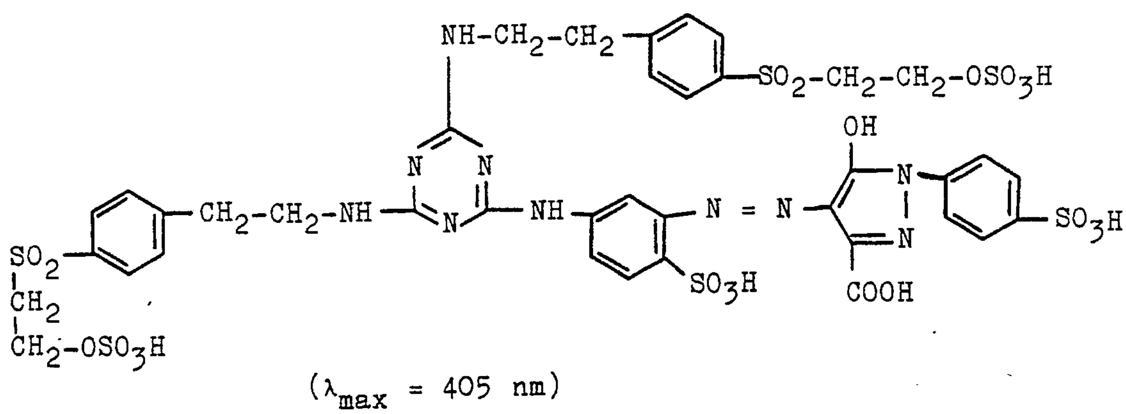

($\lambda_{max}$ = 405 nm)

färbt nach den für faserreaktive Farbstoffe üblichen Färbeverfahren Baumwolle in echten gelben Tönen.

**Beispiele 29 bis 40**

Weitere erfindungsgemäße Farbstoffe entsprechend einer allgemeinen Formel (C)

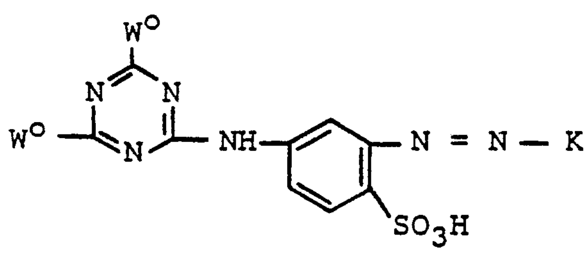

(C)

sind in den nachfolgenden Tabellenbeispielen 29 bis 40 mit Hilfe der dort angegebenen Komponenten beschrieben. Sie lassen sich in erfindungsgemäßer Weise, beispielsweise analog dem Ausführungsbeispiel 28 unter Anwendung des Kondensationsproduktes aus 1,3-Phenylendiamin-4-sulfonsäure, Cyanurchlorid und dem Amin H-W° entsprechend der allgemeinen Formel (24) als Diazokomponente Z-D-$NH_2$ und der Kupplüngskomponente H-K , herstellen. Diese neuen Verbindungen entsprechend der allgemeinen Formel (3) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Kupplungskomponente H-K | Amin $H-W^o$ | Farbton |
|---|---|---|---|
| 29 | 1-(2'-Methyl-4'-sulfophenyl)-3-carboxy-5-pyrazolon | 4-(β-Sulfatoethylsulfonyl)-1-(β-aminoethyl)-benzol | gelb |
| 30 | 3,6-Disulfo-1-naphthol | dito | orange |
| 31 | 3,8-Disulfo-1-naphthol | dito | scharlach |
| 32 | 4,8-Disulfo-1-naphthol | dito | gelbstichig rot |
| 33 | 1-Naphthol-7-(3'-sulfophenyl)-amino-3-sulfonsäure | dito | braun |
| 34 | dito | 4-(β-Methylsulfonyloxy-ethyl-sulfonyl)-2-sulfo-1-(β-aminoethyl)-benzol | braun |
| Bsp. | Kupplungskomponente H-K | Amin $H-W^o$ | Farbton |
| 35 | 1-Ethyl-2-hydroxy-4-methyl-5-carbamoyl-6-pyridon | 4-(β-Sulfatoethylsulfonyl)-1-(β-aminoethy)-benzol | gelb |
| 36 | 1-(4'-Sulfophenyl)-3-carboxy-5-pyrazolon | 4-(β-Phosphatoethylsulfonyl)-1-(β-aminoethyl)-benzol | gelb |
| 37 | dito | 4-(β-Sulfatoethylsulfonyl)-2-sulfo-1-(β-aminoethyl)-benzol | gelb |
| 38 | dito | 4-(β-Methylsulfonyloxy-ethyl-sulfonyl)-2-sulfo-1-(β-aminoethyl)-benzol | gelb |
| 39 | dito | 4-(β-Phosphatoethylsulfonyl)-2-sulfo-1-(β-aminoethyl)-benzol | gelb |
| 40 | 1-Sulfoethyl-2-hydroxy-4-methyl-6-pyridon | 4-(β-Sulfatoethylsulfonyl)-1-(β-aminoethyl)-benzol | gelb . |

**Beispiele 41 bis 50**

Weitere erfindungsgemäße Farbstoffe entsprechend einer allgemeinen Formel (D)

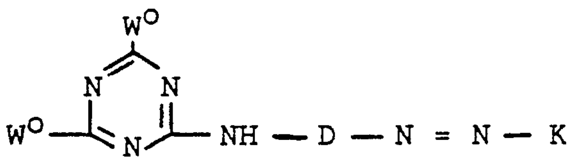

(D)

sind in den nachfolgenden Tabellenbeispielen 41 bis 50 mit Hilfe der dort angegebenen Komponenten beschrieben. Sie lassen sich in erfindungsgemäßer Weise, beispielsweise analog dem Ausführungsbeispiel 28 unter Anwendung des Kondensationsproduktes aus einer Diaminobenzolsulfonsäure entsprechend der Formel $H_2N$-D-$NH_2$ , Cyanurchlorid und dem Amin H-$W^o$ entsprechend der allgemeinen Formel (24) als Diazokomponente Z-D-$NH_2$ und der Kupplungskomponente H-K , herstellen. Diese neuen Verbindungen entsprechend der allgemeinen Formel (3) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Kupplungskomponente H-K | Diaminobenzolsulfonsäure | Amin H-W° | Farbton |
|---|---|---|---|---|
| 41 | 1-(4'-Sulfophenyl)-3-carboxy-5-pyrazolon | 1,4-Diaminobenzol-2,5-disulfonsäure | 4-(β-Sulfatoethylsulfonyl)-1-(β-aminoethyl)-benzol | gelb |
| 42 | 1-(4'-β-Sulfatoethyl-sulfonyl-phenyl)-3-carboxy-5-pyrazolon | dito | dito | gelb |
| 43 | 1-Phenyl-3-carboxy-5-pyrazolon | 1,3-Diaminobenzol-4,6-disulfonsäure | dito | gelb |
| 44 | 1,4-Dimethyl-2-hydroxy-3-sulfo-6-pyridon | dito | | grünstichig gelb |
| 45 | 1-Ethyl-4-methyl-3-carbamoyl-2-hydroxy-6-pyridon | dito | 4-(β-Sulfatoethylsulfonyl)-2-Sulfo-1-(. β-aminoethyl)-benzol | grünstichig gelb |
| 46 | dito | dito | 4-(β-Phosphatoethylsulfonyl)-1-(β-aminoethyl)-benzol | grünstichig gelb |
| 47 | dito | dito | 4-(β-Methylsulfonyloxy-ethylsulfonyl-)-2-sulfo-1-(β-amino-ethyl)-benzol | grünstichig gelb |
| 48 | dito | 1,4-Diaminobenzol-6-sulfonsäure | 4-(β-Sulfatoethylsulfonyl)-1-(β-aminoethyl)-benzol | grünstichig gelb |
| 49 | 1-Butyl-4-methyl-3-carbamoyl-6-hydroxy-2-pyridon | dito | dito | grünstichig gelb |
| 50 | 1-Ethyl-4-methyl-3-sulfomethyl-6-hydroxy-2-pyridon | 1,3-Diaminobenzol-4-sulfonsäure | dito | grünstichig gelb |

**Beispiel 51**

Eine Lösung von 48,3 Teilen 1-(4′-Sulfophenyl)-3-carboxy-4-(4′-amino-2′-sulfo-phenyl-1′-azo)-5-pyrazolon in 750 Teilen Eiswasser wird bei einer Temperatur zwischen 0 und 5° C und einem pH-Wert von 5 mit 19 Teilen Cyanurchlorid umgesetzt. Sobald keine freien Aminogruppen mehr nachweisbar sind, werden 55,8 Teile 4-(ß-Hydroxyethylsulfonyl)-1-(ß-aminoethyl)-benzol hinzugegeben, und die Kondensationsreaktion wird bei 80° C und einem pH-Wert von 9 bis 9,5 durchgeführt. Nach beendeter Kondensationsreaktion wird der Ansatz neutral gestellt und die Azoverbindung mit Natriumchlorid ausgesalzen, abgesaugt und getrocknet. Sie wird sodann mit Schwefelsäure bei 20° C verestert. Dieser Ansatz wird anschließend auf Eis gegeben, die ausgefallene Verbindung abgesaugt, in Wasser aufgenommen und mit Natriumbicarbonat auf einen pH-Wert von 5 gestellt, wiederum mit Natriumchlorid ausgesalzen, abfiltriert und getrocknet. Es wird ein elektrolythaltiges Pulver des Alkalimetallsalzes des Azofarbstoffes der Formel

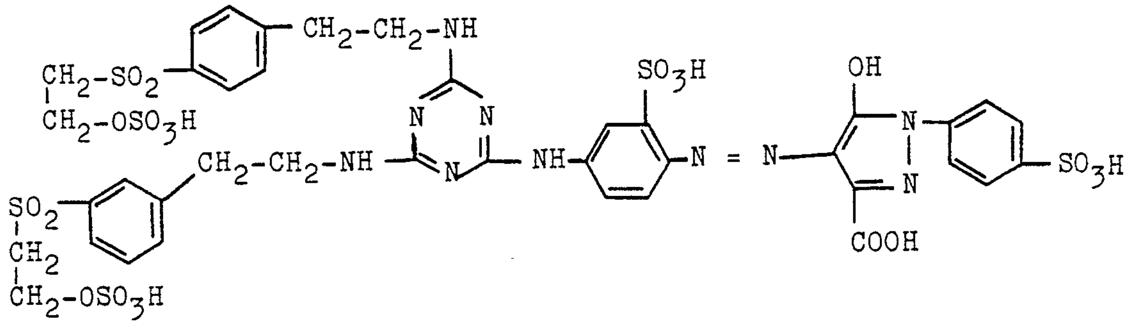

erhalten, der nach üblichen Färbeverfahren für faserreaktive Farbstoffe Baumwolle in echten goldgelben Tönen färbt.

**Beispiel 52**

30,3 Teile 2-Aminonaphthalin-4,6-disulfonsäure werden salzsauer diazotiert und mit 15 Teilen 3-Acetylamino-anilin gekuppelt. Diese Azoverbindung wird mit 19 Teilen fein dispergiertem Cyanurchlorid bei einer Temperatur von 40° C und einem pH-Wert von 7 acetyliert, das Monokondensationsprodukt mit 55,8 Teilen 4-(ß-Hydroxyethylsulfonyl)-1-(ß-aminoethyl)-benzol umgesetzt. Der Ansatz wird anschließend neutral gestellt und die gebildete Azoverbindung mit Natriumchlorid ausgesalzen, isoliert und gemäß den Angaben des Beispieles 51 in die Sulfatoform übergeführt und isoliert. Man erhält das Alkalimetallsalz der Verbindung der Formel

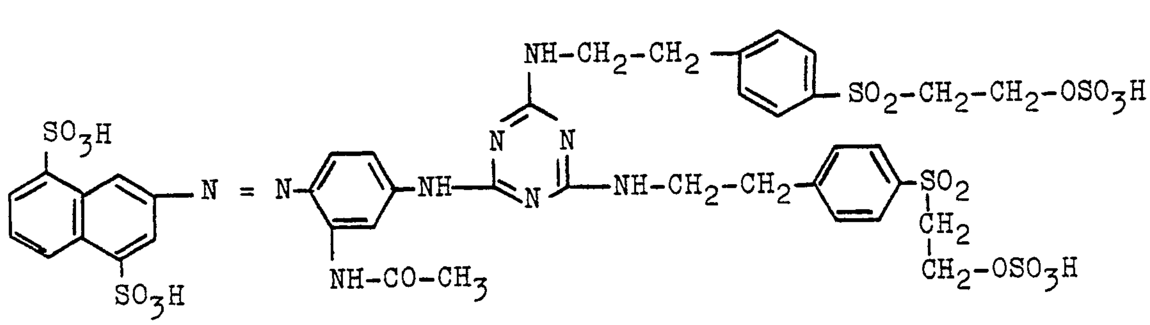

($\lambda_{max}$ = 403 nm)

das nach üblichen Färbeverfahren für faserreaktive Farbstoffe Baumwolle in echten rotstichig gelben Tönen färbt.

**Beispiele 53 bis 71**

Weitere erfindungsgemäße Farbstoffe entsprechend einer allgemeinen Formel (E)

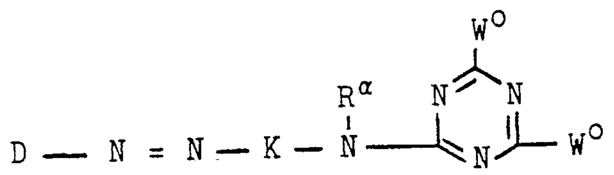

(E)

in welchen W° für den Rest des Ausgangsamins (24), D der Rest der Diazokomponente ohne faserreaktive Gruppe und K den Rest einer aminogruppenhaltigen Kupplungskomponente entsprechend der Formel H-K-NH$R^{\alpha}$ ist, sind in den nachfolgenden Tabellenbeispielen mit Hilfe der dort angegebenen Komponenten beschrieben. Sie lassen sich in erfindungsgemäßer Weise, beispielsweise analog dem Ausführungsbeispiel 52, unter Anwendung der Diazokomponente D-$NH_2$ , der Kupplungskomponente H-K-NH$R^{\alpha}$ , Cyanurchlorid und dem Amin der allgemeinen Formel (24) herstellen. Diese neuen Verbindungen entsprechend der allgemeinen Formel (3) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Diazokomponente $D-NH_2$ | Kupplungskomponente $H-K-NHR^{\alpha}$ | Amin $H-W^{o}$ | Farbton |
|---|---|---|---|---|
| 53 | 6,8-Disulfo-2-amino-naphthalin | 3-Acetylamino-anilin | 4-(ß-Sulfatoethylsulfonyl)-1-(ß-aminoethyl)-benzol | goldgelb |
| 54 | dito | 3-Propionylamino-anilin | dito | goldgelb |
| 55 | 3,6,8-Trisulfo-2-amino-naphthalin | 3-Amino-phenylharnstoff | dito | goldgelb (422) |
| 56 | dito | dito | 4-(ß-Sulfatoethylsulfonyl)-2-sulfo-1-(aminoethyl)-benzol | goldgelb |
| 57 | dito | dito | 4-(Methylsulfonyloxy-ethylsulfonyl)-2-sulfo-1-(ß-amino-ethyl)-benzol | goldgelb |
| 58 | dito | dito | 4-(ß-Phosphatoethylsulfo-nyl)-1-(ß-aminoethyl)-benzol | goldgelb |
| 59 | dito | N-Phenyl-N'-(3-aminophenyl)-harnstoff | 4-(ß-Sulfatoethylsulfonyl)-1-(ß-aminoethyl)-benzol | goldgelb |
| 60 | dito | N-(3-Aminophenyl)-N'-methyl-harnstoff | dito | goldgelb |
| 61 | 4,8-Disulfo-2-amino-naphthalin | N-Cyclohexyl-N'-(3-aminophe-nyl)-harnstoff | dito | goldgelb |
| 62 | dito | dito | 4-(Methylsulfonyloxy-ethylsulfonyl)-2-sulfo-1-(ß-amino-ethyl)-benzol | goldgelb |

| Bsp. | Diazokomponente $D-NH_2$ | Kupplungskomp. $H-K-NHR^{\alpha}$ | Amin $H-W^{o}$ | Farbton |
|---|---|---|---|---|
| 63 | 4,8-Disulfo-2-amino-naphthalin | 2-Methoxy-5-methyl-anilin | 4-(ß-Sulfatoethylsulfonyl)-1-(ß-aminoethyl)-benzol | goldgelb (404) |
| 64 | dito | 3-Methylsulfonylamino-anilin | 4-(ß-Sulfatoethylsulfonyl)-1-(ß-aminoethyl)-benzol | goldgelb |
| 65 | 1,6-Disulfo-2-amino-naphthalin | 3-Amino-phenylharnstoff | dito | goldgelb |
| 66 | dito | N-(3-Aminophenyl)-N'-methyl-harnstoff | dito | goldgelb |
| 67 | 3,6,8-Trisulfo-2-amino-naphthalin | 3-Acetylamino-anilin | dito | goldgelb (451) |
| 68 | dito | 3-Methyl-anilin | dito | gelb (388) |
| 69 | 4,6,8-Trisulfo-2-amino-naphthalin | 3-Acetylamino-anilin | dito | goldgelb (449) |
| 70 | dito | 3-Methyl-anilin | dito | gelb (389) |
| 71 | dito | 3-Amino-phenylharnstoff | dito | gelb (402) |

**Beispiel 72**

Eine Lösung mit einem pH-Wert von 6,5 von 42 Teilen der bekannten Aminodisazoverbindung der Formel

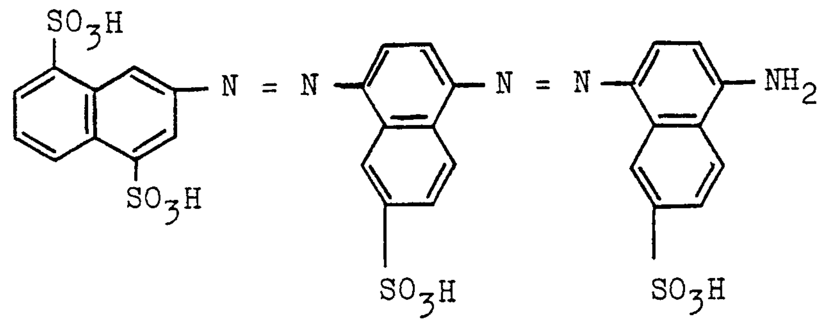

in 300 Teilen Wasser werden bei 0 bis 5° C und bei einem pH-Wert von 6,5 mit 10,5 Teilen Cyanurchlorid umgesetzt. Das entstandene Produkt wird anschließend mit 25,3 Teilen 4-(ß-Hydroxyethylsulfonyl)-1-(ß-aminoethyl)-benzol bei einer Temperatur von 80° C und einem pH-Wert zwischen 9 und 9,5 umgesetzt. Das tertiäre Kondensationsprodukt wird anschließend, wie im Beispiel 51 beschrieben, isoliert, in die Sulfatoform überführt und wiederum als Alkalimetallsalz isoliert. Man erhält das elektrolythaltige Farbstoffpulver des Alkalimetallsalzes der Disazoverbindung

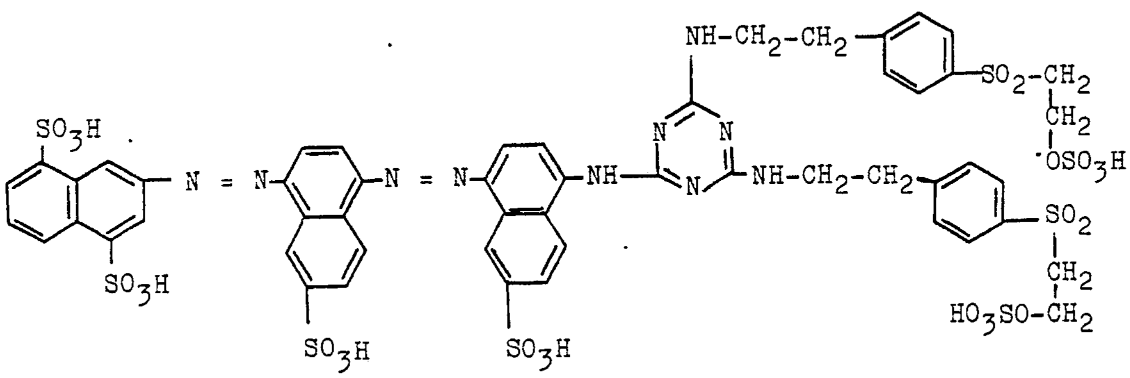

die Baumwolle in echten rötlich-braunen Tönen färbt.

**Beispiel 73 bis 84**

In den nachfolgenden Tabellenbeispielen sind weitere erfindungsgemäße Farbstoffe entsprechend einer allgemeinen Formel F-Z beschrieben, die in erfindungsgemäßer Weise, so analog dem Ausführungsbeispiel 72, durch Umsetzung des. in dem jeweiligen Tabellenbeispiel aus dem formelmäßig angegebenen Rest F ersichtlichen Ausgangs-Aminodisazo-Farbstoffes entsprechend der allgemeinen Formel F-$NH_2$ mit Cyanurchlorid und 4-(ß-Sulfatoethylsulfonyl)-1-(ß-aminoethyl)-benzol hergestellt werden können. Sie besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Rest F- | Farbton |
|---|---|---|
| 73 | 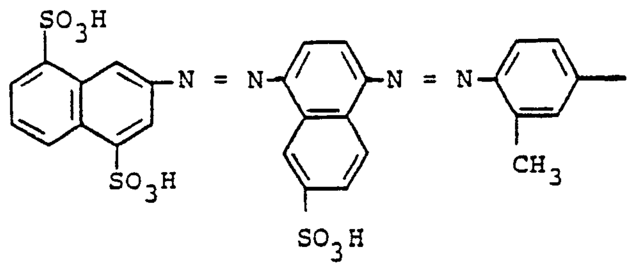 | braun |
| 74 | 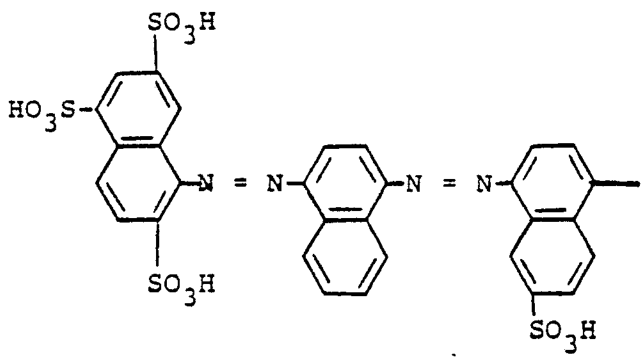 | rotbraun |
| 75 | 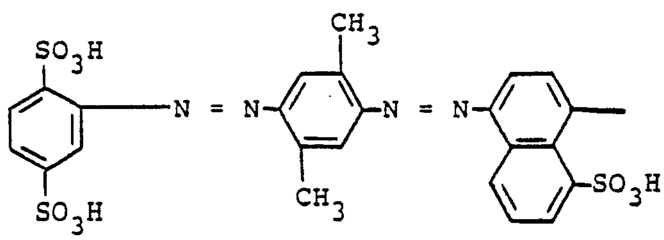 | orangebraun |
| 76 | 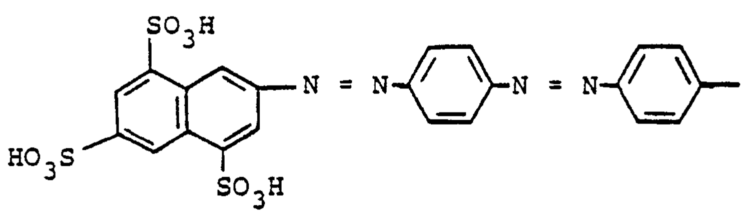 | orangebraun |
| 77 | 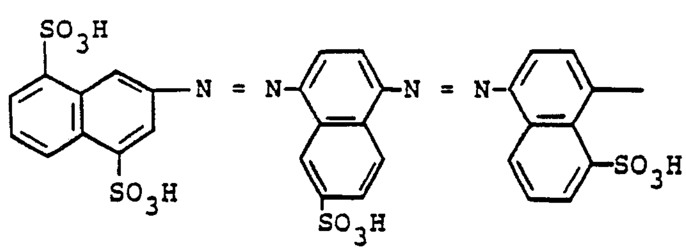 | rotbraun |

| Bsp. | Rest F- | Farbton |
|---|---|---|
| 78 | 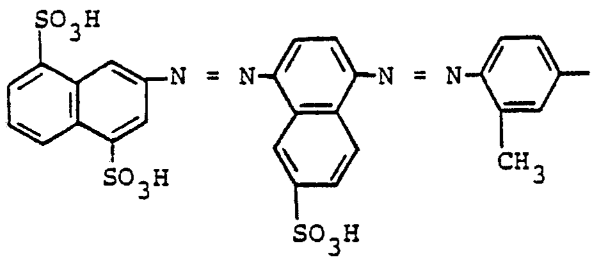 | rotbraun |
| 79 | 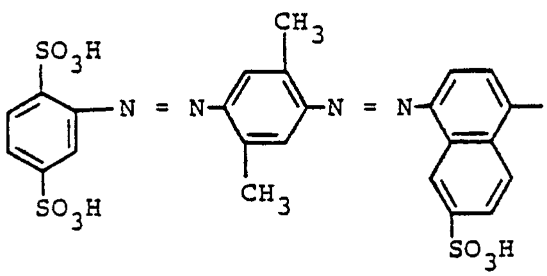 | orangebraun |
| 80 | 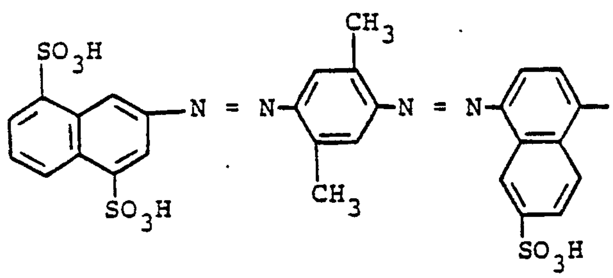 | braun |
| 81 | 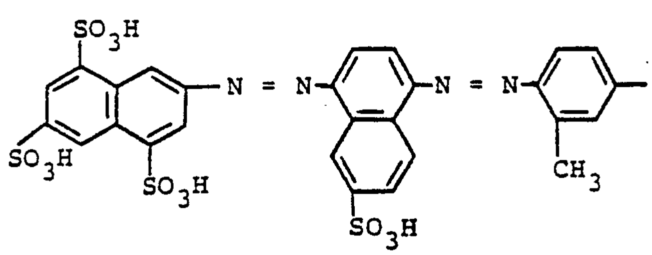 | braun |
| 82 | 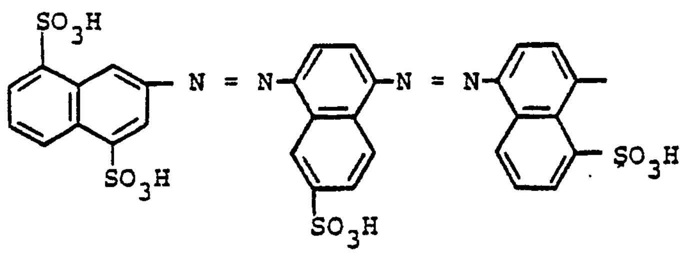 | rotbraun |

| Bsp. | Rest F- | Farbton |
|---|---|---|
| 83 | 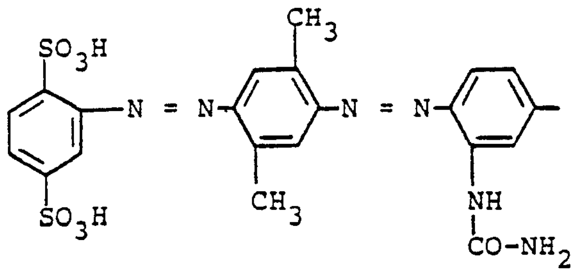 | orange |
| 84 | 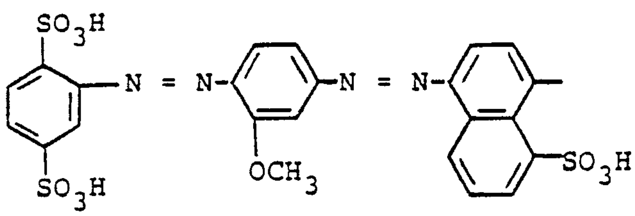 | rotbraun |

**Beispiel 85**

Das Kondensationsprodukt aus 1,3-Diaminobenzol-4-sulfonsäure und Cyanurchlorid wird in bekannter Weise diazotiert, und das Diazoniumsalz wird bei einem pH-Wert zwischen 7 und 7,5 mit 2-(p-Sulfophenylamino)-6-sulfo-8-naphthol gekuppelt. Anschließend wird die so erhaltene Azoverbindung bei einem pH-Wert zwischen 9 und 9,5 mit 4-(ß-Sulfatoethylsulfonyl)-1-(ß-aminoethyl)-benzol bei 80 °C in üblicher Weise umgesetzt und, wie im Beispiel 51 beschrieben, in die Sulfatoform überführt und isoliert. Es wird das Alkalimetallsalz der Verbindung der Formel

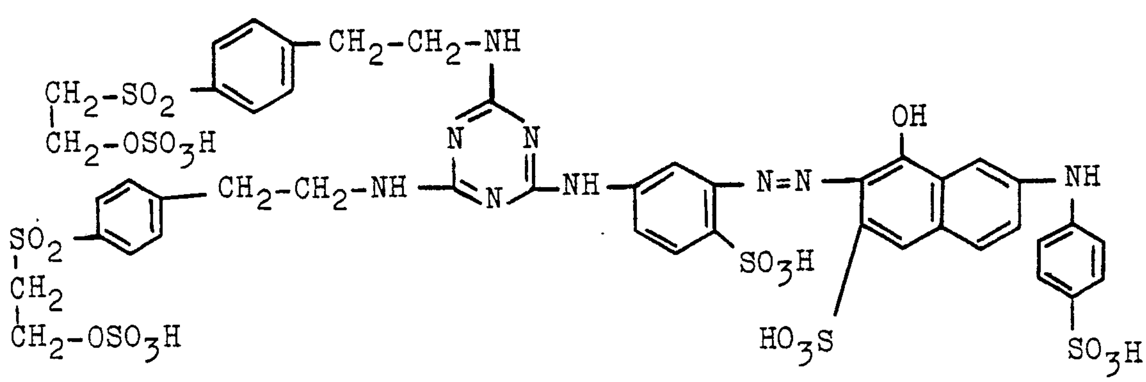

erhalten, das Baumwolle in den für faserreaktive Farbstoffe üblichen Applikations- und Fixierverfahren in echten braunen Tönen färbt.

**Beispiel 86**

95 Teile Cyanurchlorid werden in bekannte Weise mit 1-Amino-3,6-disulfo-8-naphthol in Wasser zum Monokondensationsprodukt umgesetzt, das sodann mit der Lösung des Diazoniumsalzes von 1-Aminobenzol-2-sulfonsäure in entsprechend äquivalenter Menge versetzt wird; die Kupplungsreaktion erfolgt

bei einem pH-Wert zwischen 4 und 4,5. Nach beendeter Kupplung werden 236 Teile 4-(ß-Hydroxyethylsulfonyl)-1-(ß-aminoethyl)-benzol hinzugegeben und die Kondensationsreaktion bei einem pH-Wert zwischen 9 und 9,5 und bei 80 °C durchgeführt. Die so erhaltene Azoverbindung mit den ß-Hydroxyethylsulfonyl-Gruppen wird analog den Angaben des Beispieles 51 in die Sulfatoform überführt und isoliert. Man erhält das Natriumsalz der Verbindung der Formel

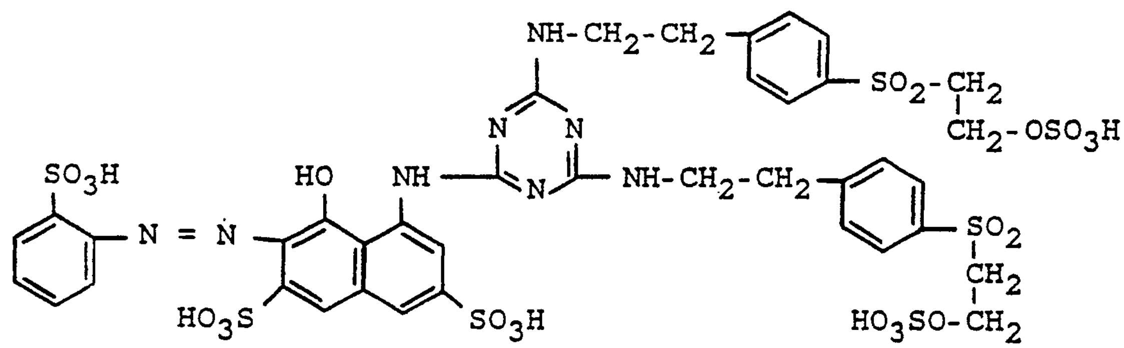

erhalten, das Baumwolle in leuchtend roten, echten Tönen färbt.

**Beispiel 87 bis 121**

Weitere erfindungsgemäße Farbstoffe entsprechend einer allgemeinen Formel (F)

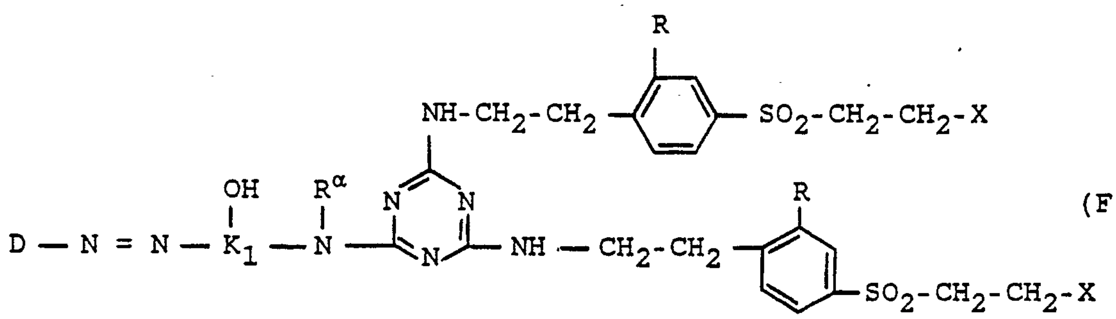

(F)

sind in den nachfolgenden Tabellenbeispielen mit Hilfe der in Formel (F) angegebenen Formelreste beschrieben. Sie lassen sich in erfindungsgemäßer Weise, beispielsweise analog dem Ausführungsbeispiel 86, unter Anwendung der Diazokomponente $D-NH_2$ , der Aminonaphthol-sulfonsäure entsprechend einer Formel $H(OH)K_1-NHR^{\alpha}$ als naphtholischer Kupplungskomponente sowie Cyanurchlorid und dem entsprechenden Amin der allgemeinen Formel (24) herstellen. Diese neuen Verbindungen entsprechend der allgemeinen Formel (3) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Rest D | Kupplungskomponente $H(OH)K_1-NHR^{\alpha}$ | Subst. R | Rest X | Farbton |
|---|---|---|---|---|---|
| 87 | Phenyl | 1-Amino-3,6-disulfo-8-naphthol | Wasserstoff | Sulfato | rot |
| 88 | dito | dito | Sulfo | Methyl-sulfonyloxy | rot |
| 89 | dito | dito | Wasserstoff | Phosphato | rot |
| 90 | 2-Chlor-phenyl | dito | dito | Sulfato | rot |
| 91 | 3-Methyl-phenyl | dito | dito | dito | rot |
| 92 | 4-Methoxy-2-sulfo-phenyl | dito | dito | dito | blaustichig rot |
| 93 | 4-Phenoxy-2-sulfo-phenyl | dito | dito | dito | dito |
| 94 | 4-Ethoxy-phenyl | dito | dito | dito | dito |
| 95 | 4-Methoxy-phenyl | dito | dito | dito | dito |
| 96 | 4-Methyl-2-sulfo-phenyl | dito | dito | dito | dito |
| 97 | 4-Sulfo-phenyl | dito | dito | dito | rot |
| 98 | 3-Sulfo-phenyl | dito | dito | dito | rot |
| 99 | 1,5-Disulfo-2-naphthyl | dito | dito | dito | rot |
| 100 | 4,8-Disulfo-2-naphthyl | dito | dito | dito | rot |

| Bsp. | Rest D | Kupplungskomponente $H(OH)K_1-NHR^{\alpha}$ | Subst. R | Rest X | Farbton |
|---|---|---|---|---|---|
| 101 | 4-Sulfo-1-naphthyl | 1-Amino-3,6-disulfo-8-naphthol | Wasserstoff | Sulfato | rot |
| 102 | 6-Sulfo-1-naphthyl | dito | dito | dito | rot |
| 103 | 1-Sulfo-2-naphthyl | dito | dito | dito | rot |
| 104 | 5-Sulfo-2-naphthyl | dito | Sulfo | Methylsulfonyloxy | rot |
| 105 | 6-Sulfo-2-naphthyl | dito | Wasserstoff | Sulfato | rot |
| 106 | Phenyl | 1-Amino-4,6-disulfo-8-naphthol | dito | dito | scharlach |
| 107 | 2-Sulfo-phenyl | dito | dito | dito | scharlach |
| 108 | dito | 1-Amino-4-sulfo-8-naphthol | dito | dito | scharlach |
| 109 | dito | dito | Sulfo | Methylsulfonyloxy | scharlach |
| 110 | dito | 2-Amino-6-sulfo-8-naphthol | Wasserstoff | Sulfato | rot |
| 111 | Phenyl | 1-Amino-2,4-disulfo-8-naphthol | dito | dito | rot |
| 112 | 4-Sulfo-phenyl | 2-Amino-7-sulfo-5-naphthol | dito | dito | orange |

| Bsp. | Rest D | Kupplungskomponente $H(OH)K_1-NHR^{\alpha}$ | Subst. R | Rest X | Farbton |
|---|---|---|---|---|---|
| 113 | 1,5-Disulfo-2-naphthyl | 2-Amino-7-sulfo-5-naphthol | Wasserstoff | Sulfato | rotorange (497) |
| 114 | 1,5-Disulfo-2-naphthyl | 2-Methylamino-7-sulfo-5-naphthol | Wasserstoff | Sulfato | orange |
| 115 | dito | dito | Sulfo | Methylsulfonyloxy | orange |
| 116 | 2,5-Disulfo-phenyl | 2-Amino-7-sulfo-5-naphthol | Wasserstoff | Sulfato | rot |
| 117 | 2-Sulfo-4-methyl-phenyl | dito | Wasserstoff | Sulfato | scharlach |
| 118 | 2-Sulfo-4-methoxy-phenyl | dito | Wasserstoff | Sulfato | scharlach (503) |
| 119 | dito | 2-Methylamino-7-sulfo-5-naphthol | Wasserstoff | Sulfato | orange |
| 120 | 4-(β-Sulfato-ethylsulfonyl)-phenyl | 1-Amino-3,6-disulfo-8-naphthol | Wasserstoff | Sulfato | rot |
| 121 | 3-(β-Sulfato-ethylsulfonyl)-phenyl | dito | Wasserstoff | Sulfato | rot |

**Beispiel 122**

Das Kondensationsprodukt aus 18,8 Teilen 1,3-Diaminobenzol-4-sulfonsäure mit 18,4 Teilen Cyanurchlorid wird auf übliche Weise diazotiert und auf 36,1 Teile 1-Acetylamino-8-naphthol-3,6-disulfonsäure gekuppelt. Anschließend werden 55,8 Teile 1-(ß-Hydroxyethylsulfonyl)-1-(ß-aminoethyl)-benzol hinzugegeben, und die Kondensationsreaktion erfolgt bei einer Temperatur von 80° C und einem pH-Wert zwischen 9 und 9,5. Die hergestellte Verbindung wird analog den Angaben des Beispieles 51 isoliert und in die Sulfatoform übergeführt. Es wird das erfindungsgemäße Alkalimetallsalz der Verbindung der Formel

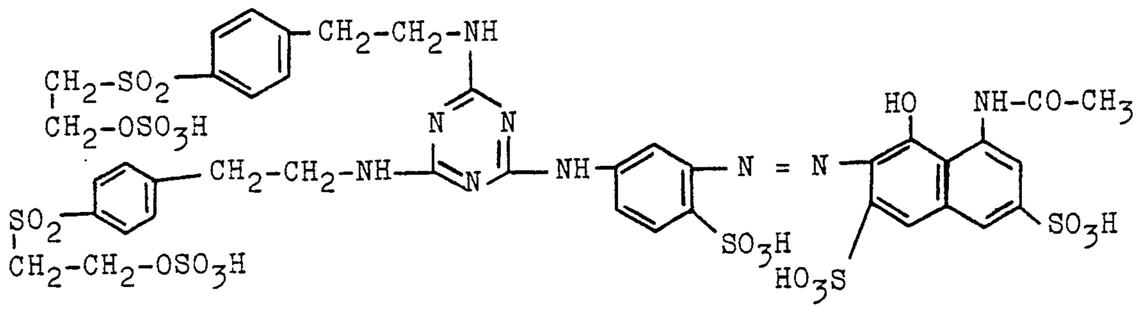

($\lambda_{max}$ = 520 nm)

erhalten, die nach üblichen Applikations- und Fixierverfahren für faserreaktive Farbstoffe Baumwolle in brillanten echten roten Tönen färbt.

**Beispiele 123 bis 137**

Weitere erfindungsgemäße Farbstoffe entsprechend der früher angegebenen allgemeinen Formel (D) sind in den nachfolgenden Tabellenbeispielen beschrieben. Sie lassen sich in gleicher Weise wie die entsprechenden vorhergehenden erfindungsgemäßen Farbstoffe herstellen und besitzen ebenfalls gute faserreaktive Farbstoffeigenschaften.

| Bsp. | Diaminobenzolsulfonsäure | Kupplungskomponente H-K | Amin H-$W^o$ | Farbton |
|---|---|---|---|---|
| 123 | 1,3-Diaminobenzol-4-sulfonsäure | 1-Benzoylamino-3,6-disulfo-8-naphthol | 4-(ß-Sulfatoethylsulfonyl)-1-(ß-aminoethyl)-benzol | rot |
| 124 | dito | 1-Benzoylamino-4,6-disulfo-8-naphthol | dito | rot |
| 125 | dito | N-(3,6-Disulfo-8-hydroxy-naphth-1-yl)-N'-cyclohexyl-harnstoff | dito | rot |
| 126 | dito | 4,8-Disulfo-1-naphthol | 4-(ß-Sulfatoethylsulfonyl)-2-sulfo-1-(ß-aminoethyl)-benzol | rot |
| 127 | dito | 4-Sulfo-naphthol | 4-(ß-Sulfatoethylsulfonyl)-1-(ß-aminoethyl)-benzol | rot |
| 128 | dito | dito | 4-(ß-Methylsulfonyloxy-ethylsulfonyl)-2-sulfo-1-(ß-amino-ethyl)-benzol | rot |
| 129 | 1,4-Diaminobenzol-6-sulfonsäure | 1-Acetylamino-3,6-disulfo-8-naphthol | 4-(ß-Sulfatoethylsulfonyl)-1-(ß-aminoethyl)-benzol | rot |
| 130 | dito | dito | 4-(ß-Phosphatoethylsulfonyl)-1-(ß-aminoethyl)-benzol | rot |
| 131 | dito | dito | 4-(ß-Sulfatoethylsulfonyl)-2-sulfo-1-(ß-aminoethyl)-benzol | rot |

| Bsp. | Diaminobenzolsulfonsäure | Kupplungskomponente H-K | Amin $H-W^{o}$ | Farbton |
|---|---|---|---|---|
| 132 | 1,4-Diaminobenzol-6-sulfonsäure | 1-Benzoylamino-3,6-disulfo-8-naphthol | dito | rot |
| 133 | dito | 1-Benzoylamino-4,6-disulfo-8-naphthol | 4-(ß-Sulfatoethylsulfonyl)-1-(ß-aminoethyl)-benzol | rot |
| 134 | 1,3-Diamino-2-methyl-benzol-5-sulfonsäure | dito | dito | rot |
| 135 | dito | dito | 4-(ß-Sulfatoethylsulfonyl)-2-sulfo-1-(ß-aminoethyl)-benzol | rot |
| 136 | 1,3-Diaminobenzol-4-sulfonsäure | 3-Acetylamino-6-sulfo-8-naphthol | 4-(ß-Sulfatoethylsulfonyl)-1-(ß-aminoethyl)-benzol | rot |
| 137 | dito | N-(ß-Sulfoethyl)-6-hydroxy-4-methyl-pyrid-2-on | dito | gelb |

**Beispiel 138**

31,9 Teile 1-Amino-3,6-disulfo-8-naphthol werden mit 18,5 Teilen Cyanurchlorid bei einem pH-Wert von 2,5 und einer Temperatur von 10° C kondensiert. Man gibt sodann die salzsaure wäßrige Suspension das Diazoniumsalzes von 27,7 Teilen 4-(4′-Sulfo-phenylazo)-anilin hinzu und führt die Kupplung bei einem pH-Wert von 3 bis 4 durch. Anschließend werden 55,8 Teile 4-(ß-Hydroxyethylsulfonyl)-1-(ß-aminoethyl)-benzol hinzugegeben, und die Kondensationsreaktion erfolgt analog der Verfahrensweise des Beispieles 1. Nach Überführung der Azoverbindung in die Sulfatoform, wie in den vorhergehenden Beispielen beschrieben, und deren Isolierung durch Aussalzen erhält man das Alkalimetallsalz der Verbindung der Formel

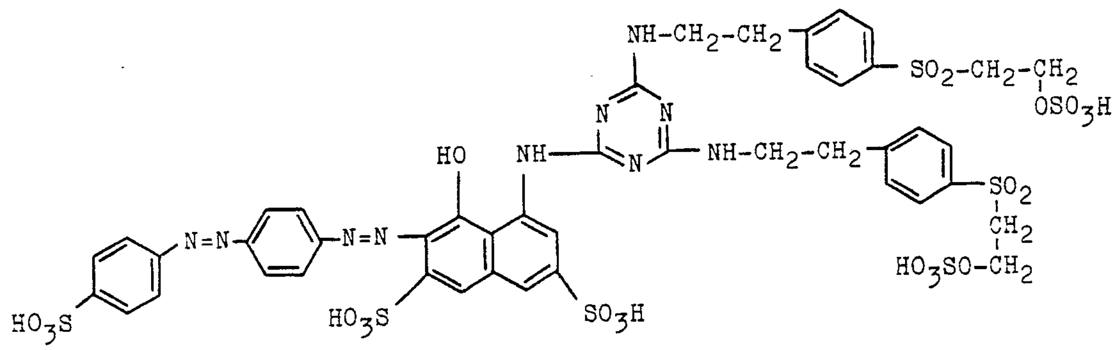

erhalten, die nach üblichen Färbeverfahren Baumwolle in sehr echten rotvioletten Tönen färbt.

**Beispiel 139**

50,3 Teile 1-Amino-4-(3′-amino-4′-methyl-5′-sulfo-phenyl)-amino-anthrachinon-2-sulfonsäure werden bei 0° C und einem pH-Wert von 6 bis 6,5 mit 18,5 Teilen Cyanurchlorid umgesetzt. Sodann gibt man eine wäßrige, neutrale Lösung von 55,8 Teilen 4-(ß-Hydroxyethylsulfonyl)-1-(ß-aminoethyl)-benzol hinzu und führt die zweite Kondensationsreaktion bei 80 bis 90° C und einem pH von 8,5 durch. Nach Beendigung dieser Reaktion wird der Ansatz auf eine pH-Wert zwischen 6,5 und 7 gestellt und die endstandene Verbindung mit Natriumchlorid ausgesalzen, abgesaugt und getrocknet. Nach Überführung der Verbindung in die Sulfatoform analog den Angaben des Beispieles 1 erhält man das Alkalimetallsalz der Verbindung der Formel

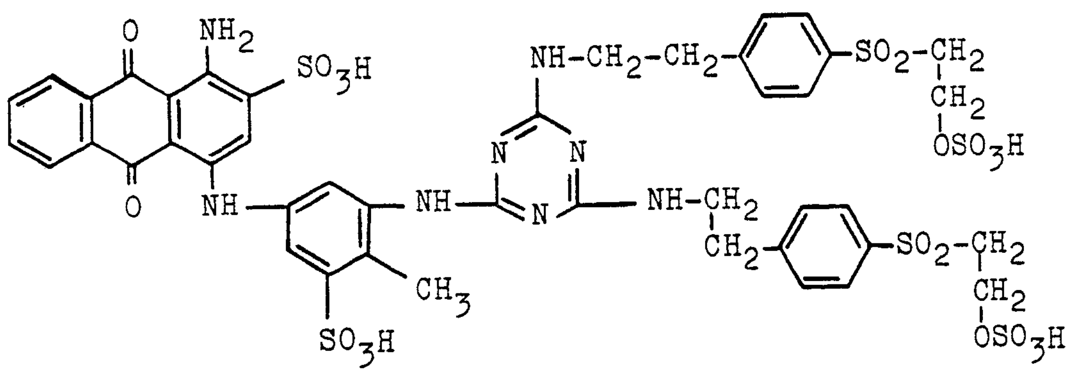

$(\lambda_{max} = 585\ \mathrm{nm})$

die sehr gute Farbstoffeigenschaften besitzt und die in der Beschreibung genannten Materialien, wie insbesondere Cellulosefasermaterialien, wie Baumwolle, gemäß bekannten Verfahrensweisen mit echten, brilliantblauen Tönen färbt.

**Beispiele 140 bis 146**

In den nachfolgenden Tabellenbeispielen sind weitere erfindungsgemäße Anthrachinonfarbstoffe mittels der allgemeinen Formel (G)

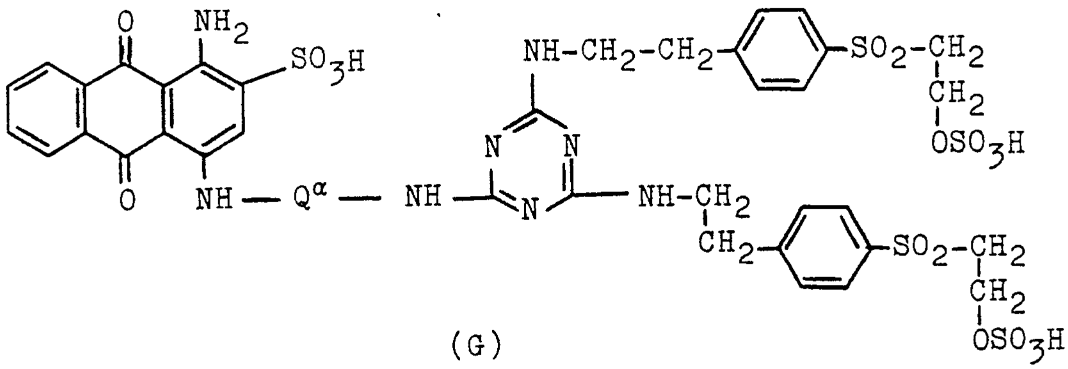

(G)

beschrieben. Sie liefern auf den in der Beschreibung genannten Fasermaterialien, wie insbesondere Cellulosefasermaterialien, farbstarke Färbungen mit guten Echtheitseigenschaften. Sie lassen sich analog den Angaben des Beispieles 139 durch Umsetzung der aus der allgemeinen Formel (G) ersichtlichen Ausgangskomponenten herstellen, wobei man vorzugsweise von der ß-Hydroxyethylsulfonyl-Verbindung des Amins der Formel (24) ausgeht.

| Bsp. | Rest $-Q^{\alpha}-$ | Farbton auf Baumwolle |
|---|---|---|
| 140 | 1,4-Phenylen | blau |
| 141 | 4-Sulfo-1,3-phenylen | blau (588) |
| 142 | 3-Sulfo-1,4-phenylen | blau (589) |
| 143 | 2-Methyl-5-sulfo-1,3-phenylen | blau (585) |
| 144 | 1,2-Ethylen | blau |
| 145 | 5-Carboxy-1,3-phenylen | blau |
| 146 | 6-Carboxy-1,4-phenylen | blau |

**Beispiel 147**

107 Teile 3-(3′-Amino-4′-sulfophenyl)-amidosulfonyl-Kupfer-phthalocyanin-3″, 3‴, 3⁗-trisulfonsäure werden bei 0 °C und einem pH-Wert von 6 bis 6,5 mit 18,5 Teilen Cyanurchlorid umgesetzt. Anschließend gibt man eine wäßrige, neutrale Lösung von 55,8 Teilen 4-(ß-Hydroxyethylsulfonyl)-1-(ß-aminoethyl)-benzol hinzu und führt die Umsetzung bei 80 bis 90 °C und einem pH-Wert von 9 bis 9,5 durch. Nach beendeter Kondensationsreaktion stellt man den pH-Wert auf 6,5 bis 7 und salzt die erhaltene Verbindung mit Natriumchlorid aus, saugt sie ab und trocknet sie. Sie wird anschließend mit Schwefelsäure analog den Angaben des Beispieles 1 in die Sulfatoform überführt und isoliert. Man erhält das Alkalimetallsalz der Verbindung der Formel

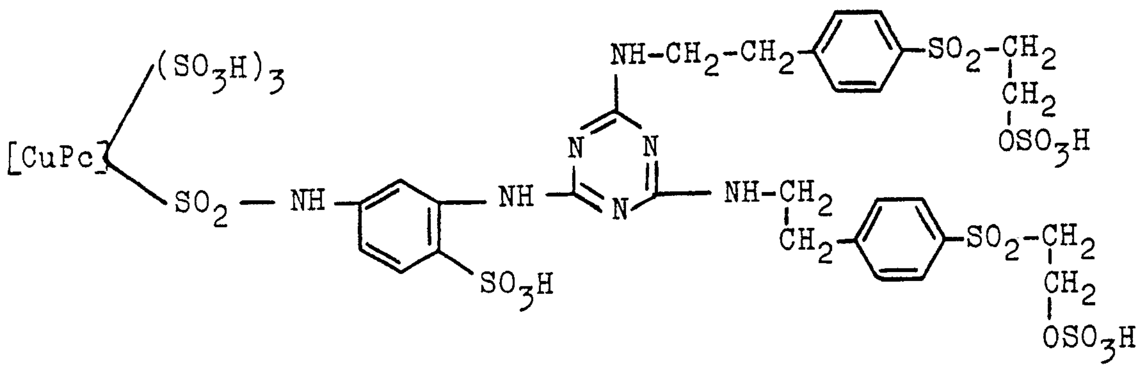

($\lambda_{max}$ = 667 nm)

die sehr gute Farbstoffeigenschaften besitzt und die in der Beschreibung genannten Fasermaterialien, wie insbesondere Cellulosefasermaterialien, wie Baumwolle, nach den für faserreaktive Farbstoffe üblichen Färbeverfahren in echten türkisfarbenen Tönen färbt.

**Beispiele 148 bis 150**

In den nachfolgenden Tabellenbeispielen sind weitere erfindungsgemäße Kupferphthalocyanin-Farbstoffe entsprechend der allgemeinen Formel (H) beschrieben, die analog den Angaben des Beispieles 147 synthetisiert werden können. Sie liefern insbesondere auf Baumwolle gemäß den allgemein üblichen Färbeweisen farbstarke, echte Färbungen in dem hier für Baumwolle angegebenen Farbton.

| Bsp. | Rest $-Q^{\alpha}-$ | Farbton auf Baumwolle |
|---|---|---|
| 148 | 4-Methyl-5-sulfo-1,3-phenylen | türkisblau |
| 149 | 3-Sulfo-1,4-phenylen | türkisblau (666) |
| 150 | 2-Methyl-6-sulfo-1,3-phenylen | türkisblau |

**Beispiel 151**

Zu einer wäßrigen Anschlämmung von 37 Teilen Cyanurchlorid gibt man 0 bis 5 °C 63,5 Teile des Chloranilkondensationsproduktes der Formel

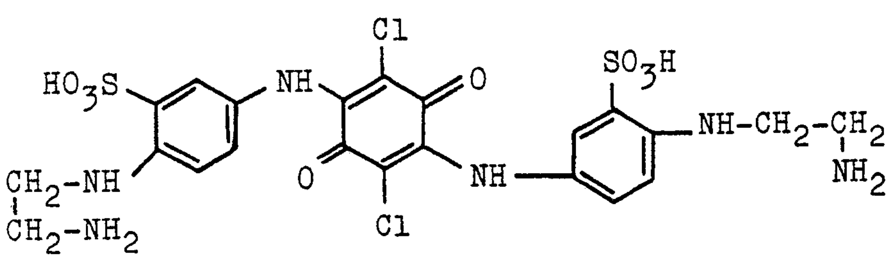

und rührt danach den Ansatz noch 2 bis 3 Stunden bei einem pH-Wert von 1,8 bis 2,2 und einer Temperatur von 0 bis 5 °C nach. Nach beendeter Acylierung stellt man den pH-Wert auf 6 bis 6,5 und gibt eine wäßrige Lösung von 124 Teilen 4-(ß-Hydroxyethylsulfonyl)-1-(ß-aminoethyl)-benzol hinzu. Die Kondensationsreaktion erfolgt bei einem pH-Wert von 8,5 bis 9 und bei einer Temperatur von 80 bis 90 °C. Anschließend wird der Ansatz auf einen pH-Wert von 6,5 gestellt, mittels Kieselgur und Filtration geklärt und das Umsetzungsprodukt bei einem pH-Wert von 4 mittels Natriumchlorid ausgesalzen, isoliert und getrocknet.

Das isoliert Produkt wird bei einer Temperatur von 20 bis 25 °C in ein Gemisch aus 603 Teilen Schwefelsäure und 110 Teile 65%igen Oleum eingetragen. Man rührt noch 2 bis 3 Stunden nach und gibt sodann innerhalb von 2 Stunden bei 20 bis 25 °C 48 Teile Natriumperoxidisulfat hinzu. Nach einer weiteren Nachrührzeit von 2 bis 4 Stunden gibt man das Reaktionsgemisch auf etwa 2500 Teile zerkleinertes Eis und stellt mittels etwa 560 Teilen Calciumcarbonat einen pH-Wert von etwa 2 ein, anschließend mittels Natriumbicarbonat den pH von 5. Man filtriert von ausgefallenem Calciumsulfat ab, wäscht den Rückstand gut nach, behandelt das Filtrat mit Oxalsäure zur Entfernung restlicher Calciumionen und dampft nach Filtration das Filtrat unter reduzierten Druck bei 60 °C ein.

Der erfindungsgemäße Farbstoff der Formel (in Form der freien Säure geschrieben)

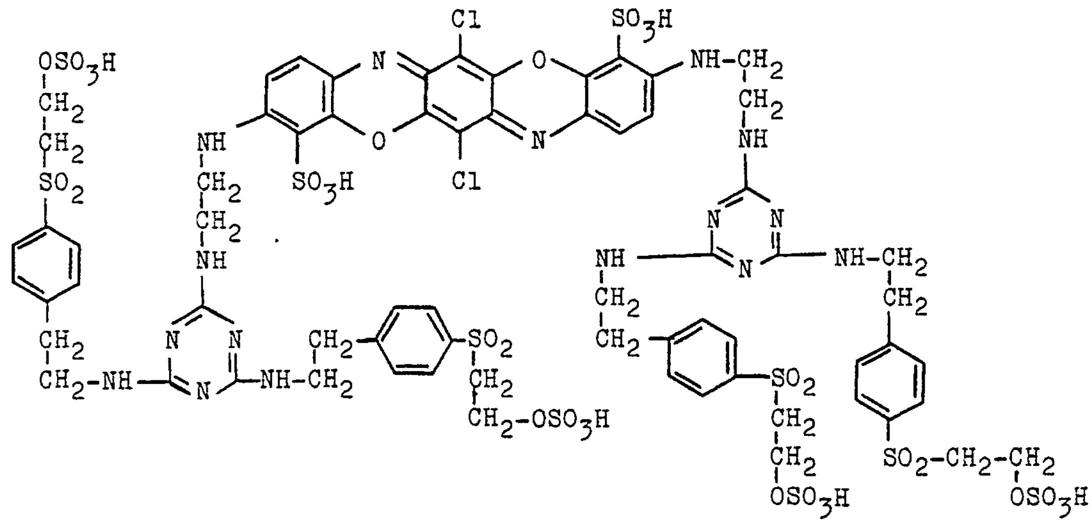

wird als Natriumsalz in Form eines elektrolythaltigen Pulvers erhalten. Er zeigt sehr gute Farbstoffeigenschaften und liefert auf den in der Beschreibung genannten Materialien, wie insbesondere Cellulosefasermaterialien, nach den üblichen Applikations- und Fixierverfahren für faserreaktive Farbstoffe farbstarke blaue Färbungen und Drucke in guten Echtheitseigenschaften.

**Beispiel 151A**

23,4 Teile 2-Hydroxy-3-nitro-5-sulfo-anilin werden mit 18,5 Teilen Cyanurchlorid bei einem pH-Wert von 2,5 und einer Temperatur von 10 °C umgesetzt. Die zweite Kondensationsreaktion erfolgt mit 55,8 Teilen 4-(ß-Hydroxyethylsulfonyl)-1-(ß-aminoethyl)-benzol bei 80 °C und einem pH-Wert von 8,5 bis 9. Nach beendeter Reaktion stellt man den Ansatz auf einen pH-Wert 6,5 bis 7, klärt mittels Kieselgur und Filtration und fällt die Verbindung mit Natriumchlorid aus dem Filtrat aus, saugt sie ab und reduziert sie bei 70 °C mittels Wasserstoff am Pd/C-Katalysator. Nach beendeter Hydrierung filtriert man ab, stellt das Filtrat auf einen pH-Wert von 5, salzt die gebildete Verbindung mit Natriumchlorid aus, filtriert sie ab und trocknet sie. Sie wird anschließend analog den Angaben des Ausführungsbeispieles 1 in die Sulfatoverbindung überführt und isoliert.

90 Teile dieses Aminophenol-Derivates werden in üblicher Weise salzsauer diazotiert und sodann mit einer wäßrigen Lösung von 32 Teilen 2-(Benzyliden-hydrazino)-4-sulfobenzoesäure und 25 Teilen Kupfersulfat versetzt. Man stellt einen pH-Wert von 5 bis 5,5 ein und hält die Temperatur bei 25 bis 30 °C während 2 Stunden. Nach beendeter Umsetzung salzt man die gebildete erfindungsgemäße Verbindung mittels Natriumchlorid als Natriumsalz aus, saugt sie ab und trocknet sie. Sie besitzt, in Form der freien Säure geschrieben, die Formel

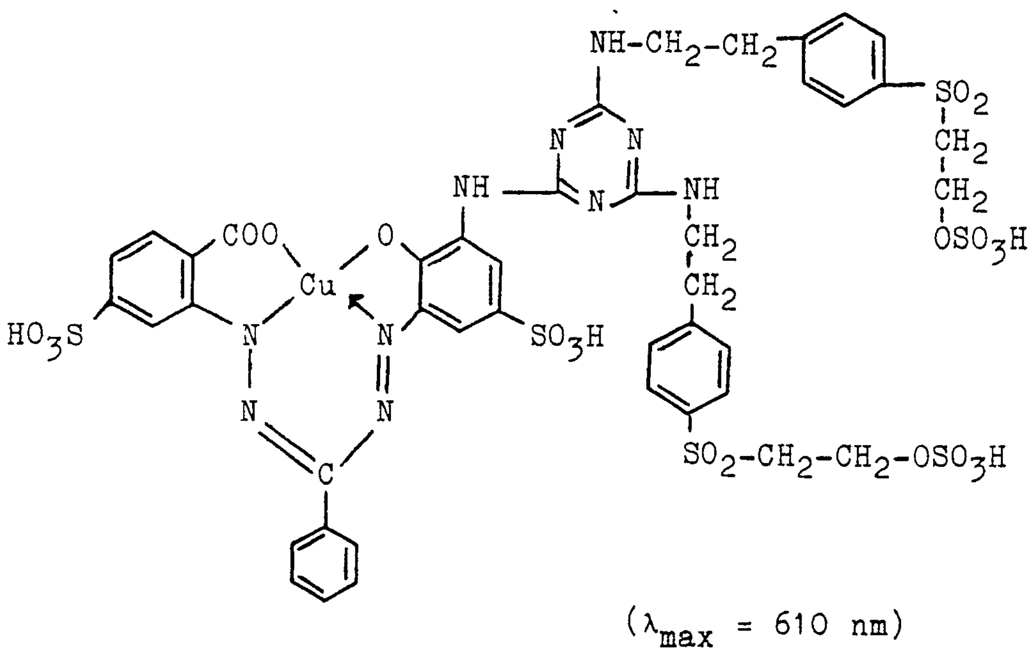

($\lambda_{max}$ = 610 nm)

und zeichnet sich durch sehr gute Farbstoffeigenschaften aus. Sie färbt insbesondere Baumwolle nach den für faserreaktive Farbstoffe üblichen Applikations- und Fixierverfahren in echten blauen Tönen.

**Beispiele 152 bis 162**

Ähnlich wertvolle erfindungsgemäße Kupferformazanfarbstoffe erhält man gemäß dem erfindungsgemäßen Herstellungsverfahren aus den nachstehenden Hydrazin-, Aldehyd- und Diazokomponenten, wobei mindestens eine der Aldehyd- und Diazokomponenten eine Acetylaminogruppe enthalten muß. Beispielsweise setzt man diese Ausgangsverbindungen zur Kupferformazanverbindung um, hydrolysiert die Acetylaminogruppe, setzt sie mit Cyanurchlorid um und kondensiert dann das Dichlor-triazinylaminokupferformazan-Produkt mit einer Verbindung entsprechend der allgemeinen Formel (24), wie beispielsweise mit 4-(ß-Hydroxyethyl-sulfonyl)-1-(ß-aminoethyl)-benzol und anschließender Sulfatierung. Vorteilhaft sind insbesondere solche Kupferformazanverbindungen, die mindestens drei Sulfonsäuregruppen pro Farbstoffmolekül enthalten. Hydrazinkomponenten:
2-Hydroxy-phenylhydrazin, 6-Nitro-2-hydroxy-phenylhydrazin, 4-Chlor-2-carboxy-phenylhydrazin, 5-Nitro-2-carboxy-phenylhydrazin, 4-Methoxy-2-carboxy-phenylhydrazin, 4-Nitro-2-hydroxy-6-sulfophenylhydrazin, 6-Nitro-2-hydroxy-4-sulfophenylhydrazin, 2-Carboxy-5-sulfo-phenylhydrazin, 2-Hydroxy-6-carboxy-4-sulfo-phenylhydrazin, 2-Hydroxy-4,6-disulfo-phenylhydrazin, 2-Hydroxy-4-sulfo-naphthylhydrazin, 2-Hydroxy-4,6′-disulfo-naphthyl-1-hydrazin, 2-Carboxy-4-acetylamino-phenylhydrazin.
Aldehydkomponenten:
Benzaldehyd, 4-Methyl-benzaldehyd, Benzaldehyd-2- oder 3- oder 4-sul fonsäure, Benzaldehyd-2,4-disulfonsäure, 2- oder 3- oder 4-Nitro-benzaldehyd, 2-Chlor-benzaldehyd-5-sulfonsäure, 2- oder 3- oder 4-Acetylamino-benzaldehyd, 3-Acetylamino-benzaldehyd-4-sulfonsäure, 5-Acetylamino-benzaldehyd-2-sulfonsäure. Diazokomponenten:
1-Amino-3-acetylamino-2-hydroxy-benzol-5-sulfonsäure, 1-Amino-5-acetylamino-2-hydroxy-benzol-3-sulfonsäure, 3-Chlor-1-amino-2-hydroxy-benzol-5-sulfonsäure, 5-Nitro-1-amino-2-hydroxy-benzol-3-sulfonsäure, 5-Nitro-1-amino-2-hydroxy-benzol-4-sulfonsäure, 1-Amino-2-hydroxy-benzol-4,6-disulfonsäure, 1-Amino-2-hydroxy-benzol-3,5-disulfonsäure.

So erhält man beispielsweise die in den nachstehenden Tabellenbeispielen mittels der Formelreste F und W angegebenen Kupferkomplex-Formazan-Farbstoffe entsprechend der allgemeinen Formel

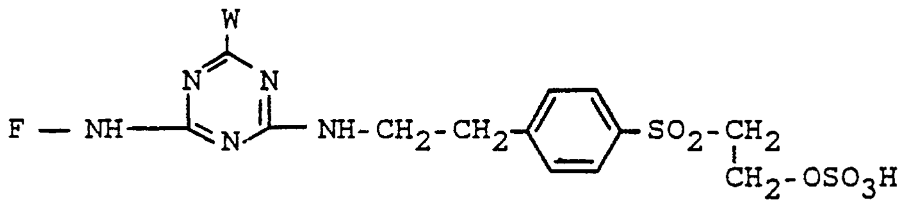

die sehr gute Farbstoffeigenschaften besitzen und beispielsweise Cellulosefasermaterialien in den in dem jeweiligen Tabellenbeispiel angegebenen kräftigen Tönen färben.

| Bsp. | Rest F-NH- | Rest W | Farbton |
|---|---|---|---|
| 152 | N-(2-Carboxy-5-sulfophenyl)-N'-(2'-hydroxy-3'-amino-5'-sulfophenyl)-ms-phenyl-kupferformazan | 4-(ß-Sulfatoethylsulfonyl)-phenylamino | blau (610) |
| 153 | N-(2-Carboxy-4-sulfophenyl)-N'-(2'-hydroxy-3'-amino-5'-sulfophenyl)-ms-phenyl-kupferformazan | ß-[4-(ß'-Sulfatoethylsulfonyl)-phenyl]-ethylamino | blau |

| Bsp. | Rest F-NH- | Rest W | Farbton |
|---|---|---|---|
| 154 | N-(2-Carboxy-5-sulfophenyl)-N′-(2′-hydroxy-3′-amino-5′-sulfophenyl)-ms-phenyl-kupferformazan | 3-(β-Sulfatoethylsulfonyl)-phenylamino | blau (611) |
| 155 | dito | 3-Sulfophenylamino | blau (611) |
| 156 | N-(2-Carboxy-4-sulfophenyl)-N′-(2′-hydroxy-3′-amino-5′-sulfophenyl)-ms-(2″-chlor-5″-sulfophenyl)-kupferformazan | β-[4-(β′-Sulfatoethylsulfonyl)-phenyl]-ethyl-amino | blau |
| 157 | N-(2-Carboxy-5-aminophenyl)-N′-(2′-hydroxy-3′,5′-disulfophenyl)-ms-(3″-aminophenyl)-ms-(3″-aminophenyl)-kupferformazan | dito | grünst. blau |
| 158 | N-(2-Hydroxy-3-amino-5-sulfophenyl)-N′-(2′-hydroxy-4′-sulfophenyl)-ms-(2″-sulfophenyl)-kupferformazan | dito | marineblau |
| 159 | N-(2-Hydroxy-5-sulfophenyl)-N′-(2′-hydroxy-3′,5′-disulfophenyl)-ms-(4″-aminophenyl)-kupferformazan | dito | blau |
| 160 | N-(2-Hydroxy-5-amino-3-sulfophenyl)-N′-(2′,5′-disulfophenyl)-ms-phenyl-kupferformazan | dito | blau |
| 161 | N-(2-Hydroxy-4,6-disulfophenyl)-N′-(2′,4′-disulfophenyl)-ms-(3″-aminophenyl)-kupferformazan | dito | blau |
| 162 | N-(2-Hydroxy-4-sulfophenyl)-N′-(4′-amino-2′-sulfophenyl)-ms-(4.″-chlor-3″-sulfophenyl)-kupferformazan | dito | blau |

**Beispiel 163**

9 Teile Morpholin werden bei 0 °C zu einer Suspension aus 19 Teilen Cyanurchlorid in 200 Volumenteilen Wasser gegeben. Während der Reaktion wird der pH-Wert mittels Natriumbicarbonat auf 4 gehalten. Anschließend gibt man 31 Teile ß-[4-(ß′-Sulfatoethylsulfonyl)-phenyl]-ethylamin hinzu und führt die Umsetzung bei 40 °C und einem pH-Wert von 6,5 durch. Nach Beendigung der Reaktion (die dünnschichtchromatographisch feststellbar ist) werden 45 Teile 4-[4′,8′-Disulfo-naphth-2′-yl]-azo-3-acetylamino-anilin hinzugegeben, und die dritte Kondensationsreaktion wird bei einem pH-Wert zwischen 3,5 und 4 unter Rückflußtemperatur durchgeführt. Nach Beendigung der Reaktion wird der Ansatz in üblicher Weise geklärt und die erfindungsgemäße Azoverbindung aus dem Filtrat mittels Natriumchlorid ausgesalzen.

Man erhält ein gelbes, elektrolythaltiges Pulver des Alkalimetallsalzes (Natriumsalzes) der Verbindung der Formel

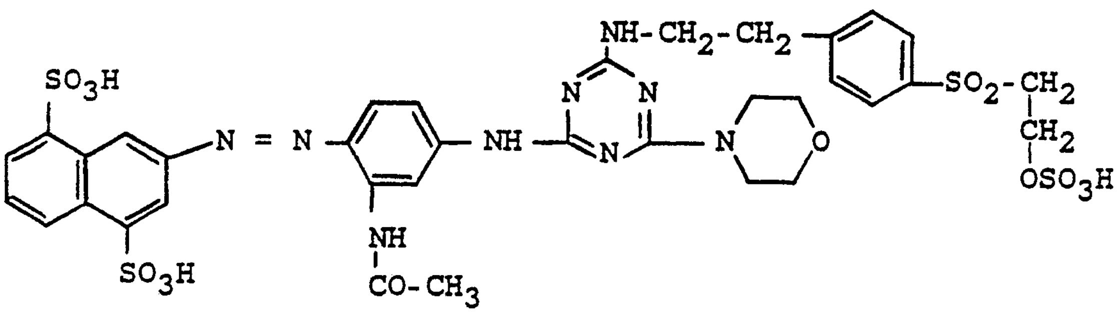

($\lambda_{max}$ = 423 nm).

Die erfindungsgemäße Azoverbindung besitzt sehr gute faserreaktive Farbstoffeigenschaften und ergibt auf den in der Beschreibung genannten Materialien, wie insbesondere Cellulosefasermaterialien, wie Baumwolle, farbstarke Färbungen und Drucke von gelber Nuance mit guten Echtheitseigenschaften. Die erfindungsgemäße Azoverbindung liefert insbesondere im Klotz-Heißdampf-Fixierverfahren vorzügliche Färbungen.

**Beispiel 164**

Man setzt bei 0 °C und einem pH-Wert von 4 19 Teile Cyanurchlorid in wäßriger Suspension mit 31 Teilen ß-[4-ß′-Sulfatoethylsulfonyl)-phenyl]-ethylamin um. Zu dem erhaltenen Monokondensationsprodukt gibt man 60 Teile 7-(1′,5′-Disulfo-naphth-2′-yl)-azo-1-amino-8-hydroxy-3,6-disulfo-naphthalin hinzu und führt die zweite Kupplungsreaktion bei einem pH-Wert von 3,5 und einer Temperatur von 40 °C durch. Nach Beendigung der Reaktion gibt man 17 Teile 3-Sulfo-anilin hinzu und führt die dritte Kondensationsreaktion bei 90 °C und einem pH-Wert von 4 durch. Anschließend klärt man den Reaktionsansatz in üblicher Weise und isoliert die erfindungsgemäße Azoverbindung durch Aussalzen mit Natriumchlorid.

Die erfindungsgemäße, als Alkalimetallsalz (Natriumsalz) erhaltene Azoverbindung besitzt, in Form der freien Säure geschrieben, die Formel

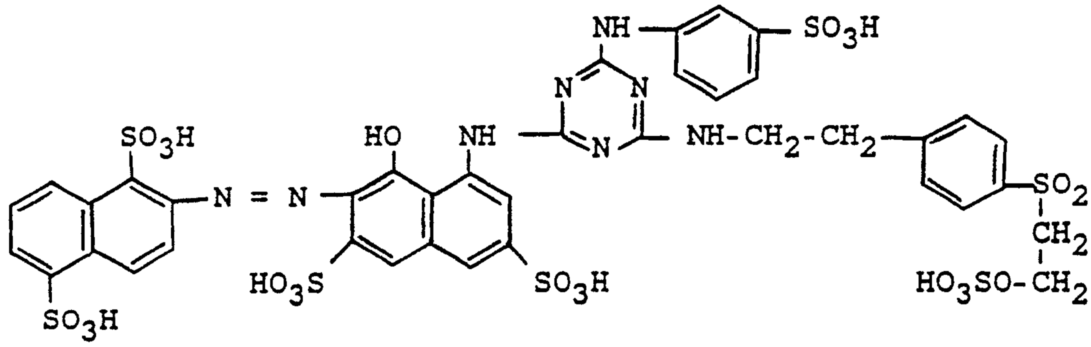

($\lambda_{max}$ = 544 nm).

Sie zeigt sehr gute faserreaktive Farbstoffeigenschaften und färbt beispielsweise Baumwolle in farbstarken, blaustichig roten Tönen mit guten Echtheitseigenschaften, von denen insbesondere die Chlorbadewasserechtheit hervorgehoben werden kann.

**Beispiele 165 bis 170**

Weitere erfindungsgemäße Azofarbstoffe entsprechend einer allgemeinen Formel (J)

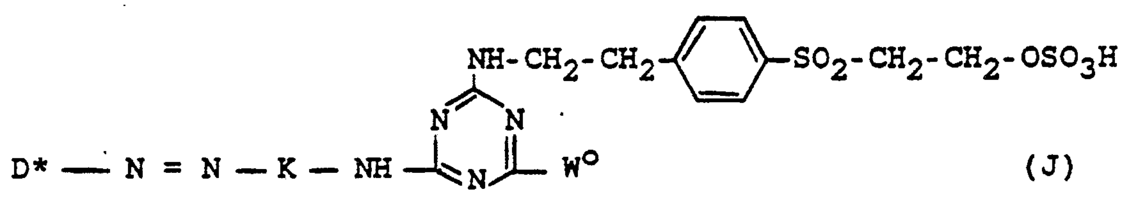

(J)

in welchen W° für den Rest des Ausgangsamins (24), D* der Rest der Diazokomponente und K den Rest einer aminogruppenhaltigen Kupplungskomponente entsprechend der allgemeinen Formel $H-K-NH_2$ ist, sind in den nachfolgenden Tabellenbeispielen mit Hilfe der dort angegebenen Komponenten beschrieben. Sie lassen sich in erfindungsgemäßer Weise, beispielsweise analog den obigen Ausführungsbeispielen, aus den ersichtlichen Ausgangskomponenten herstellen. Die neuen Azoverbindungen besitzen ebenfalls sehr gute faserreaktive Farbstoffeigenschaften und färben insbesondere Cellulosefasermaterialien in den für das jeweilige Tabellenbeispiel angegeben kräftigen echten Farbtönen.

| Bsp. | Diazokomponente $D^*-NH_2$ | Kupplungskomponente $H-K-NH_2$ | Amin H-W° | Farbton |
|---|---|---|---|---|
| 165 | 4-Methoxy-2-sulfophenyl | 3-Amino-6-sulfo-8-naphthol | 3-Sulfophenyl | scharlach (504) |
| 166 | 4-(β-Sulfatoethylsulfonyl)-phenyl | 3,6-Disulfo-1-amino-8-naphthol | dito | blaustichig rot |
| 167 | dito | dito | 4-Sulfophenyl | dito |
| 168 | dito | 4,6-Disulfo-1-amino-8-naphthol | 3-Sulfophenyl | rot |
| 169 | 4-Methoxy-2-sulfophenyl | 3-Amino-6-sulfo-8-naphthol | N-Piperidino | scharlach |
| 170 | 2-Sulfo-phenyl | 4,6-Disulfo-1-amino-naphthol | N-Morpholino | rot |

## Ansprüche

1. Wasserlöslicher Farbstoff, der ein- oder mehrmals die Gruppe Z entsprechend der allgemeinen Formel (1)

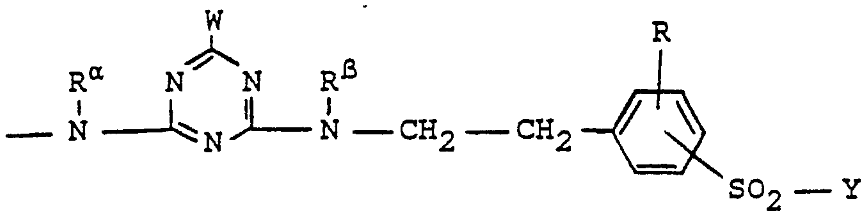

(1)

enthält, in welcher bedeuten:

$R^{\alpha}$ ist ein Wasserstoffatom oder eine Alkylgruppe von 1 bis 4 C-Atomen;

$R^{\beta}$ ist ein Wasserstoffatom oder eine Alkylgruppe von 1 bis 4 C-Atomen;

R ist ein Wasserstoffatom oder eine Sulfogruppe;

Y ist die Vinylgruppe oder eine Gruppe der allgemeinen Formel $-CH_2-CH_2-X$ , in welcher X für einen Substituenten steht, der als Anion unter Bildung der Vinylgruppe eliminierbar ist;

W ist die Hydroxygruppe oder die N-Morpholino-, die N-Piperidinyl- oder die N-Pyrrolidinyl-Gruppe oder eine Gruppe der allgemeinen Formel (2)

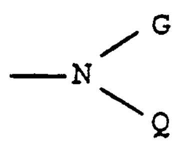

(2)

in welcher

G ein Wasserstoffatom oder eine Alkylgruppe von 1 bis 6 C-Atomen ist und

Q eine Gruppe der allgemeinen Formel (2a), (2b), (2c) oder (2d)

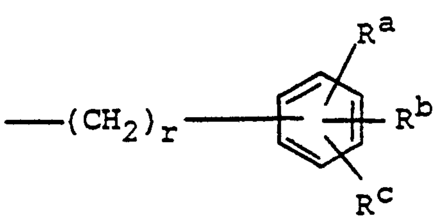

(2a)

$-(CH_2)_t-R^a$ (2b)

$-(CH_2)_t-O-(CH_2)_w-R^a$ (2c)

$-(CH_2)_t-R^2$ (2d)

ist, in welchen

$R^a$ eine Gruppe der allgemeinen Formel $-SO_2-Y$ mit Y einer der oben genannten Bedeutungen ist oder eine Sulfogruppe bedeutet,

$R^b$ ein Wasserstoffatom, eine Alkoxygruppe von 1 bis 4 C-Atomen, eine Sulfo-, Hydroxy- oder Carboxygruppe oder ein Chloratom ist,

$R^c$ ein Wasserstoffatom, eine Alkylgruppe von 1 bis 4 C-Atomen oder eine Alkoxygruppe von 1 bis 4 C-Atomen ist,

t eine Zahl von 1 bis 6 ist und

w eine Zahl von 1 bis 6 ist, oder

W ist ein Rest der allgemeinen Formel (2e)

$-A-(CH_2)_r-R^a$ (2e)

in welcher

$R^a$ die obengenannte Bedeutung hat,

r die Zahl Null, 1 oder 2 ist und

A ein Rest der allgemeinen Formel

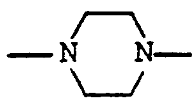 oder 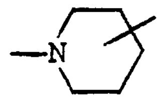 oder 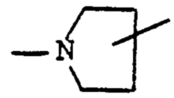 ist.

2. Eine Verbindung nach Anspruch 1, die der allgemeinen Formel (3)

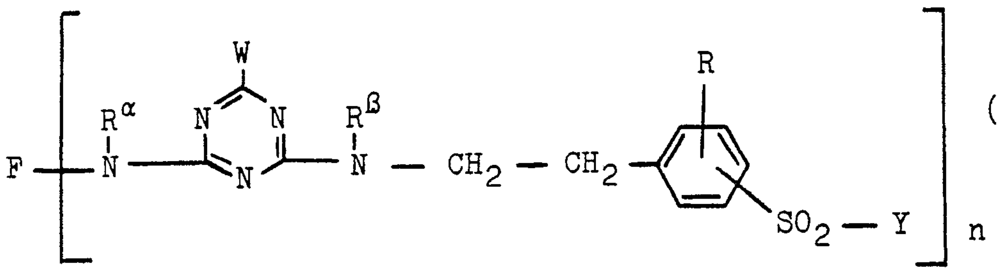 (3)

entspricht, worin bedeuten:
F ist der Rest eines sulfo- und oder carboxygruppenhaltigen Farbstoffes, der ein Schwermetallion, wie beispielsweise ein Kupfer-, Nickel-, Kobalt- oder Chromion, komplex gebunden enthalten kann, wie beispielsweise der Rest eines sulfogruppenhaltigen Farbstoffes aus der Phthalocyanin-, Anthrachinon-, Formazan- oder Azoreihe, bevorzugt aus der Azoreihe,
n ist die Zahl 1 oder 2, bevorzugt 1;
R, $R^{\alpha}$, $R^{\beta}$, W und Y haben eine der für Formel (1) angegebenen Bedeutungen.

3. Verbindung nach Anspruch 2, dadurch gekennzeichnet, daß F der Rest eines sulfogruppenhaltigen Mono- oder Disazofarbstoffes ist.

4. Verbindung nach Anspruch 1 entsprechend der allgemeinen Formel (4a)

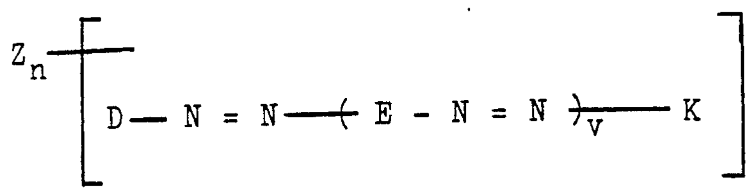 (4a)

in welcher D für den Rest einer Diazokomponente steht, E den bivalenten Rest einer kupplungsfähigen und diazotierbaren Verbindung und K den Rest einer Kupplungskomponente bedeutet, v für die Zahl Null oder 1 steht, n die Zahl 1 oder 2 ist und Z einen Rest der allgemeinen Formel (1) bedeutet, wobei der Rest Z an den Rest D oder den Rest K oder im Falle von n = 2 jeweils an D und K gebunden ist.

5. Verbindung nach Anspruch 1 entsprechend der allgemeinen Formel (4b)

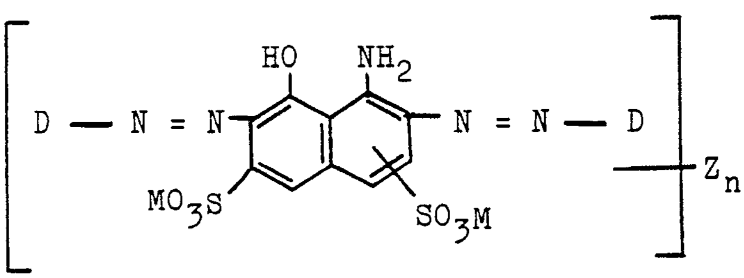 (4b)

in welcher beide D, zueinander gleich oder voneinander verschieden, für den Rest einer Diazokomponente stehen, n die Zahl 1 oder 2 ist und Z einen Rest der allgemeinen Formel (1) bedeutet, der an einen der Reste D oder im Falle von n = 2 an beide Reste D gebunden ist, sowie M ein Wasserstoffatom oder ein Alkalimetall ist.

6. Verbindung nach Anspruch 1 entsprechend der allgemeinen Formel (4c)

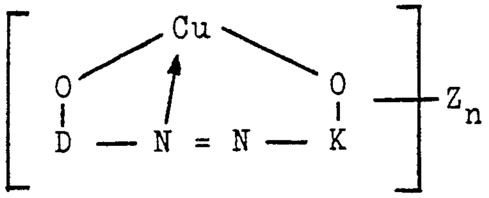

(4c)

in welcher D für den Rest einer Diazokomponente steht, K den Rest einer Kupplungskomponente bedeutet, n die Zahl 1 oder 2 ist und Z einen Rest der allgemeinen Formel (1) darstellt, wobei der Rest Z an den Rest D oder den Rest K oder im Falle von n = 2 an D und an K gebunden ist.

7. Verbindung nach mindestens einem der Ansprüche 1 bis 6, dadurch gekennzeichnet, daß $R^{\alpha}$ und $R^{\beta}$ beide Wasserstoff bedeuten.

8. Verbindung nach mindestens einem der Ansprüche 1 bis 7, dadurch gekennzeichnet, daß Y die ß-Sulfatoethyl-Gruppe bedeutet.

9. Verbindung nach Anspruch 4, dadurch gekennzeichnet, daß n für die Zahl 1 steht und Z an K gebunden ist und D einen Rest der allgemeinen Formel

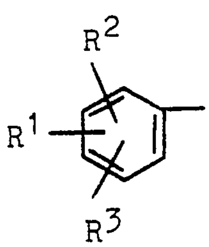

oder

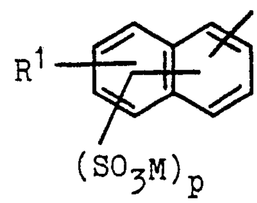

bedeutet, in welchen

$R^1$ ein Wasserstoffatom, eine Sulfogruppe oder eine Gruppe der allgemeinen Formel $-SO_2-Y$ mit Y der in Anspruch 1 genannten Bedeutung ist,

$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

p die Zahl Null, 1 oder 2 bedeutet und

M ein Wasserstoffatom oder ein Alkalimetall bedeutet.

10. Verbindung nach Anspruch 4, dadurch gekennzeichnet, daß n für die Zahl 1 steht und Z an D gebunden ist und D einen Rest der allgemeinen Formel

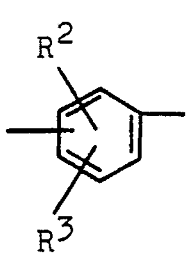

oder

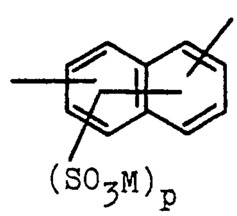

bedeutet, in welchen

$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
p die Zahl Null, 1 oder 2 bedeutet und
M ein Wasserstoffatom oder ein Alkalimetall bedeutet.

11. Verbindung nach Anspruch 5, dadurch gekennzeichnet, daß n für die Zahl 1 steht und der eine Rest D einen Rest der allgemeinen Formel

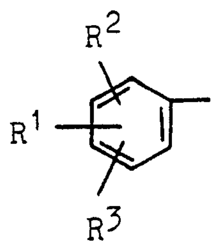

oder

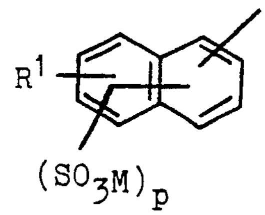

bedeutet, in welchen
$R^1$ ein Wasserstoffatom, eine Sulfogruppe oder eine Gruppe der allgemeinen Formel $-SO_2$-Y mit Y der in Anspruch 1 genannten Bedeutung ist,
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
p die Zahl Null, 1 oder 2 bedeutet und
M ein Wasserstoffatom oder ein Alkalimetall bedeutet, und der andere Rest D, an den Z gebunden ist, einen Phenylenrest der allgemeinen Formel

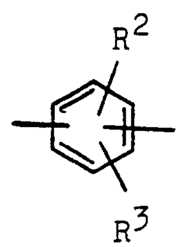

bedeutet, in welcher $R^2$ und $R^3$ eine der obengenannten Bedeutungen besitzen.

12. Verbindung nach Anspruch 6, dadurch gekennzeichnet, daß n für die Zahl 1 steht und der Rest D eine Rest der allgemeinen Formel

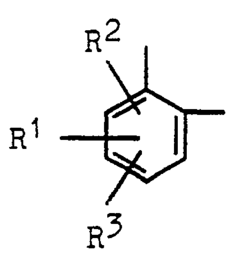

oder

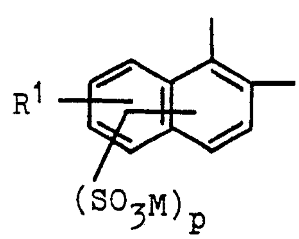

bedeutet, in welchen
$R^1$ ein Wasserstoffatom, eine Sulfogruppe oder eine Gruppe der allgemeinen Formel $-SO_2$-Y mit Y der in Anspruch 1 genannten Bedeutung ist,
$R^2$ Wasserstoff, Methyl, Ethyl, Methoxy, Ethoxy, Alkanoyl von 2 bis 5 C-Atomen, Cyan, Carboxy, Sulfo,

Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
p die Zahl Null, 1 oder 2 bedeutet und
M ein Wasserstoffatom oder ein Alkalimetall bedeutet, oder daß der Rest D einen Rest der allgemeinen Formel

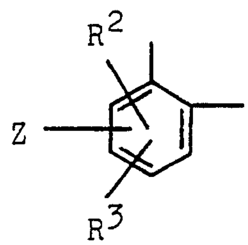

mit $R^2$ und $R^3$ sowie Z der obengenannten bzw. in Anspruch 6 genannten Bedeutungen darstellt.

13. Verbindung nach mindestens einem der Ansprüche 4, 7, 8 und 10, dadurch gekennzeichnet, daß n für die Zahl 1 steht, Z an D gebunden ist und K einen Rest der allgemeinen Formel

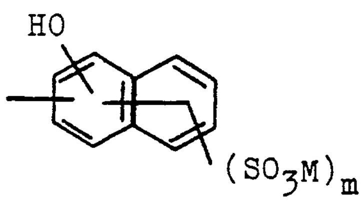

oder

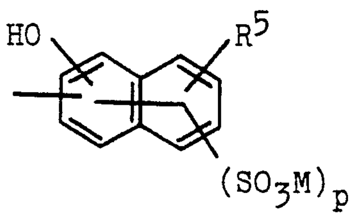

oder

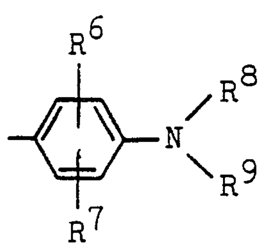

oder

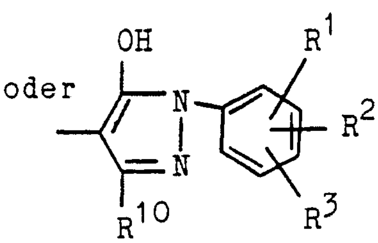

oder

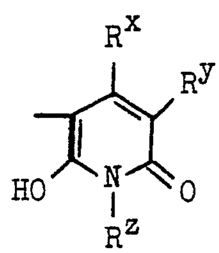

bedeutet, in welchen
$R^2$, $R^3$, p und M eine der in Anspruch 10 genannten Bedeutungen haben,
$R^1$ ein Wasserstoffatom, eine Sulfogruppe oder eine Gruppe der allgemeinen Formel $-SO_2-Y$ mit Y der in Anspruch 1 genannten Bedeutung ist,
$R^5$ Alkylureido mit Alkylgruppen von 1 bis 6 C-Atomen, Phenylureido, im Phenylrest durch Chlor, Methyl, Methoxy, Nitro, Sulfo und/oder Carboxy substituiertes Phenylureido, Alkanoylamino von 2 bis 7 C-Atomen, Cyclohexanoylamino, Benzoylamino oder im Benzolrest durch Chlor, Methyl, Methoxy, Nitro, Sulfo und/oder Carboxy substituiertes Benzoylamino bedeutet,
$R^6$ Wasserstoff, Alkyl von 1 bis 4 C-Atomen, Alkoxy von 1 bis 4 C-Atomen, Brom, Chlor oder Alkanoylamino von 2 bis 7 C-Atomen ist,
$R^7$ Wasserstoff, Alkyl von 1 bis 4 C-Atomen, Alkoxy von 1 bis 4 C-Atomen, Chlor, Alkanoylamino von 2 bis 7 C-Atomen, Ureido oder Phenylureido ist,
$R^8$ Wasserstoff oder Alkyl von 1 bis 4 C-Atomen ist, das durch Hydroxy, Cyan, Carboxy, Sulfo, Sulfato, Methoxycarbonyl, Ethoxycarbonyl oder Acetoxy substituiert sein kann,
$R^9$ für Alkyl von 1 bis 4 C-Atomen, das durch Hydroxy, Cyan, Carboxy, Sulfo, Sulfato, Methoxycarbonyl,

Ethoxycarbonyl oder Acetoxy substituiert sein kann, steht oder Benzyl oder Phenyl oder durch Alkyl von 1 bis 4 C-Atomen, Alkoxy von 1 bis 4 C-Atomen, Chlor und/oder Sulfo substituiertes Phenyl ist,

$R^{10}$ für Wasserstoff, Alkyl von 1 bis 4 C-Atomen, Cyano, Carboxy, Carbalkoxy von 2 bis 5 C-Atomen, Carbamoyl oder Phenyl steht,

$R^x$ Wasserstoff, Alkyl von 1 bis 4 C-Atomen oder durch Alkoxy von 1 bis 4 C-Atomen oder Cyano substituiertes Alkyl von 1 bis 4 C-Atomen ist,

$R^y$ Wasserstoff, Sulfo, Sulfoalkyl mit einem Alkylrest von 1 bis 4 C-Atomen, Cyano oder Carbamoyl ist,

$R^z$ Wasserstoff oder Alkyl von 1 bis 6 C-Atomen, bevorzugt von 1 bis 4 C-Atomen, ist, das durch Phenyl, Sulfo oder Sulfophenyl substituiert sein kann und

m für die Zahl Null, 1, 2 oder 3 steht.

14. Verbindung nach mindestens einem der Ansprüche 4, 7, 8 und 9, dadurch gekennzeichnet, daß n für die Zahl 1 steht, der Rest Z an K gebunden ist und die Gruppe -K-Z einen Rest der Formel

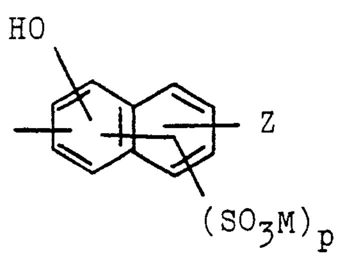

oder

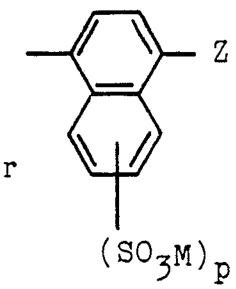

oder

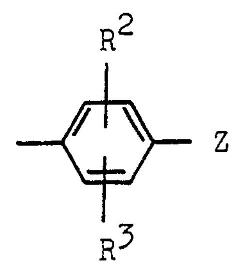

bedeutet, in welchen $R^2$ gleich Wasserstoff, Methyl, Methoxy, Chlor, Carboxy oder Sulfo, $R^3$ gleich Wasserstoff, Methyl, Methoxy, Chlor, Carboxy, Sulfo oder Acetylamino, p die Zahl Null, 1 oder 2 und M gleich Wasserstoff oder ein Alkalimetall ist sowie Z einen in Anspruch 1 genannten und definierten Rest der Formel (1) bedeutet.

15. Verbindung nach mindestens einem der Ansprüche 4, 7 bis 10 und 13, dadurch gekennzeichnet, daß v für die Zahl 1 steht und E einem Rest der Formel

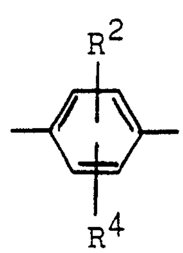

oder

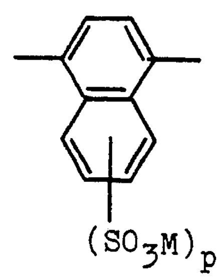

bedeutet, in welcher

$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^4$ Wasserstoff, Alkyl von 1 bis 4 C-Atomen, Alkoxy von 1 bis 4 C-Atomen, Chlor, Alkanoylamino von 2 bis 5 C-Atomen, Benzoylamino, Ureido, Phenylureido, Alkylureido mit 1 bis 4 C-Atomen im Alkylrest, Phenylsulfonyl oder Alkylsulfonyl von 1 bis 4 C-Atomen ist,

p für die Zahl Null, 1 oder 2 steht und

M ein Wasserstoffatomen oder ein Alkalimetall bedeutet.

16. Verbindung nach mindestens einem der Ansprüche 1 bis 15, dadurch gekennzeichnet, daß R für ein Wasserstoffatom steht.

17. Verfahren zur Herstellung eines Farbstoffes von Anspruch 1, dadurch gekennzeichnet, daß man die für wasserlösliche Farbstoffe üblichen Vorprodukte, von denen mindestens eines eine Gruppe der allgemeinen Formel (1) enthält, miteinander in üblicher Verfahrensweise zum entsprechenden Farbstoff von

Anspruch 1 umsetzt, oder indem man ein Cyanurhalogenid, vorzugsweise Cyanurchlorid, in beliebiger Folge mit einem eine Aminogruppe der allgemeinen Formel -NHR$^{\alpha}$ mit R$^{\alpha}$ der in Anspruch 1 genannten Bedeutung ein- oder mehrmals enthaltenden wasserlöslichen Farbstoff und einer Aminoverbindung der allgemeinen Formel (26)

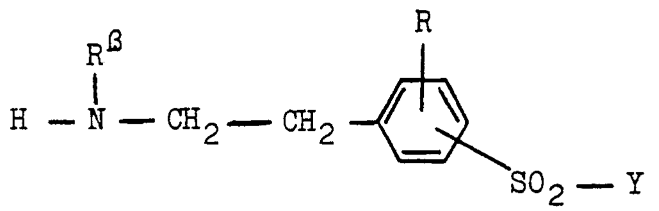

(26)

in welcher R$^{\beta}$, R und Y die obengenannten Bedeutungen haben, umsetzt.

18. Verfahren zur Herstellung eines Farbstoffes von Anspruch 1, in welchem jedoch Y für die ß-Sulfatoethyl- oder ß-Phosphatoethyl-Gruppe steht, dadurch gekennzeichnet, daß man einen Farbstoff, der ein- oder mehrmals eine Gruppe entsprechend der allgemeinen Formel (1) enthält, in welcher jedoch Y für die ß-Hydroxyethyl-Gruppe steht und die übrigen Formelglieder die in Anspruch 1 genannten Bedeutungen haben, mit einem Sulfatierungs- oder Phosphatierungsmittel umsetzt.

19. Verwendung eines Farbstoffes von mindestens einem der Ansprüche 1 bis 18 zum Färben und Bedrucken von hydroxy-und/oder carbonamidgruppenhaltigem Material, insbesondere Fasermaterial.

20. Verfahren zum Kolorieren (Färben, einschließlich Bedrucken) von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder mittels Wärme und mit Hilfe eines alkalischen Mittels fixiert, dadurch gekennzeichnet, daß man als Farbstoff einen Farbstoff von mindestens einem der Ansprüche 1 bis 18 verwendet.

Patentansprüche für folgenden Vertragsstaat: ES

1. Verfahren zur Herstellung eines wasserlöslichen Farbstoffes, der ein- oder mehrmals die Gruppe Z entsprechend der allgemeinen Formel (1)

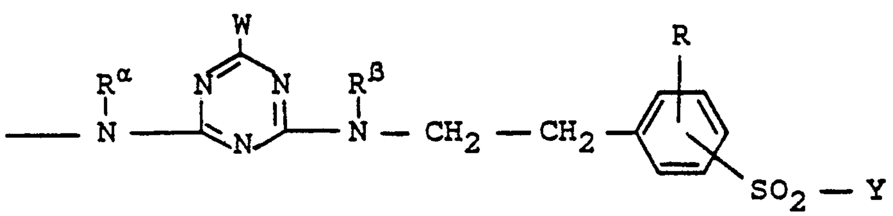

(1)

enthält, in welcher bedeuten:

R$^{\alpha}$ ist ein Wasserstoffatom oder eine Alkylgruppe von 1 bis 4 C-Atomen;

R$^{\beta}$ ist ein Wasserstoffatom oder eine Alkylgruppe von 1 bis 4 C-Atomen;

R ist ein Wasserstoffatom oder eine Sulfogruppe;

Y ist die Vinylgruppe oder eine Gruppe der allgemeinen Formel $-CH_2-CH_2-X$, in welcher X für einen Substituenten steht, der als Anion unter Bildung der Vinylgruppe eliminierbar ist;

W ist die Hydroxygruppe oder die N-Morpholino-, die N-Piperidinyl- oder die N-Pyrrolidinyl-Gruppe oder eine Gruppe der allgemeinen Formel (2)

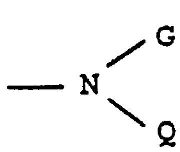

(2)

in welcher

G ein Wasserstoffatomen oder eine Alkylgruppe von 1 bis 6 C-Atomen ist und

Q eine Gruppe der allgemeinen Formel (2a), (2b), (2c), oder (2d)

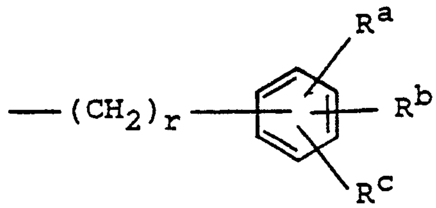 (2a)

$-(CH_2)_t-R^a$ (2b)
$-(CH_2)_t-O-(CH_2)_w-R^a$ (2c)
$-(CH_2)_t-R^2$ (2d)
ist, in welchen
$R^a$ eine Gruppe der allgemeinen Formel $-SO_2-Y$ mit Y einer der oben genannten Bedeutungen ist oder eine Sulfogruppe bedeutet,
$R^b$ ein Wasserstoffatom, eine Alkoxygruppe von 1 bis 4 C-Atomen, eine Sulfo-, Hydroxy- oder Carboxygruppe oder ein Chloratomen ist,
$R^c$ ein Wasserstoffatomen, eine Alkylgruppe von 1 bis 4 C-Atomen oder eine Alkoxygruppe von 1 bis 4 C-Atomen ist,
t eine Zahl von 1 bis 6 ist und
w eine Zahl von 1 bis 6 ist, oder
W ist ein Rest der allgemeinen Formel (2e),
$-A-(CH_2)_r-R^a$ (2e)
in welcher
$R^a$ die obengenannte Bedeutung hat,
r die Zahl Null, 1 oder 2 ist, und
A ein Rest der allgemeinen Formel

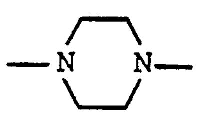 oder 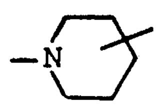 oder 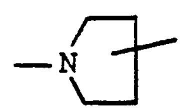 ist,

dadurch gekennzeichnet, daß man die für wasserlösliche Farbstoffe üblichen Vorprodukte, von denen mindestens eines eine Gruppe der allgemeinen Formel (1) enthält, miteinander in üblicher Verfahrensweise umsetzt oder indem man ein Cyanurhalogenid, vorzugsweise Cyanurchlorid, in beliebiger Folge mit einem eine Aminogruppe der allgemeinen Formel - $NHR^{\alpha}$ mit $R^{\alpha}$ der obengenannten Bedeutung ein- oder mehrmals enthaltenden wasserlöslichen Farbstoff und einer Aminoverbindung der allgemeinen Formel (26)

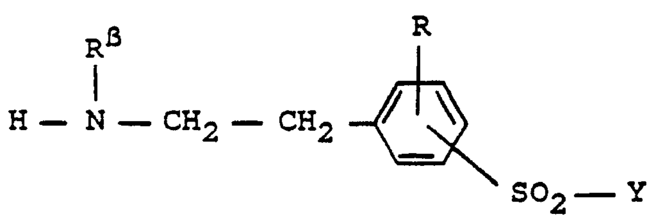 (26)

in welcher $R^{\beta}$, R und Y die obengenannten Bedeutungen haben, umsetzt, oder daß man zur Herstellung eines Farbstoffes, in welchem Y für die ß-Sulfatoethyl- oder ß-Phosphatoethyl-Gruppe steht, einen Farbstoff, der ein-oder mehrmals eine Gruppe entsprechend der allgemeinen Formel (1) enthält, in welcher jedoch Y für die ß-Hydroxyethyl-Gruppe steht und die übrigen Formelglieder die obengenannten Bedeutungen haben, mit einem Sulfatierungs- oder Phosphatierungsmittel umsetzt.

2. Verfahren nach Anspruch 1, dadurch gekennzeichnet, daß der synthetisierte Farbstoff eine Verbindung entsprechend der allgemeinen Formel (3)

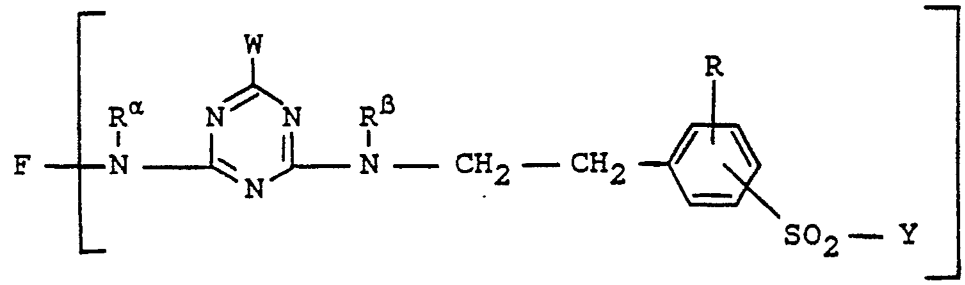

(3)

ist, worin bedeuten:
F ist der Rest eines sulfo- und/oder carboxygruppenhaltigen Farbstoffes, der ein Schwermetallion, wie beispielsweise ein Kupfer-, Nickel-, Kobalt- oder Chromion, komplex gebunden enthalten kann, wie beispielsweise der Rest eines sulfogruppenhaltigen Farbstoffes aus der Phthalocyanin-, Anthrachinon-, Formazan- oder Azoreihe, bevorzugt aus der Azoreihe,
n ist die Zahl 1 oder 2, bevorzugt 1;
R, $R^{\alpha}$, $R^{\beta}$, W und Y haben eine der für Formel (1) angegebenen Bedeutungen.

3. Verfahren nach Anspruch 2, dadurch gekennzeichnet, daß der synthetisierte Farbstoff eine Verbindung entsprechend der allgemeinen Formel (3) ist, in welcher F der Rest eines sulfogruppenhaltigen Mono- oder Disazofarbstoffes ist.

4. Verfahren nach Anspruch 1, dadurch gekennzeichnet, daß der synthetisierte Farbstoff eine Verbindung entsprechend der allgemeinen Formel (4a)

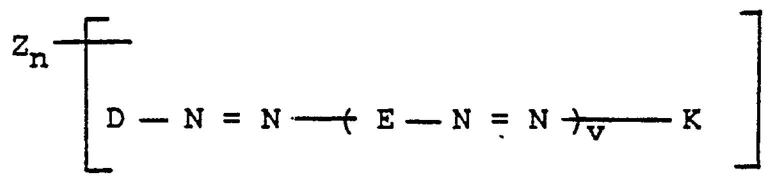

(4a)

ist, in welcher D für den Rest einer Diazokomponente steht, E den bivalenten Rest einer kupplungsfähigen und diazotierbaren Verbindung und K den Rest einer Kupplungskomponente bedeutet, v für die Zahl Null oder 1 steht, n die Zahl 1 oder 2 ist und Z einen Rest der allgemeinen Formel (1) bedeutet, wobei der Rest Z an den Rest D oder den Rest K oder im Falle von n = 2 jeweils an D und K gebunden ist.

5. Verfahren nach Anspruch 1, dadurch gekennzeichnet, daß der synthetisierte Farbstoff eine Verbindung entsprechend der allgemeinen Formel (4b)

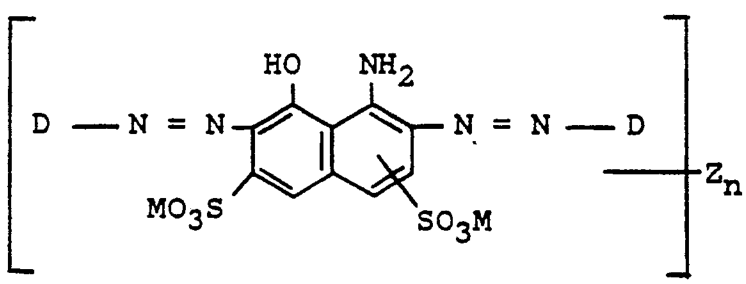

(4b)

ist in welcher beide D, zueinander gleich oder voneinander verschieden, für den Rest einer Diazokomponente stehen, n die Zahl 1 oder 2 ist und Z einen Rest der allgemeinen Formel (1) bedeutet, der an einen der Rest D oder im Falle von n = 2 an beide Reste D gebunden ist, sowie M ein Wasserstoffatom oder ein Alkalimetall ist.

6. Verfahren nach Anspruch 1, dadurch gekennzeichnet, daß der synthetisierte Farbstoff eine Verbindung entsprechend der allgemeinen Formel (4c)

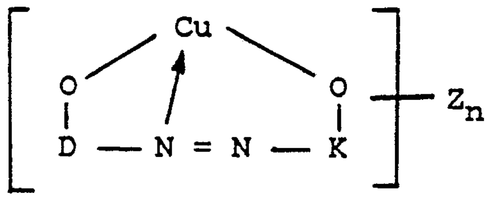

(4c)

ist, in welcher D für den Rest einer Diazokomponente steht, K den Rest einer Kupplungskomponente bedeutet, n die Zahl 1 oder 2 ist und Z einen Rest der allgemeinen Formel (1) darstellt, wobei der Rest Z an den Rest D oder den Rest K oder im Falle von n = 2 an D und an K gebunden ist.

7. Verfahren nach mindestens einem der Ansprüche 1 bis 6, dadurch gekennzeichnet, daß $R^{\alpha}$ und $R^{\beta}$ beide Wasserstoff bedeuten.

8. Verfahren nach mindestens einem der Ansprüche 1 bis 7, dadurch gekennzeichnet, daß Y die ß-Sulfatoethyl-Gruppe bedeutet.

9. Verfahren nach Anspruch 4, dadurch gekennzeichnet, daß n für die Zahl 1 steht und Z an K gebunden ist und D einen Rest der allgemeinen Formel

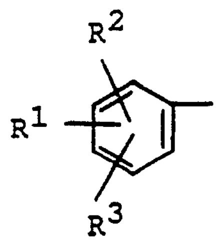

oder

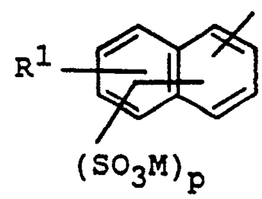

bedeutet, in welchen

$R^1$ ein Wasserstoffatom, eine Sulfogruppe oder eine Gruppe der allgemeinen Formel $-SO_2-Y$ mit Y der in Anspruch 1 genannten Bedeutung ist,

$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

p die Zahl Null, 1 oder 2 bedeutet und

M ein Wasserstoffatom oder ein Alkalimetall bedeutet.

10. Verfahren nach Anspruch 4, dadurch gekennzeichnet, daß n für die Zahl 1 steht und Z an D gebunden ist und D einen Rest der allgemeinen Formel

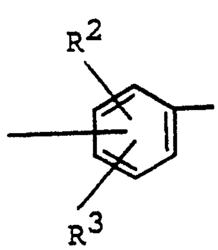

oder

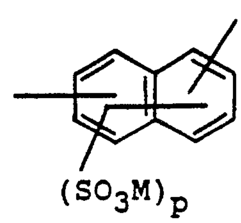

bedeutet, in welchen

$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
p die Zahl Null, 1 oder 2 bedeutet und
M ein Wasserstoffatomen oder ein Alkalimetall bedeutet.

11. Verfahren nach Anspruch 5, dadurch gekennzeichnet, daß n für die Zahl 1 steht und der eine Rest D einen Rest der allgemeinen Formel

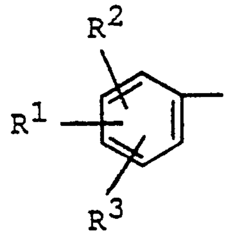

oder

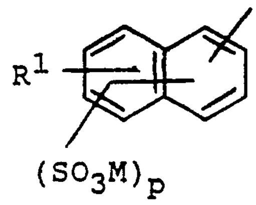

bedeutet, in welchen
$R^1$ ein Wasserstoffatom, eine Sulfogruppe oder eine Gruppe der allgemeinen Formel $-SO_2-Y$ mit Y der in Anspruch 1 genannten Bedeutung ist,
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
p die Zahl Null, 1 oder 2 bedeutet und
M ein Wasserstoffatom oder ein Alkalimetall bedeutet, und der andere Rest D, an den Z gebunden ist, einen Phenylenrest der allgemeinen Formel

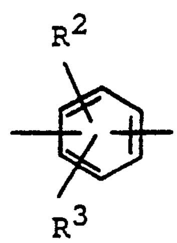

bedeutet, in welcher $R^2$ und $R^3$ eine der obengenannten Bedeutungen besitzen.

12. Verfahren nach Anspruch 6, dadurch gekennzeichnet, daß n für die Zahl 1 steht und der Rest D einen Rest der allgemeinen Formel

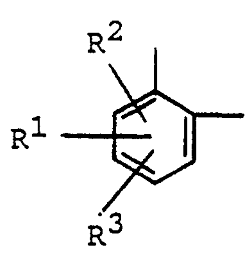

oder

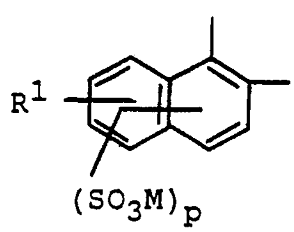

bedeutet, in welchen
$R^1$ ein Wasserstoffatom, eine Sulfogruppe oder eine Gruppe der allgemeinen Formel $-SO_2-Y$ mit Y der in Anspruch 1 genannten Bedeutung ist,
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder

Trifluormethyl ist,
$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl, von 1 bis 4 C-Atomen, Phenylsulfonyl oder Phenoxy ist,
p die Zahl Null, 1 oder 2 bedeutet und
M ein Wasserstoffatom oder ein Alkalimetall bedeutet, oder daß der Rest D einen Rest der allgemeinen Formel

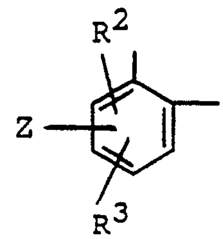

mit $R^2$ und $R^3$ sowie Z der obengenannten bzw. in Anspruch 6 genannten Bedeutungen darstellt.

13. Verfahren nach mindestens einem der Ansprüche 4, 7, 8 und 10, dadurch gekennzeichnet, daß n für die Zahl 1 steht, Z an D gebunden ist und K einen Rest der allgemeinen Formel

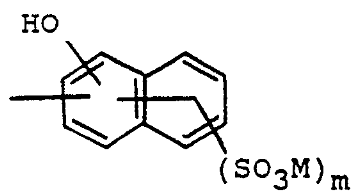

oder

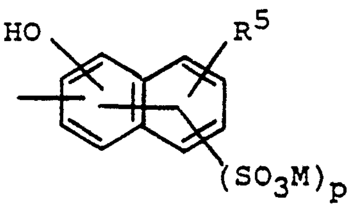

oder

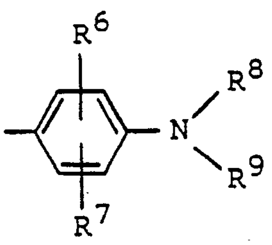

oder

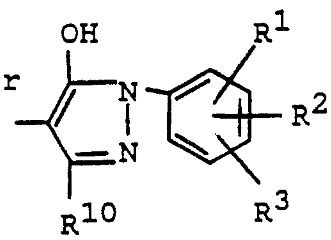

oder

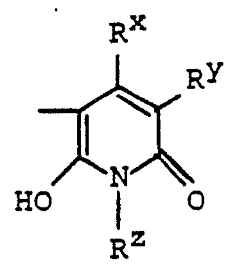

bedeutet, in welchen
$R^2$, $R^3$, p und M eine der in Anspruch 10 genannten Bedeutungen haben,
$R^1$ ein Wasserstoffatom, eine Sulfogruppe oder eine Gruppe der allgemeinen Formel $-SO_2-Y$ mit Y der in Anspruch 1 genannten Bedeutung ist,
$R^5$ Alkylureido mit Alkylgruppen von 1 bis 6 C-Atomen, Phenylureido, im Phenylrest durch Chlor, Methyl, Methoxy, Nitro, Sulfo und/oder Carboxy substituiertes Phenylureido, Alkanoylamino von 2 bis 7 C-Atomen, Cyclohexanoylamino, Benzoylamino oder im Benzolrest durch Chlor, Methyl, Methoxy, Nitro, Sulfo und/oder Carboxy substituiertes Benzoylamino bedeutet,
$R^6$ Wasserstoff, Alkyl von 1 bis 4 C-Atomen, Alkoxy von 1 bis 4 C-Atomen, Brom, Chlor oder Alkanoylamino von 2 bis 7 C-Atomen ist,
$R^7$ Wasserstoff, Alkyl von 1 bis 4 C-Atomen, Alkoxy von 1 bis 4 C-Atomen, Chlor oder Alkanoylamino von 2 bis 7 C-Atomen oder eine Ureido- oder Phenylureidogruppe ist,
$R^8$ Wasserstoff oder Alkyl von 1 bis 4 C-Atomen ist, das durch Hydroxy, Cyan, Carboxy, Sulfo, Sulfato, Methoxycarbonyl, Ethoxycarbonyl oder Acetoxy substituiert sein kann,
$R^9$ für Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, steht oder Benzyl oder Phenyl oder durch Alkyl von 1 bis 4 C-Atomen, Alkoxy von 1 bis 4 C-Atomen, Chlor und/oder Sulfo substituiertes Phenyl ist,
$R^{10}$ für Wasserstoff, Alkyl von 1 bis 4 C-Atomen, Cyano, Carboxy, Carbalkoxy von 2 bis 5 C-Atomen, Carbonamido oder Phenyl steht,

$R^x$ Wasserstoff, Alkyl von 1 bis 4 C-Atomen oder durch Alkoxy von 1 bis 4 C-Atomen oder Cyano substituiertes Alkyl von 1 bis 4 C-Atomen ist,
$R^y$ Wasserstoff, Sulfo, Sulfoalkyl mit einem Alkylrest von 1 bis 4 C-Atomen, Cyano oder Carbamoyl ist,
$R^z$ Wasserstoff oder Alkyl von 1 bis 6 C-Atomen, bevorzugt von 1 bis 4 C-Atomen, ist, das durch Phenyl, Sulfo oder Sulfophenyl substituiert sein kann und
m für die Zahl Null, 1, 2 oder 3 steht.

14. Verfahren nach mindestens einem der Ansprüche 4, 7, 8 und 9, dadurch gekennzeichnet, daß n für die Zahl 1 steht, der Rest Z an K gebunden ist und die Gruppe -K-Z einen Rest der Formel

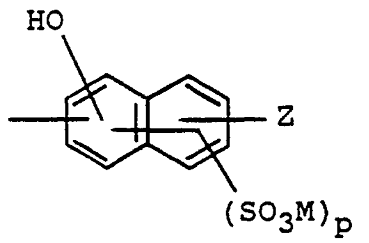

oder

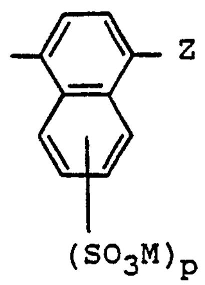

oder

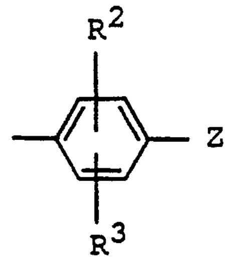

bedeutet, in welchen $R^2$ gleich Wasserstoff, Methyl, Methoxy, Chlor, Carboxy oder Sulfo, $R^3$ gleich Wasserstoff, Methyl, Methoxy, Chlor, Carboxy, Sulfo oder Acetylamino, p die Zahl Null, 1 oder 2 und M gleich Wasserstoff oder ein Alkalimetall ist sowie Z einen in Anspruch 1 genannten und definierten Rest der Formel (1) bedeutet.

15. Verfahren nach mindestens einem der Ansprüche 4, 7 bis 10 und 13, dadurch gekennzeichnet, daß v für die Zahl 1 steht und E einen Rest der Formel

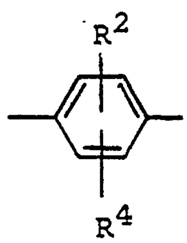

oder

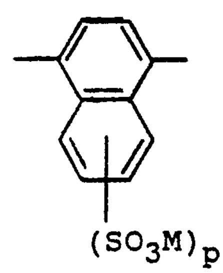

bedeutet, in welcher
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^4$ Wasserstoff, Alkyl von 1 bis 4 C-Atomen, Alkoxy von 1 bis 4 C-Atomen, Chlor, Alkanoylamino von 2 bis 5 C-Atomen, Benzoylamino, Ureido, Phenylureido, Alkylureido mit 1 bis 4 C-Atomen im Alkylrest, Phenylsulfonyl oder Alkylsulfonyl von 1 bis 4 C-Atomen ist,
p für die Zahl Null, 1 oder 2 steht und
M ein Wasserstoffatom oder ein Alkalimetall bedeutet.

16. Verfahren nach mindestens einem der Ansprüche 1 bis 15, dadurch gekennzeichnet, daß R für ein Wasserstoffatom steht.

17. Verwendung eines Farbstoffes von mindestens einem der Ansprüche 1 bis 16 zum Färben und Bedrucken von hydroxy-und/oder carbonamidgruppenhaltigem Material, insbesondere Fasermaterial.

18. Verfahren zum Kolorieren (Färben, einschließlich Bedrucken) von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder mittels Wärme und mit Hilfe eines alkalischen Mittels fixiert, dadurch gekennzeichnet, daß man als Farbstoff einen Farbstoff von mindestens einem der Ansprüche 1 bis 16 verwendet.

Europäisches Patentamt

# EUROPÄISCHER RECHERCHENBERICHT

Nummer der Anmeldung

EP 89123639.0

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| D,A | EP - A1 - 0 212 264 (HOECHST AKTIENGESELLSCHAFT) * Seite 1, Zeile 4 - Seite 5, Zeile 9; Ansprüche 1-21 * -- | 1-5,7-20 | C 09 B 62/503<br>C 09 B 62/04<br>D 06 P 1/38 |
| D,A | EP - A2/A3 - 0 076 782 (CIBA-GEIGY AG) * Ansprüche 1-26 * ---- | 1-20 | |

| RECHERCHIERTE SACHGEBIETE (Int Cl 5) |
|---|
| C 09 B<br>D 06 P |

Der vorliegende Recherchenbericht wurde für alle Patentansprüche erstellt.

| Recherchenort | Abschlußdatum der Recherche | Prüfer |
|---|---|---|
| WIEN | 16-03-1990 | HAUSWIRTH |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82